(19) **Europäisches Patentamt**
**European Patent Office**
**Office européen des brevets**

(11) **EP 4 665 047 A1**

(12) **EUROPEAN PATENT APPLICATION**
published in accordance with Art. 153(4) EPC

(43) Date of publication:
**17.12.2025 Bulletin 2025/51**

(21) Application number: **24752846.6**

(22) Date of filing: **05.02.2024**

(51) International Patent Classification (IPC):
**H04W 72/12** (2023.01)

(52) Cooperative Patent Classification (CPC):
**H04W 72/12**

(86) International application number:
**PCT/CN2024/075951**

(87) International publication number:
**WO 2024/164991 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.02.2023 CN 202310099684**
**16.02.2023 CN 202310126171**

(71) Applicant: **Apogee Networks, LLC**
**Dallas, TX 75201 (US)**

(72) Inventors:
• **WU, Lu**
  **Shanghai 201206 (CN)**
• **SONG, Shulin**
  **Shanghai 201206 (CN)**
• **ZHANG, Xiaobo**
  **Shanghai 201206 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **METHOD AND APPARATUS USED IN NODE FOR WIRELESS COMMUNICATION**

(57) Disclosed in the present application are a method and apparatus used in a node for wireless communication. The method comprises: a first node receiving a first information block; receiving first signaling; and receiving a first signal, wherein the first signaling is used for scheduling the first signal, or the first signaling is used for triggering the first signal; the offset between the reception of the first signaling and the reception of the first signal is less than a first threshold value, and the first signal and a first RS resource are quasi co-located; and the first information block is used for determining at least one index, and the first RS resource depends on the at least one index. By means of the method, an antenna port group used for the reception quality of a PDSCH and an aperiodic CSI-RS can be determined, thereby improving the transmission reliability, and improving the flexibility of a system.

FIG. 1A

## Description

## Technical Field

The present application relates to a transmission method and apparatus in a wireless communication system, in particular to a transmission method and apparatus for wireless signals in a wireless communication system supporting a cellular network.

## Background Art

Network Energy Saving (NES) is of great significance for environmental sustainability, the reduction of the impact on environment (greenhouse gas emissions), and the saving of operating costs. As 5G (the Srd Generation Partnership Project) becomes more prevalent across industries and geographic regions, much higher data rates are required to handle more advanced services and applications (such as XR), resulting in increasingly dense networks, and the usage of more antennas, greater bandwidths, and more frequency bands. In order to keep the impact of 5G on the environment within a controllable range, new solutions need to be studied to improve network energy saving. Therefore, the 3GPP (the 3rd Generation Partnership Project) RAN#94 meeting approved a study item (SI) of "Study on network energy savings", which studies some key technologies such as active transceiver chains, active antenna panels, update of a CSI-RS (Channel Status Information-Reference Signal) configuration, etc.

## Summary of the Invention

It has been found through the study that quasi co-location parameters used for receiving one signal must be determined. Especially when the offset between scheduling signaling or triggering signaling and one signal is smaller, how to determine a quasi co-located RS (Reference Signal) resource for the reception of one signal is a key issue.

In view of the above, the present application discloses a solution. It should be noted that in the description of the present application, energy saving is only used as a typical application scenario or example; the technical solution in the present application is also applicable to other scenarios facing similar problems (such as other non-base station energy saving scenarios, including but not limited to capacity enhancement systems, near field communication systems, unlicensed frequency domain communication, IoT (Internet of Things), URLLC (Ultra Reliable Low Latency Communication) networks, Vehicle-to-Everything, etc.), where similar technical effects can also be achieved. In addition, the use of a unified solution for different scenarios (including but not limited to a base station energy saving scenario) also facilitates the reduction of hardware complexity and costs. In the absence of conflicts, embodiments and features in the embodiments in a first node of the present application can be applied to a second node, and vice versa.

In particular, the explanation of terminologies, nouns, functions, and variables in the present application (if not specified) can refer to the definitions in TS36 series, TS38 series, and TS37 series of the specification protocol of 3GPP. If necessary, reference may be made to 3GPP standards TS38.211, TS38.212, TS38.213, TS38.214, TS38.215, TS38.321, TS38.331, TS38.305, TS38.304, and TS37.355 to assist in understanding of the present application.

The present application discloses a method used in a first node for wireless communication, characterized by comprising:

receiving a first information block; receiving first signaling; receiving a first signal,
wherein the first signaling is used for scheduling the first signal; the offset between the reception of the first signaling and the reception of the first signal is less than a first threshold value, and the first signal and a first RS resource are quasi co-located; and the first information block is used for determining at least one index, and the first RS resource depends on the at least one index.

The present application discloses a method used in a first node for wireless communication, characterized by comprising:

receiving a first information block; receiving first signaling; receiving a first signal,
wherein the first signaling is used for triggering the first signal; the offset between the reception of the first signaling and the reception of the first signal is less than a first threshold value, and the first signal and a first RS resource are quasi co-located; and the first information block is used for determining at least one index, and the first RS resource depends on the at least one index.

As one embodiment, a problem that the present application needs to solve includes: when the offset between scheduling signaling or triggering signaling and one signal is smaller, how to determine a quasi co-located RS (Reference Signal) resource for the reception of the one signal.

As one embodiment, the benefits of the present application comprise: using a suitable quasi co-located RS (Reference Signal) resource for the reception of one signal.

As one embodiment, the benefits of the present application comprise: improving transmission reliability.

As one embodiment, the benefits of the present application comprise: increasing system flexibility.

As one embodiment, the benefits of the present application comprise: saving network energy.

As one embodiment, the benefits of the present application comprise: having good backward compatibility, and simplifying a system design.

According to one aspect of the present application, characterized in that the first RS resource is an RS resource related to a QCL parameter indicated by being quasi co-located with a PDCCH used for a first CORESET, and determination of the first CORESET depends on the at least one index.

As one embodiment, in the above method, the first RS resource is an RS resource related to a QCL parameter indicated by being quasi co-located with a PDCCH used for a first CORESET, having good backward compatibility, and simplifying a system design.

According to one aspect of the present application, characterized in that a first time unit is the latest time unit in which the first node monitors one or more CORESETs associated with the at least one index in an active BWP of a serving cell; and the first CORESET is one CORESET with the smallest index, that is in the first time unit, is associated with the at least one index, and is associated to one monitored search space.

As one embodiment, the above method determines the first CORESET through the first time unit, improving transmission reliability.

According to one aspect of the present application, characterized in that a CORESET to which the first signaling belongs belongs to one of a first CORESERT pool or a second CORESERT pool, and a target CORESET pool is one CORESET pool including the CORESET to which the first signaling belongs in the first CORESET pool and the second CORESET pool; and the first CORESET is one CORESET with the smallest index, that belongs to the target CORESET pool in a second time unit, is associated with the at least one index, and is associated to one monitored search space, and the second time unit is the latest time unit in which the first node monitors one or more CORESETs that belong to the target CORESET pool and are associated with the at least one index in an active BWP of a serving cell.

As one embodiment, the above method determines the second time unit and the first CORESET through a CORESET to which the first signaling belongs, improving transmission reliability and being suitable for transmission in different scenarios.

As one embodiment, the above method can be applied in a network energy-saving mode, improving energy efficiency on a network side.

According to one aspect of the present application, characterized in that each TCI codepoint of multiple TCI codepoints is mapped to at least one TCI state, and at least one TCI codepoint of the multiple TCI codepoints is mapped to two TCI states; and the first RS resource is an RS resource related to a QCL parameter of a TCI state to which a first codepoint is mapped, and determination of the first codepoint depends on the at least one index.

As one embodiment, in the above method, the first RS resource is an RS resource related to a QCL parameter of a TCI state to which a first codepoint is mapped, having good backward compatibility and simplifying a system design.

According to one aspect of the present application, characterized in that the first codepoint is the smallest codepoint of all TCI codepoints mapped to two TCI states, with the two TCI states being both associated with the at least one index; and the first RS resource is an RS resource related to a QCL parameter of one TCI state of two TCI states to which the first codepoint is mapped.

According to one aspect of the present application, characterized in that the first codepoint is the smallest codepoint of all TCI codepoints in which there is one TCI state associated with the at least one index in at least one TCI state to which the first codepoint is mapped; and the first RS resource is an RS resource related to a QCL parameter of one TCI state to which the first codepoint is mapped and with which the at least one index is associated.

The present application discloses a method used in a second node for wireless communication, characterized by comprising:

sending a first information block; sending first signaling; and sending a first signal,
wherein the first signaling is used for scheduling the first signal; the offset between the reception of the first signaling and the reception of the first signal is less than a first threshold value, and the first signal and a first RS resource are quasi co-located; and the first information block is used for determining at least one index, and the first RS resource depends on the at least one index.

The present application discloses a method used in a second node for wireless communication, characterized by comprising:

sending a first information block; sending first signaling; and sending a first signal,
wherein the first signaling is used for triggering the first signal; the offset between the reception of the first signaling and the reception of the first signal is less than a first threshold value, and the first signal and a first RS resource are quasi co-located; and the first information block is used for determining at least one index, and the first RS resource depends on the at least one index.

According to one aspect of the present application, characterized in that the first RS resource is an RS resource related to a QCL parameter indicated by being quasi co-located with a PDCCH used for a first CORESET, and determination of the first CORESET depends on the at least one index.

According to one aspect of the present application, characterized in that a first time unit is the latest time unit in which the first node monitors one or more CORESETs associated with the at least one index in an active BWP of a serving cell; and the first CORESET is one CORESET with the smallest index, that is in the first time unit, is associated with the at least one index, and is associated to one monitored search space.

According to one aspect of the present application, characterized in that a CORESET to which the first signaling belongs belongs to one of a first CORESERT pool or a second CORESERT pool, and a target CORESET pool is one CORESET pool including the CORESET to which the first signaling belongs in the first CORESET pool and the second CORESET pool; and the first CORESET is one CORESET with the smallest index, that belongs to the target CORESET pool in a second time unit, is associated with the at least one index, and is associated to one monitored search space, and the second time unit is the latest time unit in which the first node monitors one or more CORESETs that belong to the target CORESET pool and are associated with the at least one index in an active BWP of a serving cell.

According to one aspect of the present application, characterized in that each TCI codepoint of multiple TCI codepoints is mapped to at least one TCI state, and at least one TCI codepoint of the multiple TCI codepoints is mapped to two TCI states; and the first RS resource is an RS resource related to a QCL parameter of a TCI state to which a first codepoint is mapped, and determination of the first codepoint depends on the at least one index.

According to one aspect of the present application, characterized in that the first codepoint is the smallest codepoint of all TCI codepoints mapped to two TCI states, with the two TCI states being both associated with the at least one index; and the first RS resource is an RS resource related to a QCL parameter of one TCI state of two TCI states to which the first codepoint is mapped.

According to one aspect of the present application, characterized in that the first codepoint is the smallest codepoint of all TCI codepoints in which there is one TCI state associated with the at least one index in at least one TCI state to which the first codepoint is mapped; and the first RS resource is an RS resource related to a QCL parameter of one TCI state to which the first codepoint is mapped and with which the at least one index is associated.

The present application discloses a first node device used for wireless communication, characterized by comprising:

a first receiver receiving a first information block; receiving first signaling; receiving a first signal, wherein the first signaling is used for scheduling the first signal; the offset between the reception of the first signaling and the reception of the first signal is less than a first threshold value, and the first signal and a first RS resource are quasi co-located; and the first information block is used for determining at least one index, and the first RS resource depends on the at least one index.

The present application discloses a first node device used for wireless communication, characterized by comprising:

a first receiver receiving a first information block; receiving first signaling; receiving a first signal, wherein the first signaling is used for triggering the first signal; the offset between the reception of the first signaling and the reception of the first signal is less than a first threshold value, and the first signal and a first RS resource are quasi co-located; and the first information block is used for determining at least one index, and the first RS resource depends on the at least one index.

The present application discloses a second node device used for wireless communication, characterized by comprising:

a second transmitter sending a first information block; sending first signaling; and sending a first signal, wherein the first signaling is used for scheduling the first signal; the offset between the reception of the first signaling and the reception of the first signal is less than a first threshold value, and the first signal and a first RS resource are quasi co-located; and the first information block is used for determining at least one index, and the first RS resource depends on the at least one index.

The present application discloses a second node device used for wireless communication, characterized by comprising:

a second transmitter sending a first information block; sending first signaling; and sending a first signal, wherein the first signaling is used for triggering the first signal; the offset between the reception of the first signaling and the reception of the first signal is less than a first threshold value, and the first signal and a first RS resource are quasi co-located; and the first information block is used for determining at least one index, and the first RS resource depends on the at least one index.

The present application discloses a method used in a first node for wireless communication, characterized by comprising:

receiving a second information block, the second information block indicating a first RS resource set, and the first RS resource set including a plurality of RS resources;
receiving a first information block, the first information block being used for determining at least one index;

receiving first signaling, the first signaling being used for scheduling a first signal; and receiving the first signal,

wherein the at least one index is used for determining at least one RS resource from only a first RS resource group in the first RS resource set, and the first RS resource group includes partial RS resources in the first RS resource set; and the offset between the reception of the first signaling and the reception of the first signal is less than a first threshold value, the first signal and a first RS resource are quasi co-located, and the first RS resource is one RS resource other than the first RS resource group in the first RS resource set.

The present application discloses a method used in a first node for wireless communication, characterized by comprising:

receiving a second information block, the second information block indicating a first RS resource set, and the first RS resource set including a plurality of RS resources;
receiving a first information block, the first information block being used for determining at least one index;
receiving first signaling, the first signaling being used for triggering a first signal; and receiving the first signal,
wherein the at least one index is used for determining at least one RS resource from only a first RS resource group in the first RS resource set, and the first RS resource group includes partial RS resources in the first RS resource set; and the offset between the reception of the first signaling and the reception of the first signal is less than a first threshold value, the first signal and a first RS resource are quasi co-located, and the first RS resource is one RS resource other than the first RS resource group in the first RS resource set.

As one embodiment, a problem to be solved by the present application comprises: when the offset between the reception of the first signaling and the reception of the first signal is smaller, how to determine a quasi co-located RS resource for the first signal.
As one embodiment, the benefits of the present application comprise: using a suitable quasi co-located RS (Reference Signal) resource for the reception of one signal.
As one embodiment, the benefits of the present application comprise: improving transmission reliability.
As one embodiment, the benefits of the present application comprise: increasing system flexibility.
As one embodiment, the benefits of the present application comprise: saving network energy.
As one embodiment, the benefits of the present application comprise: having good backward compatibility, and simplifying a system design.
According to one aspect of the present application, characterized in that an RS resource associated with a QCL parameter of a DMRS port of a PDCCH carrying the first signaling is associated with the at least one RS resource determined by the at least one index.
As one embodiment, in the above method, an RS resource related to a QCL parameter of a DMRS port of a PDCCH carrying the first signaling is associated with the at least one RS resource determined by the at least one index, increasing system flexibility and being suitable for transmission in different scenarios.
As one embodiment, the above method can be applied in a network energy-saving mode, improving energy efficiency on a network side.
According to one aspect of the present application, characterized in that the at least one index is used for determining at least one CORESET from a first CORESET pool, and a CORESET where a PDCCH carrying the first signaling is located is one of the at least one CORESET.
As one embodiment, the above method determines at least one CORESET through the at least one index, and a CORESET where a PDCCH carrying the first signaling is located is one of the at least one CORESET, which has good backward compatibility, and simplifies a system design.
According to one aspect of the present application, it is characterized by comprising:

the first receiver receiving a third information block, wherein the third information block is carried by a MAC CE, the third information block is used for indicating a TCI state to which each TCI codepoint of multiple TCI codepoints is mapped, and each TCI codepoint of the multiple TCI codepoints is mapped to at least one TCI state.

According to one aspect of the present application, characterized in that the first RS resource is an RS resource related to a QCL parameter of a TCI state to which a first codepoint is mapped, the first codepoint is one of the multiple TCI codepoints, and determination of the first codepoint is independent of the first information block.
As one embodiment, the above method determines the first RS resource through a TCI codepoint, having good backward compatibility and simplifying system design.
As one embodiment, determination of the first codepoint is independent of the first information block, being compatible with transmission in different scenarios, and increasing the flexibility and robustness of a system.
According to one aspect of the present application, characterized in that the first RS resource group includes an RS resource related to a QCL parameter of a TCI state of a second CORESET pool, the second CORESET pool includes partial CORESETs in M CORESETs, and M is a positive integer greater than 1; and the first RS resource is an RS resource related to a QCL parameter of a TCI state of a reference CORESET, the reference CORESET is one CORESET other than the second CORESET pool in the M CORESETs, and a CORESET other than the second CORESET pool in the M CORESETs includes one or more CORESETs.

As one embodiment, the above method determines the first RS resource by referring to a CORESET, improving transmission reliability and being compatible with transmission in different scenarios.

As one embodiment, the above method determines the first RS resource by referring to a CORESET, having good backward compatibility, and simplifying a system design.

According to one aspect of the present application, characterized in that the first signaling is first-type signaling, the first signal is a first-type signal, the first-type signaling is used for scheduling the first-type signal, the first-type signaling is transmitted on a PDCCH, and the first-type signal is a PDSCH; the first-type signaling includes a first field, the first field indicates at least one TCI state, and only when the offset between the reception of the first-type signaling and the reception of the first-type signal scheduled by the first-type signaling is equal to or greater than the first threshold value, a TCI state indicated by the first field in the first-type signaling is used for determining a quasi co-location relationship of an antenna port of the first-type signal scheduled by the first-type signaling; and alternatively, only when the offset between the reception of the first-type signaling and the reception of the first-type signal scheduled by the first-type signaling is equal to or greater than the first threshold value, a TCI state of a CORESET where the first-type signaling is located is used for determining a quasi co-location relationship of an antenna port of the first-type signal scheduled by the first-type signaling.

As one embodiment, the above method determines a quasi co-location relationship of an antenna port of the first-type signal scheduled by the first-type signaling through a magnitude relationship of the offset between the reception of the first-type signaling and the reception of the first-type signal scheduled by the first-type signaling and the first threshold value, having good backward compatibility, and simplifying the system design.

The present application discloses a method used in a second node for wireless communication, characterized by comprising:

sending a second information block, the second information block indicating a first RS resource set, and the first RS resource set including a plurality of RS resources;
sending a first information block, the first information block being used for determining at least one index;
sending first signaling, the first signaling being used for scheduling a first signal; and sending the first signal,
wherein the at least one index is used for determining at least one RS resource from only a first RS resource group in the first RS resource set, and the first RS resource group includes partial RS resources in the first RS resource set; and the offset between the reception of the first signaling and the reception of the first signal is less than a first threshold value, the first signal and a first RS resource are quasi co-located, and the first RS resource is one RS resource other than the first RS resource group in the first RS resource set.

The present application discloses a method used in a second node for wireless communication, characterized by comprising:

sending a second information block, the second information block indicating a first RS resource set, and the first RS resource set including a plurality of RS resources;
sending a first information block, the first information block being used for determining at least one index;
sending first signaling, the first signaling being used for triggering a first signal; and sending the first signal,
wherein the at least one index is used for determining at least one RS resource from only a first RS resource group in the first RS resource set, and the first RS resource group includes partial RS resources in the first RS resource set; and the offset between the reception of the first signaling and the reception of the first signal is less than a first threshold value, the first signal and a first RS resource are quasi co-located, and the first RS resource is one RS resource other than the first RS resource group in the first RS resource set.

According to one aspect of the present application, characterized in that an RS resource associated with a QCL parameter of a DMRS port of a PDCCH carrying the first signaling is associated with the at least one RS resource determined by the at least one index.

According to one aspect of the present application, characterized in that the at least one index is used for determining at least one CORESET from a first CORESET pool, and a CORESET where a PDCCH carrying the first signaling is located is one of the at least one CORESET.

According to one aspect of the present application, it is characterized by comprising:

a second transmitter sending a third information block,
wherein the third information block is carried by a MAC CE, the third information block is used for indicating a TCI state to which each TCI codepoint of multiple TCI codepoints is mapped, and each TCI codepoint of the multiple TCI codepoints is mapped to at least one TCI state.

According to one aspect of the present application, characterized in that the first RS resource is an RS resource related to a QCL parameter of a TCI state to which a first codepoint is mapped, the first codepoint is one of the multiple TCI codepoints, and determination of the first codepoint is independent of the first information block.

According to one aspect of the present application, characterized in that the first RS resource group includes an RS resource related to a QCL parameter of a TCI state of a second CORESET pool, the second group includes partial CORESETs in M CORESETs, and M is a positive integer greater than 1; and the first RS resource is an RS resource related to a QCL parameter of a TCI state of a reference CORESET, the reference CORESET is one CORESET other than the second CORESET pool in the M CORESETs, and a CORESET other than the second CORESET pool in the M CORESETs includes one or more CORESETs.

According to one aspect of the present application, characterized in that the first signaling is first-type signaling, the first signal is a first-type signal, the first-type signaling is used for scheduling the first-type signal, the first-type signaling is transmitted on a PDCCH, and the first-type signal is a PDSCH; the first-type signaling includes a first field, the first field indicates at least one TCI state, and only when the offset between the reception of the first-type signaling and the reception of the first-type signal scheduled by the first-type signaling is equal to or greater than the first threshold value, a TCI state indicated by the first field in the first-type signaling is used for determining a quasi co-location relationship of an antenna port of the first-type signal scheduled by the first-type signaling; and alternatively, only when the offset between the reception of the first-type signaling and the reception of the first-type signal scheduled by the first-type signaling is equal to or greater than the first threshold value, a TCI state of a CORESET where the first-type signaling is located is used for determining a quasi co-location relationship of an antenna port of the first-type signal scheduled by the first-type signaling.

The present application discloses a first node device used for wireless communication, characterized by comprising:

a first receiver receiving a second information block, the second information block indicating a first RS resource set, and the first RS resource set including a plurality of RS resources;
receiving a first information block, the first information block being used for determining at least one index;
receiving first signaling, the first signaling being used for scheduling a first signal; and receiving the first signal,
wherein the at least one index is used for determining at least one RS resource from only a first RS resource group in the first RS resource set, and the first RS resource group includes partial RS resources in the first RS resource set; and the offset between the reception of the first signaling and the reception of the first signal is less than a first threshold value, the first signal and a first RS resource are quasi co-located, and the first RS resource is one RS resource other than the first RS resource group in the first RS resource set.

The present application discloses a first node device used for wireless communication, characterized by comprising:

a first receiver receiving a second information block, the second information block indicating a first RS resource set, and the first RS resource set including a plurality of RS resources;
receiving a first information block, the first information block being used for determining at least one index;
receiving first signaling, the first signaling being used for triggering a first signal; and receiving the first signal,
wherein the at least one index is used for determining at least one RS resource from only a first RS resource group in the first RS resource set, and the first RS resource group includes partial RS resources in the first RS resource set; and the offset between the reception of the first signaling and the reception of the first signal is less than a first threshold value, the first signal and a first RS resource are quasi co-located, and the first RS resource is one RS resource other than the first RS resource group in the first RS resource set.

The present application discloses a second node device used for wireless communication, characterized by comprising:

a second transmitter sending a second information block, the second information block indicating a first RS resource set, and the first RS resource set including multiple RS resources;
sending a first information block, the first information block being used for determining at least one index;
sending first signaling, the first signaling being used for scheduling a first signal; and sending the first signal,
wherein the at least one index is used for determining at least one RS resource from only a first RS resource group in the first RS resource set, and the first RS resource group includes partial RS resources in the first RS resource set; and the offset between the reception of the first signaling and the reception of the first signal is less than a first threshold value, the first signal and a first RS resource are quasi co-located, and the first RS resource is one RS resource other than the first RS resource group in the first RS resource set.

The present application discloses a second node device used for wireless communication, characterized by comprising:

a second transmitter sending a second information block, the second information block indicating a first RS resource set, and the first RS resource set including multiple RS resources;
sending a first information block, the first information block being used for determining at least one index;
sending first signaling, the first signaling being used for triggering a first signal; and sending the first signal,
wherein the at least one index is used for determining at least one RS resource from only a first RS resource group in the first RS resource set, and the first RS resource group includes partial RS resources in the first RS resource set; and the offset between the reception of the first signaling and the reception of the first signal is less than a first threshold value, the first signal and a first RS resource are quasi co-located, and the first RS resource is one RS resource other than the first RS resource group in the first RS resource set.

As one embodiment, compared with a traditional solution, the present application has the following advantages:

- having good backward compatibility, and simplifying a system design;
- being suitable for a variety of application scenarios;
- improving transmission reliability;
- increasing system flexibility;
- increasing system flexibility; and
- saving network energy.

**Brief Description of the Drawings**

By reading the detailed description of the non-limiting embodiments in the following drawings, other features, purposes and advantages of the present application will become more obvious.

FIG. 1A shows a flowchart of a first information block, first signaling, and a first signal according to one embodiment of the present application;
FIG. 1B shows a flowchart of a first information block, a second information block, first signaling, and a first signal according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5A shows a flowchart of transmission according to one embodiment of the present application;
FIG. 5B shows a flowchart of a transmission according to one embodiment of the present application;
FIG. 6A shows a schematic diagram of a first RS resource according to one embodiment of the present application;
FIG. 6B shows a schematic diagram of a QCL parameter of a DMRS port of a PDCCH carrying the first signaling according to one embodiment of the present application;
FIG. 7A shows a schematic diagram of a first time unit and a first CORESET according to one embodiment of the present application;
FIG. 7B shows a schematic diagram of a CORESET where a PDCCH carrying the first signaling is located according to one embodiment of the present application;
FIG. 8A shows a schematic diagram of a second time unit and a first CORESET according to one embodiment of the present application;
FIG. 8B shows a schematic diagram of a third information block according to one embodiment of the present application;
FIG. 9A shows a schematic diagram of a first RS resource according to another embodiment of the present application;
FIG. 9B shows a schematic diagram of a first RS resource according to one embodiment of the present application;
FIG. 10A shows a schematic diagram of a first codepoint and a first RS resource according to one embodiment of the present application;
FIG. 10B shows a schematic diagram of a first RS resource according to another embodiment of the present application;
FIG. 11A shows a schematic diagram of a first codepoint and a first RS resource according to another embodiment of the present application;
FIG. 11B shows a schematic diagram of relationships among first-type signaling, a first-type signal, and a first threshold value according to one embodiment of the present application;
FIG. 12A shows a structural block diagram of a processing apparatus used in a first node device according to one embodiment of the present application;
FIG. 12B shows a schematic diagram of relationships among first-type signaling, a first-type signal, and a first threshold value according to another embodiment of the present application;

FIG. 13A shows a structural block diagram of a processing apparatus used in a second node device according to one embodiment of the present application;

FIG. 13B shows a structural block diagram of a processing apparatus used in a first node device according to one embodiment of the present application; and

FIG. 14 shows a structural block diagram of a processing apparatus used in a second node device according to one embodiment of the present application.

## Detailed Description of Embodiments

The technical solution of the present application will be further described in detail below in conjunction with the accompanying drawings. It should be noted that, in the absence of conflict, the embodiments and features in the embodiments of the present application can be arbitrarily combined with each other.

## Embodiment 1A

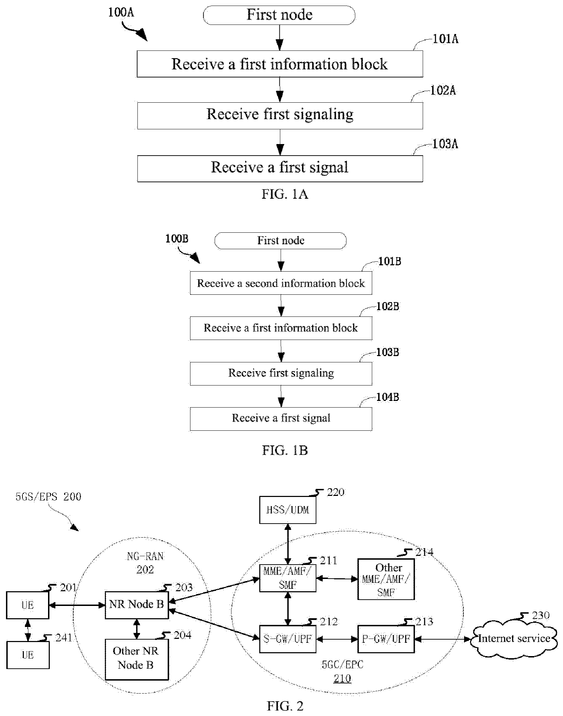

Embodiment 1A illustrates a flowchart of a first information block, first signaling, and a first signal according to one embodiment of the present application, as shown in FIG. 1A. In 100A shown in FIG. 1A, each block represents one step.

In Embodiment 1A, the first node in the present application receives a first information block in step 101A; receives first signaling in step 102A; and receives a first signal in step 103A, wherein the first signaling is used for scheduling the first signal, or the first signaling is used for triggering the first signal; the offset between the reception of the first signaling and the reception of the first signal is less than a first threshold value, and the first signal and a first RS resource are quasi co-located; and the first information block is used for determining at least one index, and the first RS resource depends on the at least one index.

Typically, the first signaling is one piece of physical layer signaling.

Typically, the first signaling is one piece of DCI signaling.

As one embodiment, a CORESET to which the first signaling belongs is associated to one USS (UE-specific search space).

As one embodiment, a CORESET to which the first signaling belongs is associated to one CSS (Common search space).

As one embodiment, the first signaling is used for scheduling the first signal.

As one embodiment, the first signaling is used for triggering the first signal.

As one embodiment, the first signal is a PDSCH.

As one embodiment, the first signaling is used for scheduling the first signal, and the first signal is a PDSCH.

As one embodiment, the first signal is a PDSCH, and the first signaling is DCI signaling scheduling the first signal.

As one sub-embodiment of the above embodiment, a name of a parameter indicating the first threshold value includes timeDurationForQCL.

As one sub-embodiment of the above embodiment, a parameter indicating the first threshold value is timeDurationForQCL.

As one sub-embodiment of the above embodiment, the first threshold value is indicated by FeatureSetDownlink IE.

As one sub-embodiment of the above embodiment, the first threshold value is equal to a sum of timeDurationForQCL and an additional timing delay, and the additional timing delay is $d\frac{2^{\mu_{PDSCH}}}{2^{\mu_{PDCCH}}}$, wherein $\mu_{PDSCH}$ is an SCS configuration of a PDSCH, and $\mu_{PDCCH}$ is an SCS configuration of a PDCCH.

As one dependent embodiment of the above sub-embodiment, if $\mu_{PDCCH} < \mu_{PDSCH}$, a definition of the additional timing delay is shown in Table 5.2.1.5.1a-1 of 3GPP TS38.214; and otherwise, the additional timing delay is equal to 0.

As one dependent embodiment of the above sub-embodiment, the additional timing delay is 8, 14, 28, 56 or 112 symbols.

As one sub-embodiment of the above embodiment, the meaning of "the first signal and a first RS resource are Quasi Co-Located (QCL)" includes: a DMRS port of the first signal and the first RS resource are quasi co-located.

As one embodiment, the first signal is an aperiodic CSI-RS, and the first signaling is DCI signaling used for triggering the first signal.

As one sub-embodiment of the above embodiment, the first signaling includes a CSI request field, and the CSI request field in the first signaling is used for triggering the first signal.

As one sub-embodiment of the above embodiment, a name of a parameter indicating the first threshold value includes beamSwitchTiming.

As one sub-embodiment of the above embodiment, a parameter indicating the first threshold value is beamSwitchTiming.

As one sub-embodiment of the above embodiment, the first threshold value is indicated by MIMO-ParametersPerBand IE.

As one embodiment, the first threshold value is equal to a sum of beamSwitchTiming and an additional timing delay, and the additional timing delay is $d\frac{2^{\mu_{CSIRS}}}{2^{\mu_{PDCCH}}}$, wherein $\mu_{CSIRS}$ is an SCS configuration of CSI-RS, and $\mu_{PDCCH}$ is an SCS configuration of a PDCCH.

As one sub-embodiment of the above embodiment, if $\mu_{CSIRS} < \mu_{PDSCH}$, a definition of the additional timing delay is shown in Table 5.2.1.5.1a-1 of 3GPP TS38.214; and otherwise, the additional timing delay is equal to 0.

As one embodiment, the first threshold value is $48 \cdot 2^{\max(0, \mu_{CSIRS} - 3)}$.

As one sub-embodiment of the above embodiment, "the offset between the reception of the first signaling and the reception of the first signal" is the offset between the last symbol of a PDCCH carrying the first signaling and the first symbol of the first signal.

As one sub-embodiment of the above embodiment, the meaning of "the first signal and a first RS resource are quasi co-located" includes: a QCL parameter of the first RS resource is applied to the reception of the first signal.

As one embodiment, the meaning of the sentence "a QCL parameter of the first RS resource is applied to the reception of the first signal" includes: the QCL parameter of the first RS resource is used for inferring the QCL parameter for receiving the first signal.

As one embodiment, the meaning of the sentence "a QCL parameter of the first RS resource is applied to the reception of the first signal" includes: the reception of the first signal and the reception of the first RS resource apply identical QCL parameters.

As one embodiment, the meaning of the sentence "a QCL parameter of the first RS resource is applied to the reception of the first signal" includes: the first node applies identical QCL parameters to receive the first signal and the first RS resource.

As one embodiment, the meaning of the sentence "a QCL parameter of the first RS resource is applied to the reception of the first signal" includes: the first node assumes that identical QCL parameters are applied to the reception of the first signal and the reception of the first RS resource.

As one embodiment, a specific definition of a CSI request field is shown in Chapter 7.3 of 3GPP TS38.212.

As one embodiment, a specific definition of timeDurationForQCL is shown in Chapter 5.1.5 of 3GPP TS38.213.

As one embodiment, a specific definition of beamSwitchTiming is shown in Chapter 5.2.1.5.1 of 3GPP TS38.213.

Typically, the offset refers to: the offset in a time domain.

As one embodiment, "the offset between the reception of the first signaling and the reception of the first signal" is the offset between the last symbol of a PDCCH carrying the first signaling and a first symbol of the first signal.

As one embodiment, "the offset between the reception of the first signaling and the reception of the first signal" is the offset between the last symbol occupied by the first signaling and a first symbol of the first signal.

As one embodiment, "the offset between the reception of the first signaling and the reception of the first signal" is the offset between a first symbol occupied by the first signaling and a first symbol of the first signal.

As one embodiment, "the offset between the reception of the first signaling and the reception of the first signal" is the offset between an end moment of carrying of the first signaling and a start moment of the first signal.

As one embodiment, "the offset between the reception of the first signaling and the reception of the first signal" is the offset between a start moment of the first signaling and a start moment of the first signal.

As one embodiment, the meaning of "last symbol" is: the latest symbol.

As one embodiment, the meaning of "last symbol" is: one symbol of the greatest index.

As one embodiment, the meaning of "first symbol" is: one symbol of the smallest index.

As one embodiment, the meaning of "first symbol" is: the earliest symbol.

As one embodiment, the symbol is a single-carrier symbol.

As one embodiment, the symbol is a multi-carrier symbol.

As one embodiment, the symbol is an OFDM (Orthogonal Frequency Division Multiplexing) symbol.

As one embodiment, the symbol is obtained after an output of transform precoding undergoing OFDM symbol generation.

As one embodiment, the symbol is a DFT-S-OFDM (Discrete Fourier Transform Spread OFDM) symbol.

As one embodiment, the multi-carrier symbol is an OFDM (Orthogonal Frequency Division Multiplexing) symbol.

As one embodiment, the symbol is obtained after an output of transform precoding undergoing OFDM symbol generation.

As one embodiment, the symbol is an SC-FDMA (Single Carrier- Frequency Division Multiple Access) symbol.

As one embodiment, the symbol is a DFT-S-OFDM (Discrete Fourier Transform Spread OFDM) symbol.

As one embodiment, the multi-carrier symbol is an FBMC (Filter Bank Multi Carrier) symbol.

As one embodiment, the multi-carrier symbol comprises a CP (Cyclic Prefix).

As one embodiment, the offset between the reception of the first signaling and the reception of the first signal is a non-negative real number.

As one embodiment, the offset between the reception of the first signaling and the reception of the first signal is a positive real number.

As one embodiment, the first threshold value is a positive real number.

As one embodiment, the first threshold value is a time length of a positive number of symbols.

As one embodiment, the unit of the first threshold value is symbol.

As one embodiment, the unit of the first threshold value is millisecond.

As one embodiment, the first threshold value is reported by the first node.

As one embodiment, the first node is UE, and the first threshold value is based on a reported UE capability.

As one embodiment, the first threshold value is indicated by UE capability IE.

As one embodiment, specific definitions of FeatureSetDownlink IE, MIMO-ParametersPerBand and UE capability IE are shown in Chapter 6.3.3 of 3GPP TS38.331.

As one embodiment, the first RS resource is an SS/PBCH (Synchronization Signal/Physical Broadcast Channel) block resource or a CSI-RS (Channel State Information-Reference Signal) resource.

As one embodiment, the first RS resource is an SSB (Synchronization Signal Block) resource or a CSI-RS resource.

As one embodiment, the first RS resource is an SS/PBCH block resource.

As one embodiment, the first RS resource is an SSB resource.

As one embodiment, the first RS resource is a CSI-RS resource.

As one embodiment, the meaning of the sentence "the first signal and a first RS resource are quasi co-located (QCL)" includes: an antenna port of the first signal and the first RS resource are quasi co-located.

As one embodiment, the meaning of the sentence "the first signal and a first RS resource are quasi co-located (QCL)" includes: the same QCL (Quasi Co-Location) parameter is applied for the reception of the first signal and the reception of the first RS resource.

As one embodiment, the meaning of the sentence "the first signal and a first RS resource are quasi co-located (QCL)" includes: the first node assumes that identical QCL parameters are applied to the reception of the first signal and the reception of the first RS resource.

As one embodiment, the meaning of the sentence "the first signal and a first RS resource are quasi co-located (QCL)" includes: the first node applies identical QCL parameters to receive the first signal and the first RS resource.

As one embodiment, the meaning of the sentence "the first signal and a first RS resource are quasi co-located (QCL)" includes: a QCL parameter of the first RS resource is applied to the reception of the first signal.

Typically, the reception of the first signal is received later than the reception of the first information block.

Typically, a time domain resource occupied by the first signal is not earlier than a moment when information indicated by the first information block is effective.

Typically, a time domain resource occupied by the first signal is not earlier than a moment when the at least one index is effective.

As one embodiment, the first signaling is received later than the first information block.

As one embodiment, the reception of the first signaling is not later than the reception of the first information block.

As one embodiment, the first information block is carried by a MAC CE (Medium Access Control layer Control Element).

As one embodiment, the first information block is carried by physical layer signaling.

As one embodiment, the first information block is carried by at least physical layer signaling in a MAC CE or the physical layer signaling.

As one embodiment, the first information block is carried by DCI (Downlink Control Information).

As one embodiment, the first information block is carried by at least DCI signaling in MAC CE or the DCI signaling.

As one embodiment, the first information block is carried by an MIB.

As one embodiment, the first information block is carried by an SIB.

As one embodiment, the first information block is carried by cell-specific signaling.

As one embodiment, the first information block is carried by cell-specific higher-layer signaling.

As one embodiment, the first information block is carried by cell-specific DCI.

As one embodiment, the first information block is cell-specific.

As one embodiment, the first information block is carried by UE-group common signaling.

As one embodiment, the first information block is carried by UE-group common higher-layer signaling.

As one embodiment, the first information block is carried by UE-group common DCI.

As one embodiment, the first information block is UE-group common.

As one embodiment, the first information block is carried by UE-specific signaling.

As one embodiment, the first information block is carried by UE-specific higher-layer signaling.

As one embodiment, the first information block is carried by UE-specific DCI.

As one embodiment, the first information block is UE-specific.

As one embodiment, the meaning of the UE-specific is UE-dedicated.

As one embodiment, the at least one index comprises one index.

As one embodiment, the at least one index comprises multiple indexes.

As one embodiment, the at least one index comprises one or more indexes.

As one embodiment, any index in the at least one index is one non-negative integer.

As one embodiment, the at least one index comprises one index, and the any index of the at least one index is the at least one index.

As one embodiment, the at least one index comprises multiple indexes, and the any index of the at least one index is any index of the multiple indexes.

As one embodiment, any index of the at least one index indicates one RS (Reference Signal) resource.

As one embodiment, one index of the at least one index indicates one RS resource.

As one embodiment, any index of the at least one index is used for identifying one RS resource.

As one embodiment, one index of the at least one index is used for identifying one RS resource.

As one embodiment, any index of the at least one index indicates one group of RS resources.

As one embodiment, one index of the at least one index indicates one group of RS resources.

As one embodiment, any index of the at least one index is used for identifying one group of RS resources.

As one embodiment, one index of the at least one index is used for identifying one group of RS resources.

As one embodiment, the meaning of "the first RS resource depends on the at least one index" includes: determination of the first RS resource depends on the at least one index.

As one embodiment, the meaning of "the first RS resource depends on the at least one index" includes: the first RS resource and one RS resource indicated or identified by the at least one index are quasi co-located.

As one embodiment, the meaning of "the first RS resource depends on the at least one index" includes: an RS resource indicated or identified by the at least one index includes the first RS resource.

As one embodiment, the meaning of "the first RS resource depends on the at least one index" includes: the first RS resource and one RS resource indicated or identified by the at least one index apply identical QCL parameters.

As one embodiment, the RS resource comprises one or more of a CSI-RS resource, or an SS/PBCH block resource.

As one embodiment, one index of the at least one index is one of NZP-CSI-RS-ResourceId, SSB-Index, or SRS-ResourceId.

As one embodiment, any index of the at least one index is one of NZP-CSI-RS-ResourceId, SSB-Index, or SRS-ResourceId.

As one embodiment, any index of the at least one index indicates one TCI (Transmission Configuration Indicator) state.

As one embodiment, one index of the at least one index indicates one TCI state.

As one embodiment, any index of the at least one index is used for identifying one TCI state.

As one embodiment, one index of the at least one index is used for identifying one TCI state.

As one embodiment, any index of the at least one index indicates one group of TCI states.

As one embodiment, one index of the at least one index indicates one group of TCI states.

As one embodiment, one index of the at least one index is one of TCI-StateId or TCI-UL-State-Id.

As one embodiment, any index of the at least one index is one of TCI-StateId or TCI-UL-State-Id.

As one embodiment, the meaning of "the first RS resource depends on the at least one index" includes: an RS resource related to a QCL parameter of one TCI state indicated or identified by the at least one index and the first RS resource are quasi co-located.

As one embodiment, the meaning of "the first RS resource depends on the at least one index" includes: an RS resource related to a QCL parameter of one TCI state indicated or identified by the at least one index includes the first RS resource.

As one embodiment, the meaning of "the first RS resource depends on the at least one index" includes: an RS resource related to a QCL parameter of one TCI state indicated or identified by the at least one index and the first RS resource apply identical QCL parameters.

As one embodiment, the meaning of "the first RS resource depends on the at least one index" includes an RS resource related to a QCL parameter of one TCI state indicated or identified by the at least one index and the first RS resource apply identical Spatial Rx parameters.

As one embodiment, any index of the at least one index indicates one CORESET (Control REsource SET) pool.

As one embodiment, one index of the at least one index indicates one CORESET pool.

As one embodiment, any index of the at least one index is used for identifying one CORESET pool.

As one embodiment, one index of the at least one index is used for identifying one CORESET pool.

As one embodiment, one index of the at least one index is coresetPoolIndex.

As one embodiment, any index of the at least one index is coresetPoolIndex.

As one embodiment, any index of the at least one index indicates one CORESET.

As one embodiment, one index of the at least one index indicates one CORESET.

As one embodiment, any index of the at least one index is used for identifying one CORESET.

As one embodiment, one index of the at least one index is used for identifying one CORESET.

As one embodiment, one index of the at least one index is ControlResourceSetId.

As one embodiment, any index of the at least one index is ControlResourceSetId.

As one embodiment, any index of the at least one index indicates one group of CORESETs.

As one embodiment, one index of the at least one index indicates one group of CORESETs.

As one embodiment, any index of the at least one index is used for identifying one group of CORESETs.

As one embodiment, one index of the at least one index is used for identifying one group of CORESETs.

As one embodiment, the meaning of "the first RS resource depends on the at least one index" includes: an RS resource related to a QCL parameter of a TCI state of one CORESET indicated or identified by the at least one index and the first RS resource are quasi co-located.

As one embodiment, the meaning of "the first RS resource depends on the at least one index" includes: an RS resource related to a QCL parameter of a TCI state of one CORESET indicated or identified by the at least one index includes the first RS resource.

As one embodiment, the meaning of "the first RS resource depends on the at least one index" includes: an RS resource related to a QCL parameter of a TCI state of one CORESET indicated or identified by the at least one index and the first RS resource apply identical QCL parameters.

As one embodiment, the meaning of "the first RS resource depends on the at least one index" includes: an RS resource related to a QCL parameter of a TCI state of one CORESET indicated or identified by the at least one index and the first RS resource apply identical Spatial Rx parameters.

As one embodiment, any index of the at least one index indicates one antenna port.

As one embodiment, one index of the at least one index indicates one antenna port.

As one embodiment, any index of the at least one index indicates one group of antenna ports.

As one embodiment, one index of the at least one index indicates one group of antenna ports.

As one embodiment, the antenna port includes an RS port.

As one embodiment, the antenna port includes at least one of a CSI-RS port or an SRS port.

As one embodiment, the meaning of "the first RS resource depends on the at least one index" includes: one antenna port or one group of antenna ports indicated or identified by the at least one index and the first RS resource are quasi co-located.

As one embodiment, the meaning of "the first RS resource depends on the at least one index" includes: one antenna port or one group of antenna ports indicated or identified by the at least one index include(s) an antenna port of the first RS resource.

As one embodiment, the meaning of "the first RS resource depends on the at least one index" includes: one antenna port or one group of antenna ports indicated or identified by the at least one index and the first RS resource apply identical QCL parameters.

As one embodiment, the meaning of "the first RS resource depends on the at least one index" includes: one antenna port or one group of antenna ports indicated or identified by the at least one index and the first RS resource apply identical Spatial Rx parameters.

As one embodiment, any index of the at least one index indicates one TRP (Transmitter Receiver Point).

As one embodiment, one index of the at least one index indicates one TRP.

As one embodiment, any index of the at least one index indicates one antenna panel.

As one embodiment, one index of the at least one index indicates one antenna panel.

As one embodiment, one index of the at least one index indicates one cell.

As one embodiment, any index of the at least one index indicates one cell.

As one embodiment, one index of the at least one index is used for identifying one cell or TRP.

As one embodiment, any index of the at least one index is used for identifying one cell or TRP.

As one embodiment, the meaning of "the first RS resource depends on the at least one index" includes: one cell indicated or identified by the at least one index is the same as a cell where the first RS resource is located.

As one embodiment, the meaning of "the first RS resource depends on the at least one index" includes: one TRP indicated or identified by the at least one index is the same as a TRP where the first RS resource is located.

As one embodiment, the meaning of "the first RS resource depends on the at least one index" includes: one antenna panel indicated or identified by the at least one index is the same as an antenna panel where the first RS resource is located.

As one embodiment, one index of the at least one index indicates one serving cell.

As one embodiment, one of the at least one index indicates one PCI (Physical Cell Identifier) different from a PCI of a serving cell.

As one embodiment, one index of the at least one index indicates a cell or TRP corresponding to a PCI different from a PCI of a serving cell.

As one embodiment, one index of the at least one index is one cell index.

As one embodiment, any index of the at least one index is one cell index.

As one embodiment, the cell index includes one or more of PhysCellId, SCellIndex, or ServCellIndex.

As one embodiment, the cell index includes one or more of PhysCellId, SCellIndex, ServCellIndex, or AdditionalPCIIndex.

As one embodiment, there are two indexes in the at least one index respectively indicating one RS resource and one TCI state.

As one embodiment, there are two indexes in the at least one index respectively indicating one RS resource and one CORESET pool.

As one embodiment, there are two indexes in the at least one index respectively indicating one TCI state and one CORESET pool.

As one embodiment, the at least one index is used for indicating an activated RS resource.

As one embodiment, the at least one index is used for indicating an activated TCI state.

As one embodiment, the at least one index is used for indicating an activated antenna port.

As one embodiment, the at least one index is used for indicating an activated CORESET.

As one embodiment, the at least one index is used for indicating an activated CORESET pool.

As one embodiment, the at least one index is used for indicating an activated TRP or antenna panel.

As one embodiment, the at least one index is used for indicating an activated cell.

As one embodiment, the at least one index is used for indicating one or more of an activated RS resource, an activated TCI state, an activated antenna port, an activated CORESET, an activated CORESET pool, an activated TRP, an activated antenna panel or an activated cell.

As one embodiment, the at least one index is used for indicating a zero-power antenna port.

As one embodiment, the at least one index is used for indicating a non-zero-power antenna port.

As one embodiment, the meaning of the activated includes: non-zero-power.

As one embodiment, the meaning of the deactivated includes: muted.

As one embodiment, the meaning of the deactivated includes: inactive.

As one embodiment, the meaning of the deactivated includes: zero-power.

As one embodiment, the first information block indicates the at least one index.

As one embodiment, the first information block indicates each index of the at least one index.

As one embodiment, the first information block explicitly indicates the at least one index.

As one embodiment, the first information block indicates the at least one index by implicitly indicating other information.

As one embodiment, the first information block indicates a reference index set, and the reference index set is used for determining the at least one index; and the reference index set includes one or more indexes.

As one embodiment, any index in the reference index set is a non-negative integer.

As one embodiment, any index in the reference index set indicates one RS resource.

As one embodiment, one index in the reference index set indicates one RS resource.

As one embodiment, any index in the reference index set indicates one group of RS resources.

As one embodiment, one index in the reference index set indicates one group of RS resources.

As one embodiment, any index in the reference index set indicates one or one group of SS/PBCH Block resource(s).

As one embodiment, one index in the reference index set indicates one or one group of SS/PBCH Block resource(s).

As one embodiment, any index in the reference index set indicates one or one group of CSI-RS resource(s).

As one embodiment, one index in the reference index set indicates one or one group of CSI-RS resource(s).

As one embodiment, any index in the reference index set indicates one or one group of CRS (Cell-specific reference signal) resource(s).

As one embodiment, one index in the reference index set indicates one or one group of CRS resource(s).

As one embodiment, any index in the reference index set indicates one CRS resource or one SS/PBCH Block resource.

As one embodiment, one index in the reference index set indicates one cell or TRP.

As one embodiment, any index in the reference index set indicates one cell or TRP.

As one embodiment, one index in the reference index set is one cell index.

As one embodiment, any index in the reference index set is one cell index.

As one embodiment, the reference index set is used for indicating one or more of a deactivated RS resource, a deactivated TCI state, a deactivated antenna port, a deactivated CORESET, a deactivated CORESET pool, a deactivated TRP, a deactivated antenna panel or a deactivated cell.

As one embodiment, any index in the reference index set indicates one RS resource, and there is one index in the at least one index that indicates one of one TCI state, one CORESET, or one CORESET pool.

As one embodiment, any index in the reference index set indicates one RS resource or one TRP, and any index of the at least one index indicates one of one TCI state, one CORESET, or one CORESET pool.

As one embodiment, any index in the reference index set indicates one of one SS/PBCH Block resource, one CRS resource, or one TRP, and in the at least one index, there is one index indicating one of one CSI-RS resource, one TCI state, one CORESET, or one CORESET pool.

As one embodiment, any index in the reference index set indicates one of one SS/PBCH Block resource, one CRS resource, or one TRP, and any index of the at least one index indicates one of one CSI-RS resource, one TCI state, one CORESET, or one CORESET pool.

As one embodiment, any index of the at least one index does not belong to the reference index set.

As one embodiment, there is no index that belongs to both the at least one index and the reference index set.

As one embodiment, the reference index set indicates one or more of a deactivated RS resource, a deactivated TCI state, a deactivated antenna port, a deactivated CORESET, a deactivated CORESET pool, a deactivated TRP, a deactivated antenna panel, or a deactivated cell; and the at least one index indicates one or more of an activated RS resource, an activated TCI state, an activated antenna port, an activated CORESET, an activated CORESET pool, an activated TRP, an activated antenna panel, or an activated cell.

As one embodiment, one TCI (Transmission configuration indication) state indicates one quasi co-location relationship.

As one embodiment, one TCI state indicates one or more RS resources.

As one embodiment, one TCI state indicates at least one RS resource.

As one embodiment, any RS resource indicated by one TCI state is one of an SRS (Sounding Reference Signal) resource, a CSI-RS (Channel State Information Reference Signal) resource, or an SS/PBCH (Synchronization Signal/Physical Broadcast Channel) block resource.

As one embodiment, any RS resource indicated by one TCI state is a CSI-RS resource or an SS/PBCH block resource.

As one embodiment, one TCI state indicates at least one RS resource and a QCL (Quasi-Co-Located) parameter corresponding to each RS resource therein.

As one embodiment, one TCI state indicates an RS resource related to a QCL parameter of the one TCI state.

As one embodiment, one TCI state indicates multiple RS resources, and the multiple RS resources are respectively RS resources related to different types of QCL parameters of the one TCI state.

As one embodiment, one TCI state indicates at least one RS resource and the type of QCL parameters corresponding to each RS resource therein.

Typically, a TCI state of one CORESET is one TCI state indicating QCL parameters of the one CORESET.

As one embodiment, the types of the QCL parameters include TypeD.

As one embodiment, the types of the QCL parameters include at least one of TypeA, TypeB, TypeC, and TypeD.

As one embodiment, the types of the QCL parameters include at least TypeD in TypeA, TypeB, TypeC, and TypeD.

As one embodiment, the types of the QCL parameters include TypeA, TypeB, TypeC, and TypeD.

As one embodiment, QCL parameters with the type of TypeA include Doppler shift, Doppler spread, average delay, and delay spread.

As one embodiment, QCL parameters with the type of TypeB include Doppler shift and Doppler spread.

As one embodiment, QCL parameters with the type of TypeC include Doppler shift and average delay.

As one embodiment, QCL parameters with the type of TypeD include Spatial Rx parameters.

As one embodiment, specific definitions of the TypeA, the TypeB, the TypeC, and the TypeD are shown in Chapter 5.1.5 of 3GPP TS38.214.

As one embodiment, the QCL parameters include one or more of delay spread, Doppler spread, Doppler shift, average delay, or a Spatial Rx parameter.

As one embodiment, the QCL parameters include Doppler shift and Doppler spread.

As one embodiment, the QCL parameters include Doppler shift and average delay.

As one embodiment, the QCL parameters include a Spatial Rx parameter.

As one embodiment, the QCL parameters include at least one of a spatial transmission parameter or a Spatial Rx parameter.

As one embodiment, the QCL parameters include a spatial domain receive filter.

As one embodiment, the QCL parameters include a spatial domain filter.

As one embodiment, the QCL parameters include at least one of a spatial domain transmit filter or a spatial domain receive filter.

As one embodiment, specific definitions of the TCI state and the Quasi Co-Location (QCL) are shown in Chapter 5.1.5 of 3GPP TS38.214.

As one embodiment, specific definitions of the CORESET and the TCI state are shown in Chapter 10 of 3GPP TS38.213.

**Embodiment 1B**

Embodiment 1B illustrates a flowchart of a first information block, a second information block, first signaling, and a first signal according to the present application, as shown in FIG. 1B. In 100B shown in FIG. 1B, each block represents one step.

In Embodiment 1B, the first node in the present application receives a second information block in step 101B; receives a first information block in step 102B; receives first signaling in step 103B; and receives a first signal in step 104B, wherein the second information block indicates a first RS resource set, and the first RS resource set includes multiple RS resources; the first information block is used for determining at least one index; the first signaling is used for triggering the first signal, or the first signaling is used for triggering the first signal; the at least one index is used for determining at least one RS resource from only a first RS resource group in the first RS resource set, and the first RS resource group includes partial RS resources in the first RS resource set; and the offset between the reception of the first signaling and the reception of the first signal is less than a first threshold value, the first signal and a first RS resource are quasi co-located, and the first RS resource is one RS resource other than the first RS resource group in the first RS resource set.

As one embodiment, the second information block is carried by higher layer signaling.

As one embodiment, the second information block is carried by RRC signaling.

As one embodiment, the second information block includes part or all of fields in one or more RRC IEs (Information Elements).

As one embodiment, the second information block includes ssb-PositionsInBurst.

As one embodiment, the second information block includes ssb-PositionsInBurst in SIB1.

As one embodiment, the second information block includes ssb-PositionsInBurst in ServingCellConfigCommon.

As one embodiment, the second information block includes multiple IE TCI-States.

As one embodiment, the second information block includes IE TCI-State.

As one embodiment, the second information block includes IE NZP-CSI-RS-Resource.

As one embodiment, the second information block includes multiple IE NZP-CSI-RS-Resources.

As one embodiment, the second information block includes IE ControlResourceSet.

As one embodiment, the second information block includes multiple IE ControlResourceSets.

As one embodiment, the second information block includes one or more of ssb-PositionsInBurst, IE ControlResourceSet, IE TCI-State, or IE NZP-CSI-RS-Resource.

As one embodiment, the second information block includes one or more of ssb-PositionsInBurst in SIB1, ssb-PositionsInBurst in ServingCellConfigCommon, IE TCI-State, or IE NZP-CSI-RS-Resource.

As one embodiment, the second information block includes multiple IE TCI-States.

As one embodiment, the second information block indicates N TCI states, the first RS resource set includes RS resources related to QCL parameters of the N TCI states, and N is a positive integer greater than 1.

As one embodiment, RS resources related to QCL parameters of the N TCI states include RS resources respectively related to QCL parameters of the N TCI states.

As one embodiment, the second information block indicates multiple CORESETs, and the first RS resource set includes RS resources related to QCL parameters of TCI states of the multiple CORESETs.

As one embodiment, the second information block indicates M CORESETs, and the first RS resource set includes RS resources related to QCL parameters of TCI states of the M CORESETs, and M is a positive integer greater than 1.

As one embodiment, an RS resource related to a QCL parameter of any TCI state of the N TCI states belongs to RS resources related to QCL parameters of the N TCI states.

As one embodiment, an RS resource related to a QCL parameter of a TCI state of any CORESET of the M CORESETs belongs to RS resources related to a QCL parameter of the TCI states of the M CORESETs.

As one embodiment, the at least one index includes one or more of an RS resource index, an RS resource set index, a TCI state index, an antenna port index, an index of an antenna port group, an index of an antenna port set, an RS port index, a CORESET index, a CORESET pool index, a cell index, or a PCI (Physical Cell Identifier).

As one embodiment, the second information block indicates an index or identifier of the first RS resource set.

As one embodiment, the second information block indicates time domain resources occupied by RS resources included in the first RS resource set.

As one embodiment, the second information block indicates indexes or identifiers of RS resources included in the first RS resource set.

As one embodiment, the second information block indicates at least one of time domain resources occupied by RS resources included in the first RS resource set, indexes of RS resources included in the first RS resource set, frequency domain resources occupied by RS resources included in the first RS resource set, and REs (Resource Elements) occupied by RS resources included in the first RS resource set.

As one embodiment, the second information block is carried by a MAC CE (Medium Access Control Layer Control Element).

As one embodiment, the first RS resource set includes one or more of an SS/PBCH (Synchronization Signal/Physical Broadcast CHannel) block resource or a CSI-RS (Channel State Information-Reference Signal) resource.

As one embodiment, any RS resource in the first RS resource set is an SS/PBCH block resource or a CSI-RS resource.

As one embodiment, the first RS resource set includes one or more of an SSB (Synchronization Signal Block) resource or a CSI-RS resource.

As one embodiment, any RS resource in the first RS resource set is an SSB resource or a CSI-RS resource.

As one embodiment, any RS resource in the first RS resource set is a CSI-RS resource.

As one embodiment, the first RS resource group includes one or more RS resources in the first RS resource set.

As one embodiment, the first RS resource group includes multiple RS resources in the first RS resource set.

As one embodiment, there is at least one RS resource only in the first RS resource group in the first RS resource set associated with the at least one index.

As one embodiment, an RS resource other than the first RS resource group in the first RS resource set is not associated with the at least one index.

As one embodiment, the at least one RS resource determined by the at least one index is associated with the at least one index.

As one embodiment, any RS resource other than the at least one RS resource determined by the at least one index in the first RS resource group is not associated with the at least one index.

As one embodiment, the reception of the first signal is received later than the reception of the first information block.

Typically, a time domain resource occupied by the first signal is not earlier than a moment when information indicated by the first information block is effective.

Typically, a time domain resource occupied by the first signal is not earlier than a moment when the at least one index is effective.

As one embodiment, the first signaling is received later than the first information block.

As one embodiment, the reception of the first signaling is not later than the reception of the first information block.

As one embodiment, the first information block is carried by a MAC CE (Medium Access Control Layer Control Element).

As one embodiment, the first information block is carried by physical layer signaling.

As one embodiment, the first information block is carried by at least physical layer signaling in a MAC CE or the physical layer signaling.

As one embodiment, the first information block is carried by DCI (Downlink Control Information).

As one embodiment, the first information block is carried by at least DCI signaling in MAC CE or the DCI signaling.

As one embodiment, the first information block is carried by an MIB.

As one embodiment, the first information block is carried by an SIB.

As one embodiment, the first information block is carried by cell-specific signaling.

As one embodiment, the first information block is carried by cell-specific higher-layer signaling.

As one embodiment, the first information block is carried by cell-specific DCI.

As one embodiment, the first information block is cell-specific.

As one embodiment, the first information block is carried by UE-group common signaling.

As one embodiment, the first information block is carried by UE-group common higher-layer signaling.

As one embodiment, the first information block is carried by UE-group common DCI.

As one embodiment, the first information block is UE-group common.

As one embodiment, the first information block is carried by UE-specific signaling.

As one embodiment, the first information block is carried by UE-specific higher-layer signaling.

As one embodiment, the first information block is carried by UE-specific DCI.

As one embodiment, the first information block is UE-specific.

As one embodiment, the at least one index includes one or more of an RS resource index, an RS resource set index, a TCI state index, an antenna port index, an index of an antenna port group, an index of an antenna port set, an RS port index, a CORESET index, a CORESET pool index, a cell index, or a PCI (Physical Cell Identifier).

As one embodiment, the at least one index comprises one index.

As one embodiment, the at least one index comprises multiple indexes.

As one embodiment, the at least one index comprises one or more indexes.

As one embodiment, any index in the at least one index is one non-negative integer.

As one embodiment, the at least one index comprises one index, and the any index of the at least one index is the at least one index.

As one embodiment, the at least one index comprises multiple indexes, and the any index of the at least one index is any index of the multiple indexes.

As one embodiment, any index of the at least one index indicates one RS (Reference Signal) resource.

As one embodiment, one index of the at least one index indicates one RS resource.

As one embodiment, any index of the at least one index is used for identifying one RS resource.

As one embodiment, one index of the at least one index is used for identifying one RS resource.

As one embodiment, any index of the at least one index indicates one group of RS resources.

As one embodiment, one index of the at least one index indicates one group of RS resources.

As one embodiment, any index of the at least one index is used for identifying one group of RS resources.

As one embodiment, one index of the at least one index is used for identifying one group of RS resources.

As one embodiment, the meaning of "one RS resource is associated with the at least one index" includes: the at least one index is used for indicating or identifying the one RS resource.

As one embodiment, the meaning of "one RS resource is associated with the at least one index" includes: an RS resource that the at least one index is used for indicating or identifying includes the one RS resource.

As one embodiment, the meaning of "one RS resource is associated with the at least one index" includes: the one RS resource and one RS resource indicated or identified by the at least one index are quasi co-located.

As one embodiment, the meaning of "one RS resource is associated with the at least one index" includes: the one RS resource and one RS resource indicated or identified by the at least one index apply identical QCL parameters.

As one embodiment, the meaning of "one RS resource is not associated with the at least one index" includes: an index used for indicating or identifying the one RS resource does not belong to the at least one index.

As one embodiment, the meaning of "one RS resource is not associated with the at least one index" includes: the one RS resource and one RS resource indicated or identified by the at least one index are not quasi co-located.

As one embodiment, the meaning of "one RS resource is not associated with the at least one index" includes: the one RS resource and any RS resource indicated or identified by the at least one index apply different QCL parameters.

As one embodiment, the RS resource comprises one or more of a CSI-RS resource, or an SS/PBCH block resource.

As one embodiment, one index of the at least one index is one of NZP-CSI-RS-ResourceId, SSB-Index, or SRS-ResourceId.

As one embodiment, any index of the at least one index is one of NZP-CSI-RS-ResourceId, SSB-Index, or SRS-ResourceId.

As one embodiment, any index of the at least one index indicates one TCI (Transmission Configuration Indicator) state.

As one embodiment, one index of the at least one index indicates one TCI state.

As one embodiment, any index of the at least one index is used for identifying one TCI state.

As one embodiment, one index of the at least one index is used for identifying one TCI state.

As one embodiment, any index of the at least one index indicates one group of TCI states.

As one embodiment, one index of the at least one index indicates one group of TCI states.

As one embodiment, one index of the at least one index is one of TCI-StateId or TCI-UL-State-Id.

As one embodiment, any index of the at least one index is one of TCI-StateId or TCI-UL-State-Id.

As one embodiment, the meaning of "one RS resource is associated with the at least one index" includes: the one RS resource and an RS resource related to a QCL parameter of one TCI state indicated or identified by the at least one index are quasi co-located.

As one embodiment, the meaning of "one RS resource is associated with the at least one index" includes: the one RS resource belongs to an RS resource related to a QCL parameter of one TCI state indicated or identified by the at least one index.

As one embodiment, the meaning of "one RS resource is associated with the at least one index" includes: the one RS resource and an RS resource related to a QCL parameter of one TCI state indicated or identified by the at least one index apply identical QCL parameters.

As one embodiment, the meaning of "one RS resource is associated with the at least one index" includes: the one RS resource and an RS resource related to a QCL parameter of one TCI state indicated or identified by the at least one index apply identical Spatial Rx parameters.

As one embodiment, the meaning of "one RS resource is not associated with the at least one index" includes: the one RS resource and an RS resource related to a QCL parameter of one TCI state indicated or identified by the at least one index are not quasi co-located.

As one embodiment, the meaning of "one RS resource is not associated with the at least one index" includes: the one RS resource does not belong to an RS resource related to a QCL parameter of one TCI state indicated or identified by the at least one index.

As one embodiment, the meaning of "one RS resource is not associated with the at least one index" includes: the one RS resource and an RS resource related to a QCL parameter of one TCI state indicated or identified by the at least one index apply different QCL parameters.

As one embodiment, the meaning of "one RS resource is not associated with the at least one index" includes: the one RS resource and an RS resource related to a QCL parameter of one TCI state indicated or identified by the at least one index apply different Spatial Rx parameters.

As one embodiment, any index of the at least one index indicates one CORESET (Control REsource SET) pool.

As one embodiment, one index of the at least one index indicates one CORESET pool.

As one embodiment, any index of the at least one index is used for identifying one CORESET pool.

As one embodiment, one index of the at least one index is used for identifying one CORESET pool.

As one embodiment, one index of the at least one index is coresetPoolIndex.

As one embodiment, any index of the at least one index is coresetPoolIndex.

As one embodiment, any index of the at least one index indicates one CORESET.

As one embodiment, one index of the at least one index indicates one CORESET.

As one embodiment, any index of the at least one index is used for identifying one CORESET.

As one embodiment, one index of the at least one index is used for identifying one CORESET.

As one embodiment, one index of the at least one index is ControlResourceSetId.

As one embodiment, any index of the at least one index is ControlResourceSetId.

As one embodiment, any index of the at least one index indicates one group of CORESETs.

As one embodiment, one index of the at least one index indicates one group of CORESETs.

As one embodiment, any index of the at least one index is used for identifying one group of CORESETs.

As one embodiment, one index of the at least one index is used for identifying one group of CORESETs.

As one embodiment, the meaning of "one RS resource is associated with the at least one index" includes: the one RS resource and an RS resource related to a QCL parameter of a TCI state of one CORESET indicated or identified by the at least one index are quasi co-located.

As one embodiment, the meaning of "one RS resource is associated with the at least one index" includes: the one RS resource belongs to an RS resource related to a QCL parameter of a TCI state of one CORESET indicated or identified by the at least one index.

As one embodiment, the meaning of "one RS resource is associated with the at least one index" includes: the one RS resource and an RS resource related to a QCL parameter of a TCI state of one CORESET indicated or identified by the at least one index apply identical QCL parameters.

As one embodiment, the meaning of "one RS resource is associated with the at least one index" includes: the one RS resource and an RS resource related to a QCL parameter of a TCI state of one CORESET indicated or identified by the at least one index apply identical Spatial Rx parameters.

As one embodiment, the meaning of "one RS resource is not associated with the at least one index" includes: the one RS resource and an RS resource related to a QCL parameter of a TCI state of one CORESET indicated or identified by the at least one index are not quasi co-located.

As one embodiment, the meaning of "one RS resource is not associated with the at least one index" includes: the one RS resource does not belong to an RS resource related to a QCL parameter of a TCI state of one CORESET indicated or identified by the at least one index.

As one embodiment, the meaning of "one RS resource is not associated with the at least one index" includes: the one RS resource and an RS resource related to a QCL parameter of a TCI state of one CORESET indicated or identified by the at least one index apply different QCL parameters.

As one embodiment, the meaning of "one RS resource is not associated with the at least one index" includes: the one RS resource and an RS resource related to a QCL parameter of a TCI state of one CORESET indicated or identified by the at least one index apply different Spatial Rx parameters.

As one embodiment, any index of the at least one index indicates one antenna port.

As one embodiment, one index of the at least one index indicates one antenna port.

As one embodiment, any index of the at least one index indicates one group of antenna ports.

As one embodiment, one index of the at least one index indicates one group of antenna ports.

As one embodiment, the antenna port includes an RS port.

As one embodiment, the antenna port includes at least one of a CSI-RS port or an SRS port.

As one embodiment, the meaning of "one RS resource is associated with the at least one index" includes: the one RS resource and one or one group of antenna port(s) indicated or identified by the at least one index are quasi co-located.

As one embodiment, the meaning of "one RS resource is associated with the at least one index" includes: an antenna port of the one RS resource belongs to one or one group of antenna port(s) indicated or identified by the at least one index.

As one embodiment, the meaning of "one RS resource is associated with the at least one index" includes: the one RS resource and one or one group of antenna port(s) indicated or identified by the at least one index apply identical QCL parameters.

As one embodiment, the meaning of "one RS resource is associated with the at least one index" includes: the one RS resource and one or one group of antenna port(s) indicated or identified by the at least one index apply identical Spatial Rx parameters.

As one embodiment, the meaning of "one RS resource is not associated with the at least one index" includes: the one RS resource and one or one group of antenna port(s) indicated or identified by the at least one index are not quasi co-located.

As one embodiment, the meaning of "one RS resource is not associated with the at least one index" includes: an antenna port of the one RS resource does not belong to one or one group of antenna port(s) indicated or identified by the at least one index.

As one embodiment, the meaning of "one RS resource is not associated with the at least one index" includes: the one RS resource and one or one group of antenna port(s) indicated or identified by the at least one index apply different QCL parameters.

As one embodiment, the meaning of "one RS resource is not associated with the at least one index" includes: the one RS resource and one or one group of antenna port(s) indicated or identified by the at least one index apply different Spatial Rx parameters.

As one embodiment, any index of the at least one index indicates one TRP (Transmitter Receiver Point).

As one embodiment, one index of the at least one index indicates one TRP.

As one embodiment, any index of the at least one index indicates one antenna panel.

As one embodiment, one index of the at least one index indicates one antenna panel.

As one embodiment, one index of the at least one index indicates one cell.

As one embodiment, any index of the at least one index indicates one cell.

As one embodiment, one index of the at least one index is used for identifying one cell or TRP.

As one embodiment, any index of the at least one index is used for identifying one cell or TRP.

As one embodiment, one index of the at least one index indicates one CORESET.

As one embodiment, one index of the at least one index is used for identifying one CORESET.

As one embodiment, any index of the at least one index indicates one CORESET.

As one embodiment, any index of the at least one index is used for identifying one CORESET.

As one embodiment, one index of the at least one index indicates one CORESET pool.

As one embodiment, one index of the at least one index is used for identifying one CORESET pool.

As one embodiment, any index of the at least one index indicates one CORESET pool.

As one embodiment, any index of the at least one index is used for identifying one CORESET pool.

As one embodiment, one index of the at least one index indicates one PCI.

As one embodiment, one index of the at least one index is used for identifying one PCI.

As one embodiment, any index of the at least one index indicates one PCI.

As one embodiment, any index of the at least one index is used for identifying one PCI.

As one embodiment, the meaning of "one RS resource is associated with the at least one index" includes: one cell indicated or identified by the at least one index is the same as a cell where the first RS resource is located.

As one embodiment, the meaning of "one RS resource is associated with the at least one index" includes: one TRP indicated or identified by the at least one index is the same as a TRP where the first RS resource is located.

As one embodiment, the meaning of "one RS resource is associated with the at least one index" includes: one antenna panel indicated or identified by the at least one index is the same as an antenna panel where the first RS resource is located.

As one embodiment, the meaning of "one RS resource is associated with the at least one index" includes: one CORESET indicated or identified by the at least one index is the same as a CORESET where the first RS resource is located.

As one embodiment, the meaning of "one RS resource is associated with the at least one index" includes: one CORESET indicated or identified by the at least one index and a CORESET where the first RS resource is located belong to the same one CORESET pool.

As one embodiment, the meaning of "one RS resource is associated with the at least one index" includes: a CORESET pool indicated or identified by the at least one index is the same as a CORESET pool where the first RS resource is located.

As one embodiment, the meaning of "one RS resource is associated with the at least one index" includes: a PCI indicated or identified by the at least one index is the same as a PCI of the first RS resource.

As one embodiment, the meaning of "one RS resource is not associated with the at least one index" includes: one cell indicated or identified by the at least one index is different from a cell where the first RS resource is located.

As one embodiment, the meaning of "one RS resource is not associated with the at least one index" includes: one TRP indicated or identified by the at least one index is different from a TRP where the first RS resource is located.

As one embodiment, the meaning of "one RS resource is not associated with the at least one index" includes: one antenna panel indicated or identified by the at least one index is different from an antenna panel where the first RS resource is located.

As one embodiment, the meaning of "one RS resource is not associated with the at least one index" includes: one CORESET indicated or identified by the at least one index is different from a CORESET where the first RS resource is located.

As one embodiment, the meaning of "one RS resource is not associated with the at least one index" includes: one CORESET indicated or identified by the at least one index and a CORESET where the first RS resource is located belong to different CORESET pools.

As one embodiment, the meaning of "one RS resource is not associated with the at least one index" includes: one CORESET pool indicated or identified by the at least one index is different from a CORESET pool where the first RS resource is located.

As one embodiment, the meaning of "one RS resource is not associated with the at least one index" includes: a PCI indicated or identified by the at least one index is different from a PCI of the first RS resource.

As one embodiment, one index of the at least one index indicates one serving cell.

As one embodiment, one index of the at least one index indicates one PCI different from a PCI of a serving cell.

As one embodiment, one index of the at least one index indicates a cell or TRP corresponding to a PCI different from a PCI of a serving cell.

As one embodiment, one index of the at least one index is one cell index.

As one embodiment, any index of the at least one index is one cell index.

As one embodiment, the cell index includes one or more of PhysCellId, SCellIndex, or ServCellIndex.

As one embodiment, the cell index includes one or more of PhysCellId, SCellIndex, ServCellIndex, or AdditionalPCIIndex.

As one embodiment, there are two indexes in the at least one index respectively indicating one RS resource and one TCI state.

As one embodiment, there are two indexes in the at least one index respectively indicating one RS resource and one CORESET pool.

As one embodiment, there are two indexes in the at least one index respectively indicating one TCI state and one CORESET pool.

As one embodiment, the at least one index is used for indicating an activated RS resource.

As one embodiment, the at least one index is used for indicating an activated TCI state.

As one embodiment, the at least one index is used for indicating an activated antenna port.

As one embodiment, the at least one index is used for indicating an activated CORESET.

As one embodiment, the at least one index is used for indicating an activated CORESET pool.

As one embodiment, the at least one index is used for indicating an activated TRP or antenna panel.

As one embodiment, the at least one index is used for indicating an activated cell.

As one embodiment, the at least one index is used for indicating one or more of an activated RS resource, an activated TCI state, an activated antenna port, an activated CORESET, an activated CORESET pool, an activated TRP, an activated antenna panel or an activated cell.

As one embodiment, the at least one index is used for indicating a zero-power antenna port.

As one embodiment, the at least one index is used for indicating a non-zero-power antenna port.

As one embodiment, the meaning of the activated includes: non-zero-power.

As one embodiment, the meaning of the deactivated includes: muted.

As one embodiment, the meaning of the deactivated includes: inactive.

As one embodiment, the meaning of the deactivated includes: zero-power.

As one embodiment, the first information block indicates the at least one index.

As one embodiment, the first information block indicates each index of the at least one index.

As one embodiment, the first information block explicitly indicates the at least one index.

As one embodiment, the first information block indicates the at least one index by implicitly indicating other information.

As one embodiment, the first information block indicates a reference index set, and the reference index set is used for determining the at least one index; and the reference index set includes one or more indexes.

As one embodiment, any index in the reference index set is a non-negative integer.

As one embodiment, any index in the reference index set indicates one RS resource.

As one embodiment, one index in the reference index set indicates one RS resource.

As one embodiment, any index in the reference index set indicates one group of RS resources.

As one embodiment, one index in the reference index set indicates one group of RS resources.

As one embodiment, any index in the reference index set indicates one or one group of SS/PBCH Block resource(s).

As one embodiment, one index in the reference index set indicates one or one group of SS/PBCH Block resource(s).

As one embodiment, any index in the reference index set indicates one or one group of CSI-RS resource(s).

As one embodiment, one index in the reference index set indicates one or one group of CSI-RS resource(s).

As one embodiment, any index in the reference index set indicates one or one group of CRS (Cell-specific reference signal) resource(s).

As one embodiment, one index in the reference index set indicates one or one group of CRS resource(s).

As one embodiment, any index in the reference index set indicates one CRS resource or one SS/PBCH Block resource.

As one embodiment, one index in the reference index set indicates one cell or TRP.

As one embodiment, any index in the reference index set indicates one cell or TRP.

As one embodiment, one index in the reference index set is one cell index.

As one embodiment, any index in the reference index set is one cell index.

As one embodiment, the reference index set is used for indicating one or more of a deactivated RS resource, a deactivated TCI state, a deactivated antenna port, a deactivated CORESET, a deactivated CORESET pool, a deactivated TRP, a deactivated antenna panel or a deactivated cell.

As one embodiment, any index in the reference index set indicates one RS resource, and there is one index in the at least one index that indicates one of one TCI state, one CORESET, or one CORESET pool.

As one embodiment, any index in the reference index set indicates one RS resource or one TRP, and any index of the at least one index indicates one of one TCI state, one CORESET, or one CORESET pool.

As one embodiment, any index in the reference index set indicates one of one SS/PBCH Block resource, one CRS resource, or one TRP, and in the at least one index, there is one index indicating one of one CSI-RS resource, one TCI state, one CORESET, or one CORESET pool.

As one embodiment, any index in the reference index set indicates one of one SS/PBCH Block resource, one CRS resource, or one TRP, and any index of the at least one index indicates one of one CSI-RS resource, one TCI state, one CORESET, or one CORESET pool.

As one embodiment, the at least one index includes partial or all indexes in the reference index set.

As one embodiment, any index of the at least one index does not belong to the reference index set.

As one embodiment, there is no index that belongs to both the at least one index and the reference index set.

As one embodiment, the reference index set indicates one or more of a deactivated RS resource, a deactivated TCI state, a deactivated antenna port, a deactivated CORESET, a deactivated CORESET pool, a deactivated TRP, a deactivated antenna panel, or a deactivated cell; and the at least one index indicates one or more of an activated RS resource, an activated TCI state, an activated antenna port, an activated CORESET, an activated CORESET pool, an activated TRP, an activated antenna panel, or an activated cell.

As one embodiment, only RS resources in the first RS resource group in the first RS resource set are associated with the at least one index.

As one embodiment, the first RS resource group and RS resources other than the first RS resource group in the first RS resource set are respectively configured.

As one embodiment, the first RS resource group is indicated by higher-layer signaling.

As one embodiment, the first RS resource group is indicated by a higher-layer parameter other than the second information block.

As one embodiment, the first RS resource group is indicated by higher-layer information other than the second information block.

As one embodiment, which RS resources are included in the first RS resource group is configured by higher-layer signaling.

As one embodiment, the first node does not expect that the at least one index determined by the first information block includes an index associated with one RS resource other than the first RS resource group in the first RS resource set.

As one embodiment, if the at least one index determined by the first information block includes an index associated with one RS resource other than the first RS resource group in the first RS resource set, the first node considers that one error occurs.

As one embodiment, if the at least one index determined by the first information block includes an index associated with one RS resource other than the first RS resource group in the first RS resource set, the first node ignores the first information block.

As one embodiment, the first RS resource set includes RS resources related to a QCL parameter of a TCI state of M CORESETs, the M CORESETs are configured by higher-layer signaling, and M is a positive integer greater than 1.

As one embodiment, the first RS resource set includes RS resources related to a QCL parameter of a TCI state to which multiple TCI codepoints are mapped.

As one embodiment, the first RS resource group includes RS resources related to a QCL parameter of a TCI state of a second CORESET pool.

As one embodiment, the second CORESET pool includes one or more CORESETs.

As one embodiment, the second CORESET pool includes M CORESETs, the M CORESETs are configured by higher-layer signaling, and M is a positive integer greater than 1.

As one embodiment, the second CORESET pool includes partial CORESETs in M CORESETs, the M CORESETs are configured by higher-layer signaling, and M is a positive integer greater than 1.

As one embodiment, the first RS resource group includes RS resources related to a QCL parameter of a TCI state to which partial TCI codepoints of multiple TCI codepoints are mapped.

As one embodiment, the first RS resource group includes RS resources related to a QCL parameter of a TCI state to which multiple TCI codepoints are mapped.

As one embodiment, the first RS resource set includes RS resources related to QCL parameters of N TCI states, and N is a positive integer greater than 1; the first RS resource group includes RS resources related to QCL parameters of partial TCI states of the N TCI states.

As one embodiment, the first RS resource set includes RS resources related to QCL parameters of N TCI states, and N is a positive integer greater than 1; and the first RS resource group includes RS resources related to a QCL parameter of a TCI state to which the multiple TCI codepoints are mapped, and the TCI state to which the multiple TCI codepoints are mapped belongs to the N TCI states.

As one embodiment, one TCI (Transmission configuration indication) state indicates one quasi co-location relationship.

As one embodiment, one TCI state indicates one or more RS resources.

As one embodiment, one TCI state indicates at least one RS resource.

As one embodiment, any RS resource indicated by one TCI state is one of an SRS (Sounding Reference Signal) resource, a CSI-RS (Channel State Information Reference Signal) resource, or an SS/PBCH (Synchronization Signal/Physical Broadcast Channel) block resource.

As one embodiment, any RS resource indicated by one TCI state is a CSI-RS resource or an SS/PBCH block resource.

As one embodiment, one TCI state indicates at least one RS resource and a QCL (Quasi-Co-Located) parameter corresponding to each RS resource therein.

As one embodiment, one TCI state indicates an RS resource related to a QCL parameter of the one TCI state.

As one embodiment, one TCI state indicates multiple RS resources, and the multiple RS resources are respectively RS resources related to different types of QCL parameters of the one TCI state.

As one embodiment, one TCI state indicates at least one RS resource and the type of QCL parameters corresponding to each RS resource therein.

Typically, a TCI state of one CORESET is one TCI state indicating QCL parameters of the one CORESET.

As one embodiment, the types of the QCL parameters include TypeD.

As one embodiment, the types of the QCL parameters include at least one of TypeA, TypeB, TypeC, and TypeD.

As one embodiment, the types of the QCL parameters include at least TypeD in TypeA, TypeB, TypeC, and TypeD.

As one embodiment, the types of the QCL parameters include TypeA, TypeB, TypeC, and TypeD.

As one embodiment, QCL parameters with the type of TypeA include Doppler shift, Doppler spread, average delay, and delay spread.

As one embodiment, QCL parameters with the type of TypeB include Doppler shift and Doppler spread.

As one embodiment, QCL parameters with the type of TypeC include Doppler shift and average delay.

As one embodiment, QCL parameters with the type of TypeD include Spatial Rx parameters.

As one embodiment, specific definitions of the TypeA, the TypeB, the TypeC, and the TypeD are shown in Chapter 5.1.5 of 3GPP TS38.214.

As one embodiment, the QCL parameters include one or more of delay spread, Doppler spread, Doppler shift, average delay, or a Spatial Rx parameter.

As one embodiment, the QCL parameters include Doppler shift and Doppler spread.

As one embodiment, the QCL parameters include Doppler shift and average delay.

As one embodiment, the QCL parameters include a Spatial Rx parameter.

As one embodiment, the QCL parameters include at least one of a spatial transmission parameter or a Spatial Rx parameter.

As one embodiment, the QCL parameters include a spatial domain receive filter.

As one embodiment, the QCL parameters include a spatial domain filter.

As one embodiment, the QCL parameters include at least one of a spatial domain transmit filter or a spatial domain receive filter.

As one embodiment, specific definitions of the TCI state and the Quasi Co-Location (QCL) are shown in Chapter 5.1.5 of 3GPP TS38.214.

As one embodiment, specific definitions of the CORESET and the TCI state are shown in Chapter 10 of 3GPP TS38.213.

Typically, the first signaling is one piece of physical layer signaling.

Typically, the first signaling is one piece of DCI signaling.

As one embodiment, a CORESET to which the first signaling belongs is associated to one USS (UE-specific search space).

As one embodiment, a CORESET to which the first signaling belongs is associated to one CSS (Common search space).

As one embodiment, the first signaling is used for scheduling the first signal.

As one embodiment, the first signaling is used for triggering the first signal.

As one embodiment, the first signal is a PDSCH.

As one embodiment, the first signaling is used for scheduling the first signal, and the first signal is a PDSCH.

As one embodiment, the first signal is a PDSCH, and the first signaling is DCI signaling scheduling the first signal.

As one sub-embodiment of the above embodiment, a name of a parameter indicating the first threshold value includes timeDurationForQCL.

As one sub-embodiment of the above embodiment, a parameter indicating the first threshold value is timeDurationForQCL.

As one sub-embodiment of the above embodiment, the first threshold value is indicated by Feature-SetDownlink IE.

As one sub-embodiment of the above embodiment, the first threshold value is equal to a sum of timeDurationForQCL and an additional timing delay, and the additional timing delay is $d\frac{2^{\mu_{PDSCH}}}{2^{\mu_{PDCCH}}}$, wherein $\mu_{PDSCH}$ is an SCS configuration of a PDSCH, and $\mu_{PDCCH}$ is an SCS configuration of a PDCCH.

As one dependent embodiment of the above sub-embodiment, if $\mu_{PDCCH} < \mu_{PDSCH}$, a definition of the additional timing delay is shown in Table 5.2.1.5.1a-1 of 3GPP TS38.214; and otherwise, the additional timing delay is equal to 0.

As one dependent embodiment of the above sub-embodiment, the additional timing delay is 8, 14, 28, 56 or 112 symbols.

As one sub-embodiment of the above embodiment, the meaning of "the first signal and a first RS resource are Quasi Co-Located (QCL)" includes: a DMRS port of the first signal and the first RS resource are quasi co-located.

As one embodiment, the first signal is an aperiodic CSI-RS, and the first signaling is DCI signaling used for triggering the first signal.

As one sub-embodiment of the above embodiment, the first signaling includes a CSI request field, and the CSI request field in the first signaling is used for triggering the first signal.

As one sub-embodiment of the above embodiment, a name of a parameter indicating the first threshold value includes beamSwitchTiming.

As one sub-embodiment of the above embodiment, a parameter indicating the first threshold value is beamSwitchTiming.

As one sub-embodiment of the above embodiment, the first threshold value is indicated by MIMO-ParametersPerBand IE.

As one embodiment, the first threshold value is equal to a sum of beamSwitchTiming and an additional timing delay, and the additional timing delay is $d \frac{2^{\mu_{CSIRS}}}{2^{\mu_{PDCCH}}}$, wherein $\mu_{CSIRS}$ is an SCS configuration of CSI-RS, and $\mu_{PDCCH}$ is an SCS configuration of a PDCCH.

As one sub-embodiment of the above embodiment, if $\mu_{CSIRS} < \mu_{PDSCH}$, a definition of the additional timing delay is shown in Table 5.2.1.5.1a-1 of 3GPP TS38.214; and otherwise, the additional timing delay is equal to 0.

As one embodiment, the first threshold value is $48 \cdot 2^{\max (0, \ \mu_{CSIRS} -3)}$.

As one sub-embodiment of the above embodiment, "the offset between the reception of the first signaling and the reception of the first signal" is the offset between the last symbol of a PDCCH carrying the first signaling and the first symbol of the first signal.

As one sub-embodiment of the above embodiment, the meaning of "the first signal and a first RS resource are quasi co-located" includes: a QCL parameter of the first RS resource is applied to the reception of the first signal.

As one embodiment, the meaning of the sentence "a QCL parameter of the first RS resource is applied to the reception of the first signal" includes: the QCL parameter of the first RS resource is used for inferring the QCL parameter for receiving the first signal.

As one embodiment, the meaning of the sentence "a QCL parameter of the first RS resource is applied to the reception of the first signal" includes: the reception of the first signal and the reception of the first RS resource apply identical QCL parameters.

As one embodiment, the meaning of the sentence "a QCL parameter of the first RS resource is applied to the reception of the first signal" includes: the first node applies identical QCL parameters to receive the first signal and the first RS resource.

As one embodiment, the meaning of the sentence "a QCL parameter of the first RS resource is applied to the reception of the first signal" includes: the first node assumes that identical QCL parameters are applied to the reception of the first signal and the reception of the first RS resource.

As one embodiment, a specific definition of a CSI request field is shown in Chapter 7.3 of 3GPP TS38.212.

As one embodiment, a specific definition of timeDurationForQCL is shown in Chapter 5.1.5 of 3GPP TS38.213.

As one embodiment, a specific definition of beamSwitchTiming is shown in Chapter 5.2.1.5.1 of 3GPP TS38.213.

Typically, the offset refers to: the offset in a time domain.

As one embodiment, "the offset between the reception of the first signaling and the reception of the first signal" is the offset between the last symbol of a PDCCH carrying the first signaling and a first symbol of the first signal.

As one embodiment, "the offset between the reception of the first signaling and the reception of the first signal" is the offset between the last symbol occupied by the first signaling and a first symbol of the first signal.

As one embodiment, "the offset between the reception of the first signaling and the reception of the first signal" is the offset between a first symbol occupied by the first signaling and a first symbol of the first signal.

As one embodiment, "the offset between the reception of the first signaling and the reception of the first signal" is the offset between an end moment of carrying of the first signaling and a start moment of the first signal.

As one embodiment, "the offset between the reception of the first signaling and the reception of the first signal" is the offset between a start moment of the first signaling and a start moment of the first signal.

As one embodiment, the meaning of "last symbol" is: the latest symbol.

As one embodiment, the meaning of "last symbol" is: one symbol of the greatest index.

As one embodiment, the meaning of "first symbol" is: one symbol of the smallest index.

As one embodiment, the meaning of "first symbol" is: the earliest symbol.

As one embodiment, the symbol is a single-carrier symbol.

As one embodiment, the symbol is a multi-carrier symbol.

As one embodiment, the symbol is an OFDM (Orthogonal Frequency Division Multiplexing) symbol.

As one embodiment, the symbol is obtained after an output of transform precoding undergoing OFDM symbol generation.

As one embodiment, the symbol is a DFT-S-OFDM (Discrete Fourier Transform Spread OFDM) symbol.

As one embodiment, the multi-carrier symbol is an OFDM (Orthogonal Frequency Division Multiplexing) symbol.

As one embodiment, the symbol is obtained after an output of transform precoding undergoing OFDM symbol generation.

As one embodiment, the symbol is an SC-FDMA (Single Carrier- Frequency Division Multiple Access) symbol.

As one embodiment, the symbol is a DFT-S-OFDM (Discrete Fourier Transform Spread OFDM) symbol.

As one embodiment, the multi-carrier symbol is an FBMC (Filter Bank Multi Carrier) symbol.

As one embodiment, the multi-carrier symbol comprises a CP (Cyclic Prefix).

As one embodiment, the offset between the reception of the first signaling and the reception of the first signal is a non-negative real number.

As one embodiment, the offset between the reception of the first signaling and the reception of the first signal is a positive real number.

As one embodiment, the first threshold value is a positive real number.

As one embodiment, the first threshold value is a time length of a positive number of symbols.

As one embodiment, the unit of the first threshold value is symbol.

As one embodiment, the unit of the first threshold value is millisecond.

As one embodiment, the first threshold value is reported by the first node.

As one embodiment, the first node is UE, and the first threshold value is based on a reported UE capability.

As one embodiment, the first threshold value is indicated by UE capability IE.

As one embodiment, specific definitions of FeatureSetDownlink IE, MIMO-ParametersPerBand, and UE capability IE are shown in Chapter 6.3.3 of 3GPP TS38.331.

As one embodiment, the first RS resource is an SS/PBCH (Synchronization Signal/Physical Broadcast CHannel) block resource or a CSI-RS (Channel State Information-Reference Signal) resource.

As one embodiment, the first RS resource is an SSB (Synchronization Signal Block) resource or a CSI-RS resource.

As one embodiment, the first RS resource is an SS/PBCH block resource.

As one embodiment, the first RS resource is an SSB resource.

As one embodiment, the first RS resource is a CSI-RS resource.

As one embodiment, the meaning of the sentence "the first signal and a first RS resource are quasi co-located (QCL)" includes: an antenna port of the first signal and the first RS resource are quasi co-located.

As one embodiment, the meaning of the sentence "the first signal and a first RS resource are quasi co-located (QCL)" includes: the same QCL (Quasi Co-Location) parameter is applied for the reception of the first signal and the reception of the first RS resource.

As one embodiment, the meaning of the sentence "the first signal and a first RS resource are quasi co-located (QCL)" includes: the first node assumes that identical QCL parameters are applied to the reception of the first signal and the reception of the first RS resource.

As one embodiment, the meaning of the sentence "the first signal and a first RS resource are quasi co-located (QCL)" includes: the first node applies identical QCL parameters to receive the first signal and the first RS resource.

As one embodiment, the meaning of the sentence "the first signal and a first RS resource are quasi co-located (QCL)" includes: a QCL parameter of the first RS resource is applied to the reception of the first signal.

As one embodiment, the meaning of "two RS resources are quasi co-located" includes: antenna ports of the two RS resources are quasi co-located.

As one embodiment, the meaning of "two RS resources are quasi co-located" includes: the reception of the two RS resources applies identical QCL (Quasi Co-Location) parameters.

As one embodiment, the meaning of "two RS resources are quasi co-located" includes: the reception of the two RS resources applies identical Spatial Rx parameters.

As one embodiment, the meaning of "two RS resources are quasi co-located" includes: the first node assumes that the reception of the two RS resources applies identical QCL parameters.

As one embodiment, the meaning of "two RS resources are quasi co-located" includes: the first node applies identical QCL parameters to receive the two RS resources.

As one embodiment, the meaning of "two RS resources are quasi co-located" includes: the two RS resources are both quasi co-located with one identical RS resource.

As one embodiment, the meaning of "two RS resources are quasi co-located" includes: the reception of the two RS resources and the reception of one identical RS resource apply identical QCL (Quasi Co-Location) parameters.

As one embodiment, the meaning of "two RS resources are quasi co-located" includes: the reception of the two RS resources and the reception of one identical RS resource apply identical Spatial Rx parameters.

As one embodiment, the meaning of "two RS resources are quasi co-located" includes: the first node assumes that the reception of the two RS and the reception of one identical RS resource apply identical QCL parameters.

As one embodiment, the first node determines the first RS resource only from RS resources other than the first RS resource group in the first RS resource set.

As one embodiment, the first RS resource is selected only from RS resources other than the first RS resource group in the first RS resource set.

As one embodiment, any RS resource other than the first RS resource group in the first RS resource set is independent of the first information block.

As one embodiment, determination of the first RS resource is independent of the first information block.

As one embodiment, determination of the first RS resource is not related to the first information block.

As one embodiment, determination of the first RS resource is not related to which index or which indexes is/are included in the at least one index.

As one embodiment, determination of the first RS resource is not related to the at least one index.

As one embodiment, determination of the first RS resource is independent of the at least one index.

As one embodiment, the first RS resource and each RS resource in the first RS resource group are not quasi co-located.

As one embodiment, any RS resource other than the first RS resource group in the first RS resource set and each RS resource in the first RS resource group are not quasi co-located.

**Embodiment 2**

Embodiment 2 illustrates a schematic diagram of a network architecture according to one embodiment of the present application, as shown in FIG. 2.

FIG. 2 illustrates a network architecture 200 of LTE (Long-Term Evolution), LTE-A (Long-Term Evolution Advanced), and future 5G systems. The network architecture 200 of the LTE, LTE-A, and future 5G systems is referred to as an EPS (Evolved Packet System) 200. The 5G NR or LTE network architecture 200 may be referred to as a 5GS (5G System)/EPS (Evolved Packet System) 200 or some other suitable terminologies. The 5GS/EPS 200 may comprise one or more pieces of UE (User Equipment) 201, one piece of UE241 performing sidelink communication with the UE201, an NG-RAN (Next Generation Radio Access Network) 202, a 5GC (5G Core-Network)/EPC (Evolved Packet Core) 210, an HSS (Home Subscriber Server)/UDM (Unified Data Management) 220, and an Internet service 230. The 5GS/EPS200 can be interconnected with other access networks, but for simplicity, these entities/interfaces are not shown. As shown in FIG. 2, the 5GS/EPS200 provides a packet switching service, but those skilled in the art will easily understand that the various concepts presented throughout the present application can be extended to a network that provides a circuit switching service. The NG-RAN202 comprises an NR (New Radio) node B (gNB)203 and other gNB204. The gNB203 provides user and control plane protocol terminations toward the UE201. The gNB203 may be connected to other gNB204 via an Xn interface (for example, backhaul). The gNB203 may also be referred to as a base station, a base transceiving station, a radio base station, a radio transceiver, a transceiver function, a basic service set (BSS), an extended service set (ESS), a TRP (transmitter receiver point), or some other suitable terminologies. The gNB203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, a global positioning system, a multimedia apparatus, a video apparatus, a digital audio player (e.g.,

an MP3 player), a camera, a game console, a drone, an aircraft, a narrowband physical network device, a machine type communication device, a land vehicle, an automobile, a wearable device, or any other similar functional apparatus. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 by an S1/NG interface. The 5GC/EPC210 comprises an MME (Mobility Management Entity)/AMF (Authentication Management Field)//SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 itself is connected to the P-GW/UPF213. The P-GW provides UE IP address allocation and other functions. The P-GW/UPF213 is connected to the Internet service 230. The Internet service 230 includes operator-corresponding Internet protocol services, which may specifically include Internet, intranet, IMS (IP Multimedia Subsystem), and packet switching services.

As one embodiment, the first node in the present application comprises the UE201.

As one embodiment, the first node in the present application comprises the UE241.

As one embodiment, the second node in the present application comprises the gNB203.

**Embodiment 3**

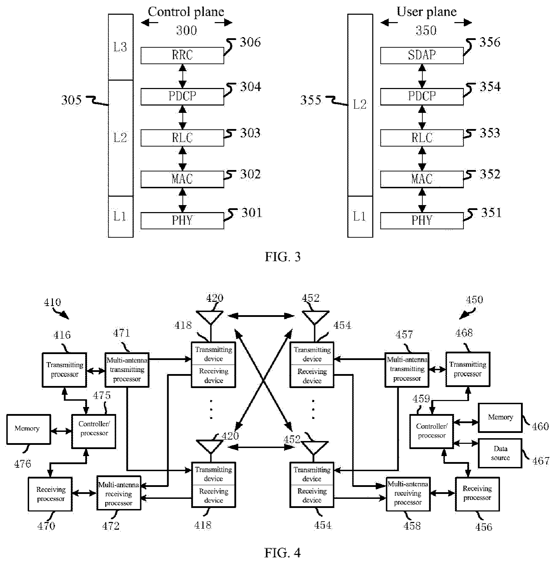

Embodiment 3 illustrates a schematic diagram of an embodiment of a radio protocol architecture for a user plane and a control plane according to one embodiment of the present application, as shown in FIG. 3.

Embodiment 3 shows a schematic diagram of an embodiment of a radio protocol architecture for one user plane and one control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 that is used between a first communication node device (UE, gNB, or RSU in V2X) and a second communication node device (gNB, UE, or RSU in V2X), or between two pieces of UE, using three layers: Layer 1, Layer 2, and Layer 3. The Layer 1 (L1 layer) is the lowest layer and implements various PHY (physical layer) signal processing functions. The L1 layer will be referred to as PHY301 herein. The Layer 2 (L2 layer) 305 is above PHY301, and is responsible for a link between the first communication node device and the second communication node device or between two pieces of UE. The L2 layer 305 includes an MAC (Medium Access Control) sublayer 302, an RLC (Radio Link Control) sublayer 303, and a PDCP (Packet Data Convergence Protocol) sublayer 304, these sublayers terminating at the second communication node device. The PDCP sublayer 304 provides multiplexing between different radio bearers and logical channels. The PDCP sublayer 304 also provides security by encrypting data packets, and provides support for cross-zone mobility of the first communication node device between the second communication node devices. The RLC sublayer 303 provides segmentation and reassembly of upper-layer data packets, retransmission of lost data packets, and reordering of data packets to compensate for out-of-order the reception due to HARQ. The MAC sublayer 302 provides multiplexing between logical and transport channels. The MAC sublayer 302 is also responsible for allocating various radio resources (e.g., resource blocks) in one cell between the first communication node devices. The MAC sublayer 302 is also responsible for HARQ operations. The RRC (Radio Resource Control) sublayer 306 in the Layer 3 (L3 layer) in the control plane 300 is responsible for obtaining radio resources (i.e., radio bearers) and configuring lower layers using RRC signaling between the second communication node device and the first communication node device. The radio protocol architecture for the user plane 350 includes the Layer 1 (L1 layer) and the Layer 2 (L2 layer). A radio protocol architecture for the first communication node device and the second communication node device in the user plane 350 is substantially the same as corresponding layers and sublayers in the control plane 300 for the physical layer 351, the PDCP sublayer 354 in the L2 layer 355, the RLC sublayer 353 in the L2 layer 355, and the MAC sublayer 352 in the L2 layer 355, but the PDCP sublayer 354 also provides header compression for upper-layer data packets to reduce radio transmission overhead. The L2 layer 355 in the user plane 350 further includes an SDAP (Service Data Adaptation Protocol) sublayer 356, and the SDAP sublayer 356 is responsible for mapping between QoS streams and data radio bearers (DRBs) to support the diversity of services. Although not shown in the figure, the first communication node device may have several upper layers above the L2 layer 355, including a network layer (e.g., an IP layer) terminating at the P-GW on a network side and an application layer terminating at another end (e.g., remote UE, a server, etc.) of connection.

As one embodiment, the radio protocol architecture in FIG. 3 is applicable to the first node in the present application.

As one embodiment, the radio protocol architecture in FIG. 3 is applicable to the second node in the present application.

As one embodiment, the first information block is generated in the MAC sublayer 302.

As one embodiment, the first information block is generated in the MAC sublayer 352.

As one embodiment, the first information block is generated in the PHY301.

As one embodiment, the first information block is generated in the PHY351.

As one embodiment, the first signaling is generated in the PHY301.

As one embodiment, the first signaling is generated in the PHY351.

As one embodiment, the first signal is generated in the PHY301.

As one embodiment, the first signal is generated in the PHY351.

As one embodiment, the higher layer in the present application refers to a layer above the physical layer.

As one embodiment, the higher layer in the present application refers to an RRC layer.

As one embodiment, the higher layer in the present application refers to an MAC layer.

As one embodiment, the higher layer in the present application includes at least one of an RRC layer or a MAC layer.

As one embodiment, the first information block is generated in the MAC sublayer 302.

As one embodiment, the first information block is generated in the MAC sublayer 352.

As one embodiment, the first information block is generated in the PHY301.

As one embodiment, the first information block is generated in the PHY351.

As one embodiment, the second information block is generated in the RRC306.

As one embodiment, the first signaling is generated in the PHY301.

As one embodiment, the first signaling is generated in the PHY351.

As one embodiment, the first signal is generated in the PHY301.

As one embodiment, the first signal is generated in the PHY351.

As one embodiment, the third information block is generated in the MAC sublayer 302.

As one embodiment, the third information block is generated in the MAC sublayer 352.

As one embodiment, the higher layer in the present application refers to a layer above the physical layer.

As one embodiment, the higher layer in the present application refers to an RRC layer.

As one embodiment, the higher layer in the present application refers to an MAC layer.

As one embodiment, the higher layer in the present application includes at least one of an RRC layer or a MAC layer.

## Embodiment 4

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In the transmission from the first communication device 410 to the second communication device 450, at the first communication device 410, upper-layer data packets from a core network are provided to the controller/processor 475. The controller/processor 475 implements the functionality of the L2 layer. In a DL, the controller/processor 475 provides header compression, encryption, packet segmentation and reordering, multiplexing between logical channels and transport channels, and radio resource allocation to the second communication device 450 based on various priority metrics. The controller/processor 475 is also responsible for HARQ operations, retransmission of lost packets, and signaling to the second communication device 450. The transmitting processor 416 and the multi-antenna transmitting processor 471 implement various signal processing functions for the L1 layer (i.e., the physical layer). The transmitting processor 416 implements coding and interleaving to facilitate forward error correction (FEC) at the second communication device 450, as well as constellation mapping based on various modulation schemes (e.g., binary phase shift keying (BPSK), quadrature phase shift keying (QPSK), M phase shift keying (M-PSK), and M quadrature amplitude modulation (M-QAM)). The multi-antenna transmitting processor 471 performs digital spatial precoding, including codebook-based precoding and non-codebook-based precoding, and beamforming processing on the coded and modulated symbols to generate one or more parallel streams. The transmitting processor 416 then maps each parallel stream to a subcarrier, multiplexes the modulated symbols with a reference signal (e.g., pilot) in a time domain and/or a frequency domain, and then uses an inverse fast Fourier transform (IFFT) to generate a physical channel carrying a time domain multi-carrier symbol stream. The multi-antenna transmitting processor 471 then performs a sending analog precoding/beamforming operation on the time domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the first communication device 410 to the second communication device 450, at the second communication device 450, each receiving device 454 receives a signal through its corresponding antenna 452. Each receiving device 454 recovers information modulated onto a radio frequency carrier, and converts a radio frequency stream into a baseband multi-carrier symbol stream which is provided to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses a fast Fourier transform (FFT) to convert the baseband multi-carrier symbol stream subjected to the receiving analog precoding/beamforming operation from a time domain to a frequency domain. In the frequency domain, the physical layer data signal and the reference signal are demultiplexed by the receiving processor 456, wherein the reference signal will be used for channel estimation, and the data signal is recovered into any parallel stream destined for the second communication device 450 after multi-antenna detection in the multi-antenna receiving processor 458. Symbols on each parallel stream are demodulated and recovered in the receiving processor 456, and soft decisions are generated. Then, the receiving processor 456 decodes and deinterleaves the soft decisions to recover the upper-layer data and control signals transmitted by the first communication device 410 on the physical channel. The upper-layer data and control signals are then provided to the controller/processor 459. The controller/processor 459 implements functions of the L2 layer. The controller/processor 459 may be associated with a memory 460 storing program codes and data. The memory 460 may be referred to as a computer-readable medium. In the DL (DownLink), the controller/processor 459 provides demultiplexing between transport and logical channels, packet reassembly, decryption, header decompression, and control signal processing to recover upper-layer data packets from the core network. The upper layer data packets are then provided to all protocol layers above the L2 layer. Various control signals may also be provided to L3 for L3 processing. The controller/processor 459 is also responsible for error detection using acknowledgement (ACK) and/or negative acknowledgement (NACK) protocols to support HARQ operations.

In the transmission from the second communication device 450 to the first communication device 410, at the second communication device 450, a data source 467 is used to provide upper-layer data packets to the controller/processor 459. The data source 467 represents all protocol layers above the L2 layer. Similar to the sending function at the first communication device 410 described in the DL, the controller/processor 459 implements header compression, encryption, packet segmentation and reordering, and multiplexing between logical and transport channels based on radio resource allocation of the first communication device 410, and implements L2 layer functions for the user plane and the control plane. The controller/processor 459 is also responsible for HARQ operations, retransmission of lost packets, and signaling to the first communication device 410. The transmitting processor 468 performs modulation mapping and channel encoding processing, the multi-antenna transmitting processor 457 performs digital multi-antenna spatial precoding, including codebook-based precoding and non-codebook-based precoding, and beamforming processing, and then the transmitting processor 468 modulates generated parallel streams into a multi-carrier/single-carrier symbol stream, which undergoes simulated precoding/beamforming operations in the multi-antenna transmitting processor 457 and is then provided to different antennas 452 via the transmitting device 454. Each transmitting device 454 first converts the baseband symbol stream provided by the multi-antenna transmitting processor 457 into a radio frequency symbol stream, which is then provided to the antenna 452.

In the transmission from the second communication device 450 to the first communication device 410, the function at the first communication device 410 is similar to the reception function described at the second communication device 450 in the transmission from the first communication device 410 to the second communication device 450. Each receiving device 418 receives a radio frequency signal through its corresponding antenna 420, converts the received radio frequency signal into a baseband signal, and provides the band signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/processor 475 may be associated with a memory 476 storing program codes and data. The memory 476 may be referred to as a computer-readable medium. The controller/processor 475 provides multiplexing between transport and logical channels, packet reassembly, decryption, header decompression, and control signal processing to recover upper-layer data packets from the second communication device 450. The upper-layer data packets from the controller/processor 475 may be provided to the core network. The controller/processor 475 is also responsible for error detection using ACK and/or NACK protocols to support HARQ operations.

As one embodiment, the second communication device 450 comprises: at least one processor and at least one memory, the at least one memory including computer program codes; and the at least one memory and the computer program codes are configured to be used together with the at least one processor. The second communication device 450 apparatus at least: receives a first information block; receives first signaling; receives a first signal, wherein the first signaling is used for scheduling the first signal, or the first signaling is used for triggering the first signal; the offset between the reception of the first signaling and the reception of the first signal is less than a first threshold value, and the first signal and a first RS resource are quasi co-located; and the first information block is used for determining at least one index, and the first RS resource depends on the at least one index.

As one embodiment, the second communication device 450 comprises: a memory storing a computer-readable instruction program, wherein the computer-readable instruction program generates actions when executed by at least one processor, and the actions comprise: receiving a first information block; receiving first signaling; receiving a first signal, wherein the first signaling is used for scheduling the first signal, or the first signaling is used for triggering the first signal; the offset between the reception of the first signaling and the reception of the first signal is less than a first threshold value, and the first signal and a first RS resource are quasi co-located; and the first information block is used for determining at least one index, and the first RS resource depends on the at least one index.

As one embodiment, the first communication device 410 comprises: at least one processor and at least one memory, the at least one memory comprising a computer program code; and the at least one memory and the computer program codes are configured to be used together with the at least one processor. The first communication device 410 apparatus at least: sends a first information block; sends first signaling; and sends a first signal, wherein the first signaling is used for scheduling the first signal, or the first signaling is used for triggering the first signal; the offset between the reception of the first signaling and the reception of the first signal is less than a first threshold value, and the first signal and a first RS resource are quasi co-located; and the first information block is used for determining at least one index, and the first RS resource depends on the at least one index.

As one embodiment, the first communication device 410 comprises: a memory storing a computer-readable instruction program, wherein the computer-readable instruction program generates actions when executed by at least one processor, and the actions comprise: sending a first information block; sending first signaling; and sending a first signal, wherein the first signaling is used for scheduling the first signal, or the first signaling is used for triggering the first signal; the offset between the reception of the first signaling and the reception of the first signal is less than a first threshold value, and the first signal and a first RS resource are quasi co-located; and the first information block is used for determining at least one index, and the first RS resource depends on the at least one index.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first information block in the present application; and at least one of {the antenna 420, the transmitting device 418, the transmitting processor 416, the multi-antenna transmitting processor 471, the controller/processor 475, and the memory 476} is used for sending the first information block in the present application.

As one embodiment, at least one of {the antenna 452, the receiving device 454, the receiving processor 456, the multi-antenna receiving processor 458, the controller/processor 459, the memory 460, and the data source 467} is used for receiving the first signaling in the present application; and at least one of {the antenna 420, the transmitting device 418, the transmitting processor 416, the multi-antenna transmitting processor 471, the controller/processor 475, and the memory 476} is used for sending the first signaling in the present application.

As one embodiment, at least one of {the antenna 452, the transmitting device 454, the transmitting processor 468, the multi-antenna transmitting processor 457, the controller/processor 459, and the memory 460} is used for receiving the first signal in the present application; and at least one of {the antenna 420, the receiving device 418, the receiving processor 470, the multi-antenna receiving processor 472, the controller/processor 475, and the memory 476} is used for sending the first signal in the present application.

As one embodiment, the second communication device 450 comprises: at least one processor and at least one memory, the at least one memory including computer program codes; and the at least one memory and the computer program codes are configured to be used together with the at least one processor. The second communication device 450 apparatus at least: receives a second information block; receives first signaling; receives first signaling; and receives the first signal; the second information block indicates a first RS resource set, and the first RS resource set includes multiple RS resources; the first information block is used for determining at least one index; the first signaling is used for triggering the first signal, or the first signaling is used for triggering the first signal; the at least one index is used for determining at least one RS resource from only a first RS resource group in the first RS resource set, and the first RS resource group includes partial RS resources in the first RS resource set; the offset between the reception of the first signaling and the reception of the first signal is less than a first threshold value, the first signal and a first RS resource are quasi co-located; and the first RS resource is one RS resource other than the first RS resource group in the first RS resource set.

As one embodiment, the second communication device 450 comprises: a memory storing a computer-readable instruction program, wherein the computer-readable instruction program generates actions when executed by at least one processor, and the actions comprise: receiving a second information block; receiving first signaling; receiving first signaling; and receiving the first signal, the second information block indicates a first RS resource set, and the first RS resource set includes multiple RS resources; the first information block is used for determining at least one index; the first signaling is used for triggering the first signal, or the first signaling is used for triggering the first signal; the at least one index is used for determining at least one RS resource from only a first RS resource group in the first RS resource set, and the first RS resource group includes partial RS resources in the first RS resource set; and the offset between the reception of the first signaling and the reception of the first signal is less than a first threshold value, the first signal and a first RS resource are quasi co-located, and the first RS resource is one RS resource other than the first RS resource group in the first RS resource set.

As one embodiment, the first communication device 410 comprises: at least one processor and at least one memory, the at least one memory including computer program codes; and the at least one memory and the computer program codes are configured to be used together with the at least one processor. The first communication device 410 apparatus at least: sends a second information block; sends first signaling; sends first signaling; and sends the first signal, the second information block indicates a first RS resource set, and the first RS resource set includes multiple RS resources; the first information block is used for determining at least one index; the first signaling is used for scheduling the first signal, or the first signaling is used for triggering the first signal; the at least one index is used for determining at least one RS resource from only a first RS resource group in the first RS resource set, and the first RS resource group includes partial RS resources in the first RS resource set; the offset between the reception of the first signaling and the reception of the first signal is less than a first threshold value, the first signal and a first RS resource are quasi co-located; and the first RS resource is one RS resource other than the first RS resource group in the first RS resource set.

As one embodiment, the first communication device 410 comprises: a memory storing a computer-readable instruction program, wherein the computer-readable instruction program generates actions when executed by at least one processor, and the actions comprise: sending a second information block; sending first signaling; sending first signaling; and sending the first signal; the second information block indicates a first RS resource set, and the first RS resource set includes multiple RS resources; the first information block is used for determining at least one index; the first signaling is used for triggering the first signal, or the first signaling is used for triggering the first signal; the at least one index is used for determining at least one RS resource from only a first RS resource group in the first RS resource set, and the first RS resource group includes partial RS resources in the first RS resource set; and the offset between the reception of the first signaling and the reception of the first signal is less than a first threshold value, the first signal and a first RS resource are quasi co-located, and the first RS resource is one RS resource other than the first RS resource group in the first RS resource set.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first information block in the present application; and at least one of {the antenna 420, the transmitting device 418, the transmitting processor 416, the multi-antenna transmitting processor 471, the controller/processor 475, and the memory 476} is used for sending the first information block in the present application.

As one embodiment, at least one of {the antenna 452, the receiving device 454, the receiving processor 456, the multi-antenna receiving processor 458, the controller/processor 459, the memory 460, and the data source 467} is used for receiving the second information block in the present application; and at least one of {the antenna 420, the transmitting device 418, the transmitting processor 416, the multi-antenna transmitting processor 471, the controller/processor 475, and the memory 476} is used for sending the second information block in the present application.

As one embodiment, at least one of {the antenna 452, the receiving device 454, the receiving processor 456, the multi-antenna receiving processor 458, the controller/processor 459, the memory 460, and the data source 467} is used for receiving the first signaling in the present application; and at least one of {the antenna 420, the transmitting device 418, the transmitting processor 416, the multi-antenna transmitting processor 471, the controller/processor 475, and the memory 476} is used for sending the first signaling in the present application.

As one embodiment, at least one of {the antenna 452, the receiving device 454, the receiving processor 456, the multi-antenna receiving processor 458, the controller/processor 459, the memory 460, and the data source 467} is used for receiving the first signal in the present application; and at least one of {the antenna 420, the transmitting device 418, the transmitting processor 416, the multi-antenna transmitting processor 471, the controller/processor 475, and the memory 476} is used for sending the first signal in the present application.

As one embodiment, at least one of {the antenna 452, the receiving device 454, the receiving processor 456, the multi-antenna receiving processor 458, the controller/processor 459, the memory 460, and the data source 467} is used for receiving the first-type signaling in the present application; and at least one of {the antenna 420, the transmitting device 418, the transmitting processor 416, the multi-antenna transmitting processor 471, the controller/processor 475, and the memory 476} is used for sending the first-type signaling in the present application.

As one embodiment, at least one of {the antenna 452, the receiving device 454, the receiving processor 456, the multi-antenna receiving processor 458, the controller/processor 459, the memory 460, and the data source 467} is used for receiving the first-type signaling in the present application; and at least one of {the antenna 420, the transmitting device 418, the transmitting processor 416, the multi-antenna transmitting processor 471, the controller/processor 475, and the memory 476} is used for sending the first-type signal in the present application.

**Embodiment 5A**

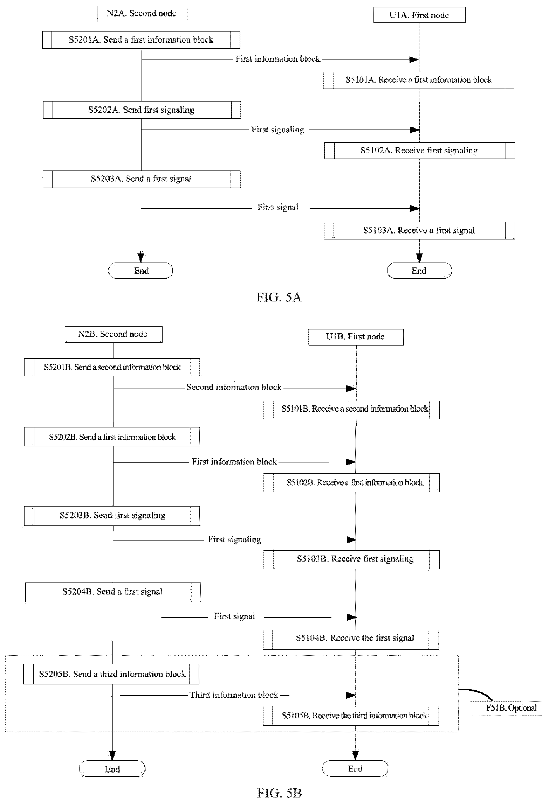

Embodiment 5A illustrates a flowchart of wireless transmission according to one embodiment of the present application, as shown in FIG. 5A. In FIG. 5A, a first node U1A and a second node N2A are two communication nodes transmitted through an air interface respectively.

For **the first node U1A,** in step S5101A, a first information block is received; in step S5102A, first signaling is received; in step S5103A a first signal is received;

for **the second node N2A,** in step S5201A, a first information block is sent; in step S5202, first signaling is sent; and in step S5203A a first signal is sent; in Embodiment 5, the first signaling is used for scheduling the first signal, or the first signaling is used for triggering the first signal; the offset between the reception of the first signaling and the reception of the first signal is less than a first threshold value, and the first signal and a first RS resource are quasi co-located; and the first information block is used for determining at least one index, and the first RS resource depends on the at least one index.

As one embodiment, the first node U1A is the first node in the present application.

As one embodiment, the second node N2A is the second node in the present application.

As one embodiment, an air interface between the second node N2A and the first node U1A comprises a wireless interface between a base station device and user equipment.

As one embodiment, an air interface between the second node N2A and the first node U1A comprises a wireless interface between a relay node device and user equipment.

As one embodiment, an air interface between the second node N2A and the first node U1A comprises a wireless interface between user equipment and user equipment.

As one embodiment, the first information block is transmitted in a PDSCH (Physical downlink shared channel).

As one embodiment, the first information block is transmitted in a PDCCH (Physical Downlink Control Channel).

As one embodiment, the first signaling is transmitted in a PDCCH.

As one embodiment, the first signal is transmitted in a PDSCH.

As one embodiment, the first signaling is used by the first node U1A for scheduling the first signal.

As one embodiment, the first signaling is used by the first node U1A for triggering the first signal.

As one embodiment, the first signaling is used by the first node U1A for scheduling the first signal, or the first signaling is used by the first node U1A for triggering the first signal.

As one embodiment, the first information block is used by the first node U1A for determining at least one index.

As one embodiment, the meaning of "a given CORESET is associated with the at least one index" includes: the given CORESET is associated with one index of the at least one index.

As one embodiment, the meaning of "a given CORESET is associated with the at least one index" includes:

As one embodiment, the meaning of "a given CORESET is associated with the at least one index" includes: a TCI state of the given CORESET is one TCI state indicated or identified by the at least one index.

As one embodiment, the meaning of "a given CORESET is associated with the at least one index" includes: a TCI state of the given CORESET is one TCI state of one or more TCI states indicated or identified by the at least one index.

As one embodiment, the meaning of "a given CORESET is associated with the at least one index" includes: an RS resource related to a QCL parameter of one TCI state indicated or identified by the at least one index and an RS resource related to a QCL parameter of a TCI state of the given CORESET are quasi co-located.

As one embodiment, the meaning of "a given CORESET is associated with the at least one index" includes: an RS resource related to a QCL parameter of one TCI state indicated or identified by the at least one index and an RS resource related to a QCL parameter of a TCI state of the given CORESET apply identical QCL parameters.

As one embodiment, the meaning of "a given CORESET is associated with the at least one index" includes: an RS resource related to a QCL parameter of one TCI state indicated or identified by the at least one index and an RS resource related to a QCL parameter of a TCI state of the given CORESET apply identical Spatial Rx parameters.

As one embodiment, the meaning of "a given CORESET is associated with the at least one index" includes: an RS resource related to a QCL parameter of a TCI state of one CORESET indicated or identified by the at least one index and an RS resource related to a QCL parameter of a TCI state of the given CORESET are quasi co-located.

As one embodiment, the meaning of "a given CORESET is associated with the at least one index" includes: a CORESET indicated or identified by the at least one index includes the given CORESET.

As one embodiment, the meaning of "a given CORESET is associated with the at least one index" includes: an RS resource related to a QCL parameter of a TCI state of one CORESET indicated or identified by the at least one index includes an RS resource related to a QCL parameter of a TCI state of the given CORESET.

As one embodiment, the meaning of "a given CORESET is associated with the at least one index" includes: an RS resource related to a QCL parameter of a TCI state of one CORESET indicated or identified by the at least one index and an RS resource related to a QCL parameter of a TCI state of the given CORESET apply identical QCL parameters.

As one embodiment, the meaning of "a given CORESET is associated with the at least one index" includes: an RS resource related to a QCL parameter of a TCI state of one CORESET indicated or identified by the at least one index and an RS resource related to a QCL parameter of a TCI state of the given CORESET apply identical Spatial Rx parameters.

As one embodiment, the meaning of "a given CORESET is associated with the at least one index" includes: one or one group of antenna port(s) indicated or identified by the at least one index and an RS resource related to a QCL parameter of a TCI state of the given CORESET are quasi co-located.

As one embodiment, the meaning of "a given CORESET is associated with the at least one index" includes: one or one group of antenna port(s) indicated or identified by the at least one index includes/include an antenna port of an RS resource related to a QCL parameter of a TCI state of the given CORESET.

As one embodiment, the meaning of "a given CORESET is associated with the at least one index" includes: one or one group of antenna port(s) indicated or identified by the at least one index and an RS resource related to a QCL parameter of a TCI state of the given CORESET apply identical QCL parameters.

As one embodiment, the meaning of "a given CORESET is associated with the at least one index" includes: one or one group of antenna port(s) indicated or identified by the at least one index and an RS resource related to a QCL parameter of a TCI state of the given CORESET apply identical Spatial Rx parameters.

As one embodiment, the meaning of "a given CORESET is associated with the at least one index" includes: one cell indicated or identified by the at least one index is the same as a cell where the given CORESET is located.

As one embodiment, the meaning of "a given CORESET is associated with the at least one index" includes: one TRP indicated or identified by the at least one index is the same as a TRP where the given CORESET is located.

As one embodiment, the meaning of "a given CORESET is associated with the at least one index" includes: one antenna panel indicated or identified by the at least one index is the same as an antenna panel where the given CORESET is located.

As one embodiment, the given CORESET is one CORESET.

As one embodiment, the given CORESET is the first CORESET.

## Embodiment 5B

Embodiment 5B illustrates a flowchart of wireless transmission according to one embodiment of the present application, as shown in FIG. 5B. In FIG. 5B, a first node U1B and a second node N2B are two communication nodes transmitted through an air interface respectively. In FIG. 5B, the steps in block F51B are optional.

For **the first node U1B,** in step S5101B, a second information block is received; in step S5102B, a first information block is received; in step S5103B, first signaling is received; in step S5104B, a first signal is received; in step S5105B, a third information block is received;

for **the second node N2B,** in step S5201B, a second information block is sent; in step S5202B, a first information block is sent; in step S5203B, first signaling is sent; in step S5204B, a first signal is sent; in step S5205B, a third information block is sent; in Embodiment 5B, the second information block indicates a first RS resource set, and the first RS resource set includes multiple RS resources; the first information block is used for determining at least one index; the first signaling is used for triggering the first signal, or the first signaling is used for triggering the first signal; the at least one index is used for determining at least one RS resource from only a first RS resource group in the first RS resource set, and the first RS resource group includes partial RS resources in the first RS resource set; the offset between the reception of the first signaling and the reception of the first signal is less than a first threshold value, the first signal and a first RS resource are quasi co-located, and the first RS resource is one RS resource other than the first RS resource group in the first RS resource set; and the third information block is carried by a MAC CE, the third information block is used for indicating a TCI state to which each TCI codepoint of multiple TCI codepoints is mapped, and each TCI codepoint of the multiple TCI codepoints is mapped to at least one TCI state.

As one embodiment, the first node U1 is the first node in the present application.

As one embodiment, the second node N2 is the second node in the present application.

As one embodiment, an air interface between the second node N2 and the first node U1 comprises a wireless interface between a base station device and user equipment.

As one embodiment, an air interface between the second node N2 and the first node U1 comprises a wireless interface between a relay node device and user equipment.

As one embodiment, an air interface between the second node N2 and the first node U1 comprises a wireless interface between user equipment and user equipment.

As one embodiment, the first information block is transmitted in a PDSCH (Physical downlink shared channel).

As one embodiment, the first information block is transmitted in a PDCCH (Physical Downlink Control Channel).

As one embodiment, the first signaling is transmitted in a PDCCH.

As one embodiment, the first signal is transmitted in a PDSCH.

As one embodiment, the third information block is transmitted in a PDSCH.

As one embodiment, the first information block is used by the first node U1 for determining at least one index.

As one embodiment, the first signaling is used by the first node U1 for scheduling the first signal.

As one embodiment, the first signaling is used by the first node U1 for triggering the first signal.

As one embodiment, the first signaling is used by the first node U1 for scheduling the first signal, or the first signaling is used by the first node U1 for triggering the first signal.

As one embodiment, the at least one index is used by the first node U1 for determining at least one RS resource from only the first RS resource group in the first RS resource set.

As one embodiment, a step in block F51B of FIG. 5B exists, and the above method used in the first node U1 for wireless communication comprises: receiving a third information block, wherein the third information block is carried by a MAC CE, the third information block is used for indicating a TCI state to which each TCI codepoint of multiple TCI codepoints is mapped, and each TCI codepoint of the multiple TCI codepoints is mapped to at least one TCI state.

As one embodiment, a step in block F51B of FIG. 5B exists, and the above method used in the second node N2 for wireless communication comprises: sending a third information block, wherein the third information block is carried by a MAC CE, the third information block is used for indicating a TCI state to which each TCI codepoint of multiple TCI codepoints is mapped, and each TCI codepoint of the multiple TCI codepoints is mapped to at least one TCI state.

**Embodiment 6A**

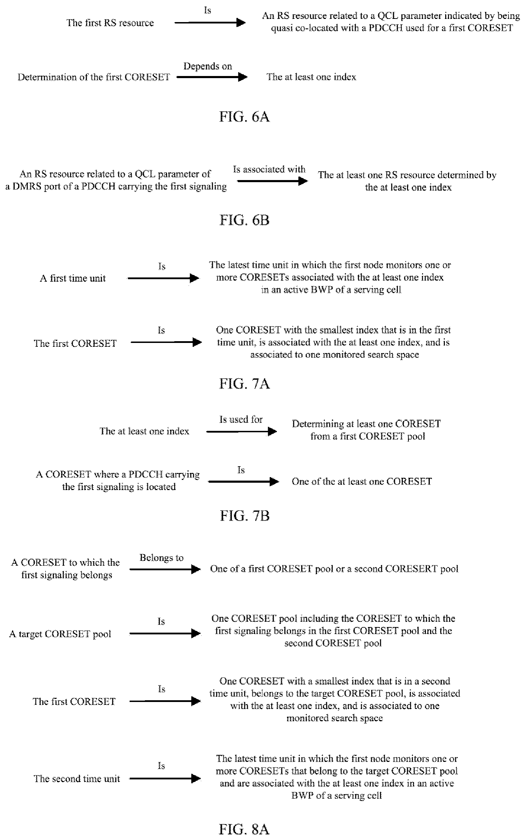

Embodiment 6A illustrates a schematic diagram of a first RS resource according to one embodiment of the present application, as shown in FIG. 6A.

In Embodiment 6A, the first RS resource is an RS resource related to a QCL parameter indicated by being quasi co-located with a PDCCH used for a first CORESET, and determination of the first CORESET depends on the at least one index.

As one embodiment, an RS resource related to a QCL parameter indicated by being quasi co-located with a PDCCH used for the first CORESET is indicated by a TCI state of the first CORESET.

As one embodiment, an RS resource related to a QCL parameter indicated by being quasi co-located with a PDCCH used for the first CORESET is used for determining QCL parameters received by a DMRS of a PDCCH of the first CORESET.

As one embodiment, the reception of an RS resource related to a QCL parameter indicated by being quasi co-located with a PDCCH used for the first CORESET and the reception of a DMRS of a PDCCH of the first CORESET apply identical QCL parameters.

As one embodiment, the first RS resource is used for determining a QCL parameter received by a DMRS of a PDCCH of the first CORESET.

As one embodiment, the reception of the first RS resource and the reception of a DMRS of a PDCCH of the first CORESET apply identical QCL parameters.

As one embodiment, a TCI state of the first CORESET indicates multiple RS resources, the multiple RS resources are respectively related to different types of QCL parameters, and the first RS resource is one of the multiple RS resources.

As one embodiment, a TCI state of the first CORESET indicates only one RS resource, and the one RS resource is the only one RS resource.

As one embodiment, a TCI state of the first CORESET indicates at least one RS resource, and the first RS resource is one of the at least one RS resource.

As one embodiment, a TCI state of the first CORESET indicates multiple RS resources, the multiple RS resources are respectively related to different types of QCL parameters, and the first RS resource is one RS resource of QCL parameters with a corresponding type of QCL-TypeD in the multiple RS resources.

As one embodiment, an RS resource related to a QCL parameter indicated by being quasi co-located with a PDCCH used for a first CORESET is indicated by higher-layer signaling.

As one embodiment, an RS resource related to a QCL parameter indicated by being quasi co-located with a PDCCH used for a first CORESET is indicated by RRC signaling or a MAC CE.

As one embodiment, an RS resource related to a QCL parameter indicated by being quasi co-located with a PDCCH used for a first CORESET corresponds to QCL-TypeD.

As one embodiment, the meaning of "determination of the first CORESET depends on the at least one index" includes: the first CORESET is associated with the at least one index.

As one embodiment, the meaning of "determination of the first CORESET depends on the at least one index" includes: a TCI state of the first CORESET is one TCI state indicated or identified by the at least one index.

As one embodiment, the meaning of "determination of the first CORESET depends on the at least one index" includes: a TCI state of the first CORESET is one TCI state of one or more TCI states indicated or identified by the at least one index.

As one embodiment, the meaning of "determination of the first CORESET depends on the at least one index" includes: an RS resource related to a QCL parameter of one TCI state indicated or identified by the at least one index and an RS resource related to a QCL parameter of a TCI state of the first CORESET are quasi co-located.

As one embodiment, the meaning of "determination of the first CORESET depends on the at least one index" includes: an RS resource related to a QCL parameter of one TCI state indicated or identified by the at least one index and an RS resource related to a QCL parameter of a TCI state of the first CORESET apply identical QCL parameters.

As one embodiment, the meaning of "determination of the first CORESET depends on the at least one index" includes: an RS resource related to a QCL parameter of one TCI state indicated or identified by the at least one index and an RS resource related to a QCL parameter of a TCI state of the first CORESET apply identical Spatial Rx parameters.

As one embodiment, the meaning of "determination of the first CORESET depends on the at least one index" includes: an RS resource related to a QCL parameter of a TCI state of one CORESET indicated or identified by the at least one index and an RS resource related to a QCL parameter of a TCI state of the first CORESET are quasi co-located.

As one embodiment, the meaning of "determination of the first CORESET depends on the at least one index" includes: a CORESET indicated or identified by the at least one index includes the first CORESET.

As one embodiment, the meaning of "determination of the first CORESET depends on the at least one index" includes: an RS resource related to a QCL parameter of a TCI state of one CORESET indicated or identified by the at least one index includes an RS resource related to a QCL parameter of a TCI state of the first CORESET.

As one embodiment, the meaning of "determination of the first CORESET depends on the at least one index" includes: an RS resource related to a QCL parameter of a TCI state of one CORESET indicated or identified by the at least one index and an RS resource related to a QCL parameter of a TCI state of the first CORESET apply identical QCL parameters.

As one embodiment, the meaning of "determination of the first CORESET depends on the at least one index" includes: an RS resource related to a QCL parameter of a TCI state of one CORESET indicated or identified by the at least one index and an RS resource related to a QCL parameter of a TCI state of the first CORESET apply identical Spatial Rx parameters.

As one embodiment, the meaning of "determination of the first CORESET depends on the at least one index" includes: one or one group of antenna port(s) indicated or identified by the at least one index and an RS resource related to a QCL parameter of a TCI state of the first CORESET are quasi co-located.

As one embodiment, the meaning of "determination of the first CORESET depends on the at least one index" includes: one or one group of antenna port(s) indicated or identified by the at least one index includes/include an antenna port of an RS resource related to a QCL parameter of a TCI state of the first CORESET.

As one embodiment, the meaning of "determination of the first CORESET depends on the at least one index" includes: one or one group of antenna port(s) indicated or identified by the at least one index and an RS resource related to a QCL parameter of a TCI state of the first CORESET apply identical QCL parameters.

As one embodiment, the meaning of "determination of the first CORESET depends on the at least one index" includes: one or one group of antenna port(s) indicated or identified by the at least one index and an RS resource related to a QCL parameter of a TCI state of the first CORESET apply identical Spatial Rx parameters.

As one embodiment, the meaning of "determination of the first CORESET depends on the at least one index" includes: one cell indicated or identified by the at least one index is the same as a cell where the first CORESET is located.

As one embodiment, the meaning of "determination of the first CORESET depends on the at least one index" includes: one TRP indicated or identified by the at least one index is the same as a TRP where the first CORESET is located.

As one embodiment, the meaning of "determination of the first CORESET depends on the at least one index" includes: one antenna panel indicated or identified by the at least one index is the same as an antenna panel where the first CORESET is located.

## Embodiment 6B

Embodiment 6B illustrates a schematic diagram of a QCL parameter of a DMRS port of a PDCCH carrying the first signaling according to one embodiment of the present application, as shown in FIG. 6B.

In Embodiment 6B, an RS resource related to a QCL parameter of a DMRS port of a PDCCH carrying the first signaling is associated with the at least one RS resource determined by the at least one index.

As one embodiment, the meaning of "an RS resource related to a QCL parameter of a DMRS port of a PDCCH carrying the first signaling is associated with the at least one RS resource determined by the at least one index" includes: the RS resource related to a QCL parameter of a DMRS port of a PDCCH carrying the first signaling belongs to the at least one RS resource determined by the at least one index.

As one embodiment, the meaning of "an RS resource related to a QCL parameter of a DMRS port of a PDCCH carrying the first signaling is associated with the at least one RS resource determined by the at least one index" includes: the RS resource related to a QCL parameter of a DMRS port of a PDCCH carrying the first signaling and the at least one RS resource determined by the at least one index are quasi co-located.

As one embodiment, the meaning of "an RS resource related to a QCL parameter of a DMRS port of a PDCCH carrying the first signaling is associated with the at least one RS resource determined by the at least one index" includes: the RS resource related to a QCL parameter of a DMRS port of a PDCCH carrying the first signaling and the at least one RS resource determined by the at least one index are both quasi co-located with one identical RS resource.

As one embodiment, the meaning of "an RS resource related to a QCL parameter of a DMRS port of a PDCCH carrying the first signaling is associated with the at least one RS resource determined by the at least one index" includes: the RS resource related to a QCL parameter of a DMRS port of a PDCCH carrying the first signaling and one RS resource of the at least one RS resource determined by the at least one index are both quasi co-located with one identical RS resource.

## Embodiment 7A

Embodiment 7A illustrates a schematic diagram of a first time unit and a first CORESET according to one embodiment of the present application, as shown in FIG. 7A.

In Embodiment 7A, the first time unit is the latest time unit in which the first node monitors one or more CORESETs associated with the at least one index in an active BWP of a serving cell; and the first CORESET is one CORESET with the smallest index, that is in the first time unit, is associated with the at least one index, and is associated to one monitored search space.

As one embodiment, the latest time unit is the latest time unit not later than a time unit at which the first signal is located.

As one embodiment, the latest time unit is the latest time unit earlier than a time unit at which the first signal is located.

As one embodiment, the first time unit satisfies: the offset from the reception of the first signal is less than or equal to a second threshold value.

As one embodiment, the first time unit satisfies: the offset from a time unit at which the first signal is located is less than or equal to a second threshold value.

As one embodiment, the second threshold value is a non-negative real number.

As one embodiment, the second threshold value is a positive real number.

As one embodiment, the second threshold value is configurable.

As one embodiment, the second threshold value is reported by the first node.

As one embodiment, the second threshold value is a time length of a positive integer number of symbols.

As one embodiment, the unit of the second threshold value is symbol.

As one embodiment, the unit of the second threshold value is millisecond.

As one embodiment, one time unit is one time slot.

As one embodiment, one time unit is one sub-frame.

As one embodiment, one time unit comprises partial symbols in one time slot.

As one embodiment, one time unit comprises at least one symbol.

As one embodiment, one time unit comprises multiple consecutive symbols.

As one embodiment, the first time unit is one time slot.

As one embodiment, the first time unit is one sub-frame.

As one embodiment, the first time unit comprises partial symbols in one time slot.

As one embodiment, the first time unit comprises at least one symbol.

As one embodiment, the first time unit comprises multiple consecutive symbols.

## Embodiment 7B

Embodiment 7B illustrates a schematic diagram of a CORESET where a PDCCH carrying the first signaling is located according to one embodiment of the present application, as shown in FIG. 7B.

In Embodiment 7B, the at least one index is used for determining at least one CORESET from a first CORESET pool, and a CORESET where a PDCCH carrying the first signaling is located is one of the at least one CORESET.

As one embodiment, the at least one CORESET comprises one or more CORESETs in the first CORESET pool that satisfies/satisfy "an RS resource indicated by its TCI state is associated with the first RS resource group".

As one embodiment, the meaning of "one RS resource is associated with the first RS resource group" includes: the one RS resource belongs to the first RS resource group.

As one embodiment, the meaning of "one RS resource is associated with the first RS resource group" includes: the one RS resource and one RS resource in the first RS resource group are quasi co-located.

As one embodiment, the at least one CORESET comprises one or more CORESETs in the first CORESET pool that satisfies/satisfy "an RS resource indicated by its TCI state is associated with the at least one RS resource determined by the at least one index.

As one embodiment, the meaning of "one RS resource is associated with the at least one RS resource determined by the at least one index" includes: the one RS resource belongs to the at least one RS resource determined by the at least one index.

As one embodiment, the meaning of "one RS resource is associated with the at least one RS resource determined by the at least one index" includes: the one RS resource and the at least one RS resource determined by the at least one index are quasi co-located.

As one embodiment, the meaning of "one RS resource is associated with the at least one RS resource determined by the at least one index" includes: the one RS resource and one RS resource of the at least one RS resource determined by the at least one index are quasi co-located.

As one embodiment, the first RS resource group includes RS resources indicated by a TCI state of the first CORESET pool.

As one embodiment, the at least one index is used for indicating at least one CORESET from a first CORESET pool.

As one embodiment, the at least one index is used for indicating or identifying the at least one CORESET in the first CORESET pool.

As one embodiment, the at least one RS resource determined by the at least one index includes one or more RS resources in the first RS resource group that are associated with an RS resource indicated by a TCI state of the at least one CORESET.

As one embodiment, the at least one RS resource determined by the at least one index includes one or more RS resources in the first RS resource group that are associated with an RS resource indicated by a TCI state of one CORESET of the at least one CORESET.

As one embodiment, an RS resource indicated by a TCI state of one CORESET is an RS resource related to a QCL parameter of the TCI state of the one CORESET.

As one embodiment, an RS resource indicated by a TCI state of one CORESET is an RS resource related to a QCL parameter indicated by being quasi co-located with a PDCCH used for the one CORESET.

## Embodiment 8A

Embodiment 8A illustrates a schematic diagram of a second time unit and a first CORESET according to one embodiment of the present application, as shown in FIG. 8A.

In Embodiment 8A, a CORESET to which the first signaling belongs belongs to one of a first CORESERT pool or a second CORESERT pool, a target CORESET pool is one CORESET pool including the CORESET to which the first signaling belongs in the first CORESET pool and the second CORESET pool; and the first CORESET is one CORESET with the smallest index, that belongs to the target CORESET pool in a second time unit, is associated with the at least one index, and is associated to one monitored search space, and the second time unit is the latest time unit in which the first node monitors one or more CORESETs that belongs/belong to the target CORESET pool and is/are associated with the at least one index in an active BWP of a serving cell.

As one embodiment, the first CORESERT pool comprises at least one CORESET, and the second CORESERT pool comprises at least one CORESET.

As one embodiment, the first CORESERT pool and the second CORESERT pool correspond to different *CoresetPoolIndexes.*

As one embodiment, the first CORESERT pool and the second CORESERT pool are identified or indicated by different *CoresetPoolIndexes.*

As one embodiment, an index of the first CORESERT pool and an index of the second CORESERT pool are different *CoresetPoolIndexes.*

As one embodiment, the second time unit is one time slot.

As one embodiment, the second time unit is one sub-frame.

As one embodiment, the second time unit comprises partial symbols in one time slot.

As one embodiment, the second time unit comprises at least one symbol.

As one embodiment, the second time unit comprises multiple consecutive symbols.

As one embodiment, the second time unit satisfies: the offset from the reception of the first signal is less than or equal to a third threshold value.

As one embodiment, the second time unit satisfies: the offset from a time unit where the first signal is located is less than or equal to a third threshold value.

As one embodiment, the third threshold value is a non-negative real number.

As one embodiment, the third threshold value is a positive real number.

As one embodiment, the third threshold value is configurable.

As one embodiment, the third threshold value is reported by the first node.

As one embodiment, the third threshold value is a time length of a positive integer number of symbols.

As one embodiment, the unit of the third threshold value is symbol.

As one embodiment, the unit of the third threshold value is millisecond.

As one embodiment, the second threshold value is equal to the third threshold value.

As one embodiment, the second threshold value and the third threshold value are the same.

As one embodiment, the second threshold value is not equal to the third threshold value.

As one embodiment, the second threshold value and the third threshold value are not the same.

## Embodiment 8B

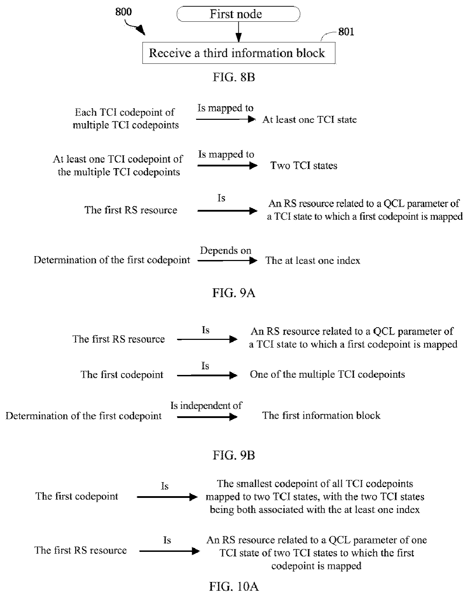

Embodiment 8B illustrates a schematic diagram of a third information block according to one embodiment of the present application, as shown in FIG. 8B.

In Embodiment 8B, the first receiver receives a third information block; and the third information block is carried by a MAC CE, the third information block is used for indicating a TCI state to which each TCI codepoint of multiple TCI codepoints is mapped, and each TCI codepoint of the multiple TCI codepoints is mapped to at least one TCI state.

As one embodiment, the third information block is carried by a MAC CE.

As one embodiment, the multiple TCI codepoints are codepoints of a DCI Transmission Configuration Indication field.

As one embodiment, the number of TCI codepoints included in the multiple TCI codepoints depends on higher-layer parameters tci-PresentInDCI or tci-PresentDCI-1-2.

As one embodiment, a name of a MAC CE carrying the third information block includes TCI States Activation/Deactivation for UE-specific PDSCH MAC CE.

As one embodiment, a name of a MAC CE carrying the third information block includes UE-specific PDSCH MAC CE.

As one embodiment, a name of a MAC CE carrying the third information block includes Enhanced TCI States Activation/Deactivation for UE-specific PDSCH MAC CE.

As one embodiment, the specific definition of TCI States Activation/Deactivation for UE-specific PDSCH MAC CE is shown in Chapter 6.1.3 of 3GPP TS38.321.

As one embodiment, the specific definition of Enhanced TCI States Activation/Deactivation for UE-specific PDSCH MAC CE is shown in Chapter 6.1.3 of 3GPP TS38.321.

As one embodiment, the multiple TCI codepoints are represented by 1, 2 or 3 bits.

As one embodiment, the number of TCI codepoints included in the multiple TCI codepoints belongs to {1, 2, ..., 8}.

As one embodiment, any TCI state of the at least one TCI state is used for the downlink.

As one embodiment, in the at least one TCI state, there is one TCI state that is simultaneously used for the uplink and downlink.

As one embodiment, in the at least one TCI state, there is at least one TCI state that is only used for the downlink.

As one embodiment, each TCI codepoint of the multiple TCI codepoints is mapped to one or two TCI state(s).

As one embodiment, each TCI codepoint of the multiple TCI codepoints is mapped to one or more TCI states.

As one embodiment, each TCI codepoint of the multiple TCI codepoints is mapped to only one TCI state.

As one embodiment, at least one TCI codepoint of the multiple TCI codepoints is mapped to two TCI states.

As one embodiment, in the multiple TCI codepoints, there is one TCI codepoint that is mapped to at least one TCI state.

As one embodiment, in the multiple TCI codepoints, there is one TCI codepoint that is mapped to multiple TCI states.

As one embodiment, in the multiple TCI codepoints, there is one TCI codepoint that is mapped to three TCI states.

As one embodiment, in the multiple TCI codepoints, there is one TCI codepoint that is mapped to four TCI states.

As one embodiment, the number of TCI states to which each TCI codepoint of the multiple TCI codepoints is mapped is different.

As one embodiment, the number of TCI states to which each TCI codepoint of the multiple TCI codepoints is mapped is the same.

**Embodiment 9A**

Embodiment 9A illustrates a schematic diagram of a first RS resource according to another embodiment of the present application, as shown in FIG. 9A.

In Embodiment 9A, each TCI codepoint of multiple TCI codepoints is mapped to at least one TCI state, and at least one TCI codepoint of the multiple TCI codepoints is mapped to two TCI states; and the first RS resource is an RS resource related to a QCL parameter of a TCI state to which a first codepoint is mapped, and determination of the first codepoint depends on the at least one index.

As one embodiment, the first node receives a second information block, and the second information block indicates one or more TCI states to which each TCI codepoint of the multiple TCI codepoints is mapped.

As one embodiment, the second information block is carried by RRC signaling.

As one embodiment, the second information block is carried by MA CE signaling.

As one embodiment, the second information block is carried by a MAC CE, and a name of the MAC CE carrying the second information block includes TCI States Activation/Deactivation for UE-specific PDSCH MAC CE.

As one embodiment, the second information block is carried by a MAC CE, and a name of the MAC CE carrying the second information block includes UE-specific PDSCH MAC CE.

As one embodiment, the second information block is carried by a MAC CE, and a name of the MAC CE carrying the second information block includes Enhanced TCI States Activation/Deactivation for UE-specific PDSCH MAC CE.

As one embodiment, the specific definition of TCI States Activation/Deactivation for UE-specific PDSCH MAC CE is shown in Chapter 6.1.3 of 3GPP TS38.321.

As one embodiment, the specific definition of Enhanced TCI States Activation/Deactivation for UE-specific PDSCH MAC CE is shown in Chapter 6.1.3 of 3GPP TS38.321.

As one embodiment, the first RS resource is an RS resource related to a QCL parameter of a TCI state to which the first codepoint is mapped.

As one embodiment, the first RS resource is an RS resource of corresponding QCL-TypeD indicated by a TCI state to which the first codepoint is mapped.

As one embodiment, a first field in one DCI format includes the multiple TCI codepoints.

As one embodiment, the first signaling includes a first field, and the first field includes the multiple TCI codepoints.

As one embodiment, the first signaling does not include a first field, and the first field includes the multiple TCI codepoints.

As one embodiment, one TCI codepoint is composed of a value of one bit or a value of one bit string.

As one embodiment, the multiple TCI codepoints are respectively composed of different values of one bit or one bit string.

As one embodiment, the first field includes one bit or one bit string, and one TCI codepoint is composed of a value of the one bit or one bit string.

As one embodiment, the first field includes one bit or one bit string, and the multiple TCI codepoints are respectively composed of different values of the one bit or one bit string.

As one embodiment, the first codepoint is one TCI codepoint of all TCI codepoints mapped to two TCI states, with the two TCI states being both associated with the at least one index.

As one embodiment, the first codepoint is one TCI codepoint of all TCI codepoints in which there is one TCI state associated with the at least one index in at least one TCI state to which the first codepoint is mapped.

### Embodiment 9B

Embodiment 9B illustrates a schematic diagram of a first RS resource according to one embodiment of the present application, as shown in FIG. 9B.

In Embodiment 9B, the first RS resource is an RS resource related to a QCL parameter of a TCI state to which a first codepoint is mapped, the first codepoint is one of the multiple TCI codepoints, and determination of the first codepoint is independent of the first information block.

As one embodiment, determination of the first codepoint in the multiple TCI codepoints is independent of the first information block.

As one embodiment, the first RS resource set includes an RS resource related to a QCL parameter of a TCI state to which the multiple TCI codepoints are mapped, and the first RS resource group includes an RS resource related to a QCL parameter of a TCI state to which partial TCI codepoints of the multiple TCI codepoints are mapped.

As one embodiment, determination of the first RS resource is independent of the multiple TCI codepoints.

As one embodiment, the meaning of "determination of the first codepoint is independent of the first information block" includes: the first codepoint is the smallest TCI codepoint of the multiple TCI codepoints.

As one embodiment, the meaning of "determination of the first codepoint is independent of the first information block" includes: the first codepoint is one fixed TCI codepoint of the multiple TCI codepoints.

As one embodiment, the meaning of "determination of the first codepoint is independent of the first information block" includes: the first codepoint is the TCI codepoint of the multiple TCI codepoints being configured by higher-layer signaling.

As one embodiment, the meaning of "determination of the first codepoint is independent of the first information block" includes: the first codepoint is the TCI codepoint of the multiple TCI codepoints being independent of the first information block.

As one embodiment, the meaning of "determination of the first codepoint is independent of the first information block" includes: the first codepoint is the TCI codepoint of the multiple TCI codepoints being independent of the at least one index determined by the first information block.

### Embodiment 10A

Embodiment 10A illustrates a schematic diagram of a first codepoint and a first RS resource according to one embodiment of the present application, as shown in FIG. 10A.

In Embodiment 10A, the first codepoint is the smallest codepoint of all TCI codepoints mapped to two TCI states, with the two TCI states being both associated with the at least one index; and the first RS resource is an RS resource related to a QCL parameter of one TCI state of two TCI states to which the first codepoint is mapped.

As one embodiment, the first signal is also quasi co-located with a second RS resource, the first RS resource and the second RS resource are respectively RS resources related to a QCL parameter of two TCI states to which the first codepoint is mapped.

As one embodiment, the meaning of "a given TCI state is associated with the at least one index" includes: the given TCI state is associated with one index of the at least one index.

As one embodiment, the meaning of "a given TCI state is associated with the at least one index" includes: the given TCI state is one TCI state indicated or identified by at least one index.

As one embodiment, the meaning of "a given TCI state is associated with the at least one index" includes: the given TCI state is one TCI state of at least one TCI state indicated or identified by the at least one index.

As one embodiment, the meaning of "a given TCI state is associated with the at least one index" includes: an RS resource related to a QCL parameter of the given TCI state and an RS resource related to a QCL parameter of one TCI state indicated or identified by the at least one index are quasi co-located.

As one embodiment, the meaning of "a given TCI state is associated with the at least one index" includes: an RS resource related to a QCL parameter of one TCI state indicated or identified by the at least one index includes an RS resource related to a QCL parameter of the given TCI state.

As one embodiment, the meaning of "a given TCI state is associated with the at least one index" includes: an RS resource related to a QCL parameter of one TCI state indicated or identified by the at least one index and an RS resource related to a QCL parameter of the given TCI state apply identical QCL parameters.

As one embodiment, the meaning of "a given TCI state is associated with the at least one index" includes: an RS resource related to a QCL parameter of one TCI state indicated or identified by the at least one index and an RS resource related to a QCL parameter of the given TCI state apply identical Spatial Rx parameters.

As one embodiment, the meaning of "a given TCI state is associated with the at least one index" includes: the given TCI state is a TCI state of one CORESET indicated or identified by the at least one index.

As one embodiment, the meaning of "a given TCI state is associated with the at least one index" includes: a TCI state of at least one CORESET indicated or identified by the at least one index includes the given TCI state.

As one embodiment, the meaning of "a given TCI state is associated with the at least one index" includes: an RS resource related to a QCL parameter of a TCI state of one CORESET indicated or identified by the at least one index and an RS resource related to a QCL parameter of the given TCI state are quasi co-located.

As one embodiment, the meaning of "a given TCI state is associated with the at least one index" includes: an RS resource related to a QCL parameter of a TCI state of one CORESET indicated or identified by the at least one index includes an RS resource related to a QCL parameter of the given TCI state.

As one embodiment, the meaning of "a given TCI state is associated with the at least one index" includes: an RS resource related to a QCL parameter of a TCI state of one CORESET indicated or identified by the at least one index and an RS resource related to a QCL parameter of the given TCI state apply identical QCL parameters.

As one embodiment, the meaning of "a given TCI state is associated with the at least one index" includes: an RS resource related to a QCL parameter of a TCI state of one CORESET indicated or identified by the at least one index and an RS resource related to a QCL parameter of the given TCI state apply identical Spatial Rx parameters.

As one embodiment, the meaning of "a given TCI state is associated with the at least one index" includes: one or one group of antenna port(s) indicated or identified by the at least one index and an RS resource related to a QCL parameter of the given TCI state are quasi co-located.

As one embodiment, the meaning of "a given TCI state is associated with the at least one index" includes: one or one group of antenna port(s) indicated or identified by the at least one index includes an antenna port of an RS resource related to a QCL parameter of the given TCI state.

As one embodiment, the meaning of "a given TCI state is associated with the at least one index" includes: one or one group of antenna port(s) indicated or identified by the at least one index and an RS resource related to a QCL parameter of the given TCI state apply identical QCL parameters.

As one embodiment, the meaning of "a given TCI state is associated with the at least one index" includes: one or one group of antenna port(s) indicated or identified by the at least one index and an RS resource related to a QCL parameter of the given TCI state apply identical Spatial Rx parameters.

As one embodiment, the meaning of "a given TCI state is associated with the at least one index" includes: one cell indicated or identified by the at least one index is the same as a cell where an RS resource related to a QCL parameter of the given TCI state is located.

As one embodiment, the meaning of "a given TCI state is associated with the at least one index" includes: one TRP indicated or identified by the at least one index is the same as a TRP where an RS resource related to a QCL parameter of the given TCI state is located.

As one embodiment, the meaning of "a given TCI state is associated with the at least one index" includes: one antenna panel indicated or identified by the at least one index is the same as an antenna panel where an RS resource related to a QCL parameter of the given TCI state is located.

As one embodiment, the given TCI state is one TCI state.

As one embodiment, the given TCI state is one TCI state to which one TCI codepoint of the multiple TCI codepoints is mapped.

## Embodiment 10B

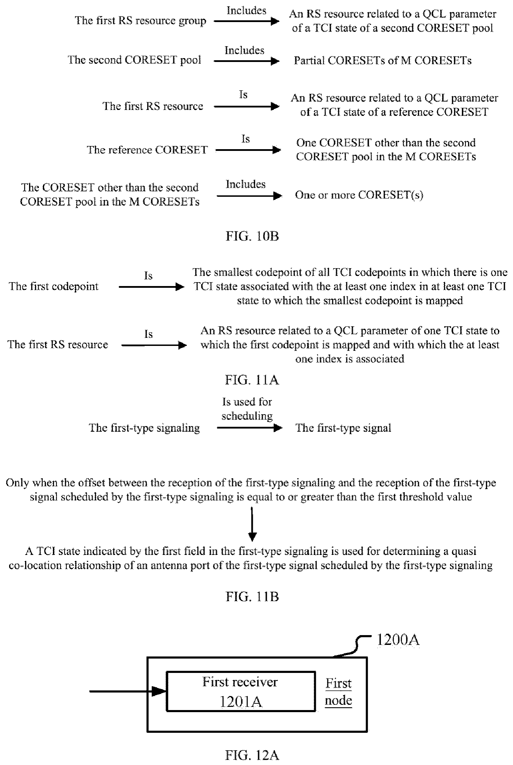

Embodiment 10B illustrates a schematic diagram of a first RS resource according to another embodiment of the present application, as shown in FIG. 10B.

In Embodiment 10B, the first RS resource group includes an RS resource related to a QCL parameter of a TCI state of the second CORESET pool, the second CORESET pool includes partial CORESETs of M CORESETs, and M is a positive integer greater than 1; and the first RS resource is an RS resource related to a QCL parameter of a TCI state of a reference CORESET, the reference CORESET is one CORESET other than the second CORESET pool in the M CORESETs, and a CORESET other than the second CORESET pool in the M CORESETs includes one or more CORESETs.

As one embodiment, the M CORESETs include only the second CORESET pool and the reference CORESET.

As one embodiment, the M CORESETs include at least one CORESET other than the second CORESET pool and the reference CORESET.

As one embodiment, the M CORESETs include multiple CORESETs other than the second CORESET pool and the reference CORESET.

As one embodiment, the first node determines the reference CORESET only from CORESETs other than the second CORESET pool in the M CORESETs.

As one embodiment, the reference CORESET is selected only from CORESETs other than the second CORESET pool in the M CORESETs.

As one embodiment, the M CORESETs are configured to one identical serving cell.

As one embodiment, the M CORESETs are configured by RRC signaling.

As one embodiment, an RS resource indicated by a TCI state of any CORESET other than the second CORESET pool in the M CORESETs and each RS resource in the first RS resource group are not quasi co-located.

As one embodiment, the second CORESET pool is configured to a UE-specific search space, and CORESETs other than the second CORESET pool in the M CORESETs are configured to a cell-common search space.

As one embodiment, a PCI associated with a TCI state of the second CORESET pool is different from a PCI associated with a TCI state of CORESETs other than the second CORESET pool in the M CORESETs.

### Embodiment 11A

Embodiment 11A illustrates a schematic diagram of a first codepoint and a first RS resource according to another embodiment of the present application, as shown in FIG. 11A.

In Embodiment 11A, the first codepoint is the smallest codepoint of all TCI codepoints in which there is one TCI state associated with the at least one index in the at least one TCI state to which the first codepoint is mapped; and the first RS resource is an RS resource related to a QCL parameter of one TCI state to which the first codepoint is mapped and with which the at least one index is associated.

As one embodiment, the first signal is only quasi co-located with the first RS resource.

As one embodiment, the first signal is also quasi co-located with at least one RS resource other than the first RS resource.

As one embodiment, the number of TCI states included in the at least one TCI state is equal to 2.

As one embodiment, the number of TCI states included in the at least one TCI state is equal to 3.

As one embodiment, the number of TCI states included in the at least one TCI state is equal to 4.

As one embodiment, the number of TCI states included in the at least one TCI state is 2, 3, or 4.

As one embodiment, the number of TCI states included in the at least one TCI state is a positive integer greater than 4.

As one embodiment, in the at least one TCI state, there is one TCI state that is activated.

As one embodiment, the meaning of "a given TCI state is associated with the at least one index" includes: the given TCI state is associated with one index of the at least one index.

As one embodiment, the meaning of "a given TCI state is associated with the at least one index" includes: the given TCI state is one TCI state indicated or identified by at least one index.

As one embodiment, the meaning of "a given TCI state is associated with the at least one index" includes: the given TCI state is one TCI state of at least one TCI state indicated or identified by the at least one index.

As one embodiment, the meaning of "a given TCI state is associated with the at least one index" includes: an RS resource related to a QCL parameter of the given TCI state and an RS resource related to a QCL parameter of one TCI state indicated or identified by the at least one index are quasi co-located.

As one embodiment, the meaning of "a given TCI state is associated with the at least one index" includes: an RS resource related to a QCL parameter of one TCI state indicated or identified by the at least one index includes an RS resource related to a QCL parameter of the given TCI state.

As one embodiment, the meaning of "a given TCI state is associated with the at least one index" includes: an RS resource related to a QCL parameter of one TCI state indicated or identified by the at least one index and an RS resource related to a QCL parameter of the given TCI state apply identical QCL parameters.

As one embodiment, the meaning of "a given TCI state is associated with the at least one index" includes: an RS resource related to a QCL parameter of one TCI state indicated or identified by the at least one index and an RS resource related to a QCL parameter of the given TCI state apply identical Spatial Rx parameters.

As one embodiment, the meaning of "a given TCI state is associated with the at least one index" includes: the given TCI state is a TCI state of one CORESET indicated or identified by the at least one index.

As one embodiment, the meaning of "a given TCI state is associated with the at least one index" includes: a TCI state of at least one CORESET indicated or identified by the at least one index includes the given TCI state.

As one embodiment, the meaning of "a given TCI state is associated with the at least one index" includes: an RS resource related to a QCL parameter of a TCI state of one CORESET indicated or identified by the at least one index and an RS resource related to a QCL parameter of the given TCI state are quasi co-located.

As one embodiment, the meaning of "a given TCI state is associated with the at least one index" includes: an RS resource related to a QCL parameter of a TCI state of one CORESET indicated or identified by the at least one index includes an RS resource related to a QCL parameter of the given TCI state.

As one embodiment, the meaning of "a given TCI state is associated with the at least one index" includes: an RS resource related to a QCL parameter of a TCI state of one CORESET indicated or identified by the at least one index and an RS resource related to a QCL parameter of the given TCI state apply identical QCL parameters.

As one embodiment, the meaning of "a given TCI state is associated with the at least one index" includes: an RS resource related to a QCL parameter of a TCI state of one CORESET indicated or identified by the at least one index and an RS resource related to a QCL parameter of the given TCI state apply identical Spatial Rx parameters.

As one embodiment, the meaning of "a given TCI state is associated with the at least one index" includes: one or one group of antenna port(s) indicated or identified by the at least one index and an RS resource related to a QCL parameter of the given TCI state are quasi co-located.

As one embodiment, the meaning of "a given TCI state is associated with the at least one index" includes: one or one group of antenna port(s) indicated or identified by the at least one index includes an antenna port of an RS resource related to a QCL parameter of the given TCI state.

As one embodiment, the meaning of "a given TCI state is associated with the at least one index" includes: one or one group of antenna port(s) indicated or identified by the at least one index and an RS resource related to a QCL parameter of the given TCI state apply identical QCL parameters.

As one embodiment, the meaning of "a given TCI state is associated with the at least one index" includes: one or one group of antenna port(s) indicated or identified by the at least one index and an RS resource related to a QCL parameter of the given TCI state apply identical Spatial Rx parameters.

As one embodiment, the meaning of "a given TCI state is associated with the at least one index" includes: one cell indicated or identified by the at least one index is the same as a cell where an RS resource related to a QCL parameter of the given TCI state is located.

As one embodiment, the meaning of "a given TCI state is associated with the at least one index" includes: one TRP indicated or identified by the at least one index is the same as a TRP where an RS resource related to a QCL parameter of the given TCI state is located.

As one embodiment, the meaning of "a given TCI state is associated with the at least one index" includes: one antenna panel indicated or identified by the at least one index is the same as an antenna panel where an RS resource related to a QCL parameter of the given TCI state is located.

As one embodiment, the given TCI state is one TCI state.

As one embodiment, the given TCI state is one TCI state to which one TCI codepoint of the multiple TCI codepoints is mapped.

**Embodiment 11B**

Embodiment 11B illustrates a schematic diagram of relationships among first-type signaling, a first-type signal, and a first threshold value according to one embodiment of the present application, as shown in FIG. 11B.

In Embodiment 11B, the first signaling is first-type signaling, the first signal is a first-type signal, the first-type signaling is used for scheduling the first-type signal, the first-type signaling is transmitted on a PDCCH, and the first-type signal is a PDSCH; and the first-type signaling includes a first field, the first field indicates at least one TCI state, and only when the offset between the reception of the first-type signaling and the reception of the first-type signal it is equal to or greater than the first threshold value, a TCI state indicated by the first field in the first-type signaling is used for determining a quasi co-location relationship of an antenna port of the first-type signal scheduled by the first-type signaling.

As one embodiment, the first-type signaling is physical layer signaling.

As one embodiment, the first-type signaling is DCI signaling.

As one embodiment, the first-type signaling is a DCI format 1_1 or 1_2.

As one embodiment, the first-type signaling is configured by RRC signaling.

As one embodiment, the first-type signaling is configured by IE ControlResourceSet.

As one embodiment, the first-type signaling is used for scheduling the first-type signal, and the scheduling information includes one or more of a time domain resource, a frequency domain resource, an MCS, a DMRS port, a HARQ process number, a RV (Redundancy version), an NDI (New Data Indicator), a TCI state, or an SRI (Sounding reference signal Resource Indicator).

As one embodiment, the first-type signal is a PDSCH.

As one embodiment, the first-type signal is an aperiodic CSI-RS.

As one embodiment, the first-type signal is a PDSCH or aperiodic CSI-RS.

As one embodiment, the at least one index is used for determining a CORESET where the first-type signaling is located.

As one embodiment, the at least one index is used for determining a TCI state of a CORESET where the first-type signaling is located.

As one embodiment, the at least one index is used for determining at least one TCI state from multiple TCI states, and a TCI state indicated by the first field in the first-type signaling belongs to the at least one TCI state.

As one sub-embodiment of the above embodiment, the meaning of "a TCI state indicated by the first field in the first-type signaling belongs to the at least one TCI state" includes: the first node expects that the TCI state indicated by the first field in the first-type signaling belongs to the at least one TCI state.

As one sub-embodiment of the above embodiment, the at least one index is used for indicating the at least one TCI state from the multiple TCI states.

As one sub-embodiment of the above embodiment, the at least one index is used for indicating or identifying the at least one TCI state in the multiple TCI states.

As one sub-embodiment of the above embodiment, the at least one TCI state includes a TCI state, in which an indicated RS resource is associated with the at least one RS resource determined by the at least one index, in the multiple TCI states.

As one sub-embodiment of the above embodiment, the at least one TCI state includes a TCI state, in which an indicated RS resource is associated with one RS resource of the at least one RS resource determined by the at least one index, in the multiple TCI states.

As one embodiment, the at least one index is used for determining at least one TCI codepoint from the multiple TCI codepoints.

As one embodiment, the at least one index is used for determining at least one TCI codepoint from the multiple TCI codepoints, and a TCI codepoint indicated by the first field in the first-type signaling belongs to the at least one TCI codepoint.

As one sub-embodiment of the above embodiment, the meaning of "a TCI codepoint indicated by the first field in the first-type signaling belongs to the at least one TCI codepoint" includes: the first node expects that the TCI codepoint indicated by the first field in the first-type signaling belongs to the at least one TCI codepoint.

As one embodiment, a CORESET where the first-type signaling is located is a CORESET used for carrying PDCCH transmission of the first-type signaling.

As one embodiment, the first field is a Transmission Configuration Indication (TCI) field.

As one embodiment, the first field includes a Transmission Configuration Indication (TCI) field.

As one embodiment, the first field includes all bits of a Transmission Configuration Indication (TCI) field.

As one embodiment, the first field includes partial bits of a Transmission Configuration Indication (TCI) field.

As one embodiment, the first field includes 1, 2, or 3 bits.

As one embodiment, the first field includes the multiple TCI codepoints.

As one embodiment, the number of TCI codepoints included in the first field belongs to {1, 2, ..., 8}.

As one embodiment, the first field includes 8 TCI codepoints.

As one embodiment, the first signaling does not include a first field, and the first field includes multiple TCI codepoints; and only when the offset between the reception of the first signaling and the reception of the first signal is equal to or greater than the first threshold value, a TCI state of a CORESET where the first-type signaling is located is used for determining that an antenna port of the scheduled first-type signal is quasi co-located.

Typically, the offset refers to: the offset in a time domain.

As one embodiment, "the offset between the reception of the first-type signaling and the reception of the first-type signal scheduled by the first-type signaling" is the offset between the last symbol of a PDCCH carrying the first-type signaling and the first symbol of the first-type signal.

As one embodiment, "the offset between the reception of the first-type signaling and the reception of the first-type signal scheduled by the first-type signaling" is the offset between the last symbol occupied by the first-type signaling and the first symbol of the first-type signal.

As one embodiment, "the offset between the reception of the first-type signaling and the reception of the first-type signal scheduled by the first-type signaling" is the offset between the first symbol occupied by the first-type signaling and the first symbol of the first-type signal.

As one embodiment, "the offset between the reception of the first-type signaling and the reception of the first-type signal scheduled by the first-type signaling" is the offset between an end moment of carrying the first-type signaling and a start moment of the first-type signal.

As one embodiment, "the offset between the reception of the first-type signaling and the reception of the first-type signal scheduled by the first-type signaling" is the offset between a start moment of the first-type signaling and a start moment of the first-type signal.

As one embodiment, one TCI codepoint is composed of a value of one bit or a value of one bit string.

As one embodiment, the multiple TCI codepoints are respectively composed of different values of one bit or one bit string.

As one embodiment, the first field includes one bit or one bit string, and one TCI codepoint is composed of a value of the one bit or one bit string.

As one embodiment, the first field includes one bit or one bit string, and the multiple TCI codepoints are respectively composed of different values of the one bit or one bit string.

As one embodiment, the quasi co-location relationship includes a QCL parameter.

As one embodiment, the quasi co-location relationship includes a Spatial Rx parameter.

As one embodiment, the quasi co-location relationship includes a QCL characteristic.

As one embodiment, the quasi co-location relationship includes an RS resource related to a QCL parameter.

As one embodiment, the quasi co-location relationship includes a quasi co-located RS resource.

## Embodiment 12A

Embodiment 12A illustrates a structural block diagram of a processing apparatus used in a first node device according to one embodiment of the present application, as shown in FIG. 12A. In FIG. 12A, a processing apparatus 1200A in the first node device comprises a first receiver 1201A.

The first receiver 1201A receives a first information block; receives first signaling; and receives a first signal,

in Embodiment 12A, the first signaling is used for scheduling the first signal, or the first signaling is used for triggering the first signal; the offset between the reception of the first signaling and the reception of the first signal is less than a first threshold value, and the first signal and a first RS resource are quasi co-located; and the first information block is used for determining at least one index, and the first RS resource depends on the at least one index.

As one embodiment, the first signaling is used for scheduling the first signal.

As one embodiment, the first signaling is used for triggering the first signal.

As one embodiment, the first RS resource is an RS resource related to a QCL parameter indicated by being quasi co-located with a PDCCH used for a first CORESET, and determination of the first CORESET depends on the at least one index.

As one embodiment, a first time unit is the latest time unit in which the first node monitors one or more CORESETs associated with the at least one index in an active BWP of a serving cell; and the first CORESET is one CORESET with the smallest index, that is in the first time unit, is associated with the at least one index, and is associated to one monitored search space.

As one embodiment, a CORESET to which the first signaling belongs belongs to one of a first CORESERT pool or a second CORESERT pool, a target CORESET pool is one CORESET pool including the CORESET to which the first signaling belongs in the first CORESET pool and the second CORESET pool; and the first CORESET is one CORESET with the smallest index, that belongs to the target CORESET pool in a second time unit, is associated with the at least one index, and is associated to one monitored search space, and the second time unit is the latest time unit in which the first node monitors one or more CORESETs that belong to the target CORESET pool and are associated with the at least one index in an active BWP of a serving cell.

As one embodiment, each TCI codepoint of the multiple TCI codepoints is mapped to at least one TCI state, and at least one TCI codepoint of the multiple TCI codepoints is mapped to two TCI states; and the first RS resource is an RS resource related to a QCL parameter of a TCI state to which a first codepoint is mapped, and determination of the first codepoint depends on the at least one index.

As one embodiment, the first codepoint is the smallest codepoint of all TCI codepoints mapped to two TCI states, with the two TCI states being both associated with the at least one index; and the first RS resource is an RS resource related to a QCL parameter of one TCI state of two TCI states to which the first codepoint is mapped.

As one embodiment, the first codepoint is the smallest codepoint of all TCI codepoints in which there is one TCI state associated with the at least one index in at least one TCI state to which the first codepoint is mapped; and the first RS resource is an RS resource related to a QCL parameter of one TCI state to which the first codepoint is mapped and with which the at least one index is associated.

As one embodiment, the first node device is user equipment.

As one embodiment, the first node device is a relay node device.

As one embodiment, the first receiver 1201A comprises at least one of {the antenna 452, the receiving device 454, the receiving processor 456, the multi-antenna receiving processor 458, the controller/processor 459, the memory 460, and the data source 467} in Embodiment 4.

## Embodiment 12B

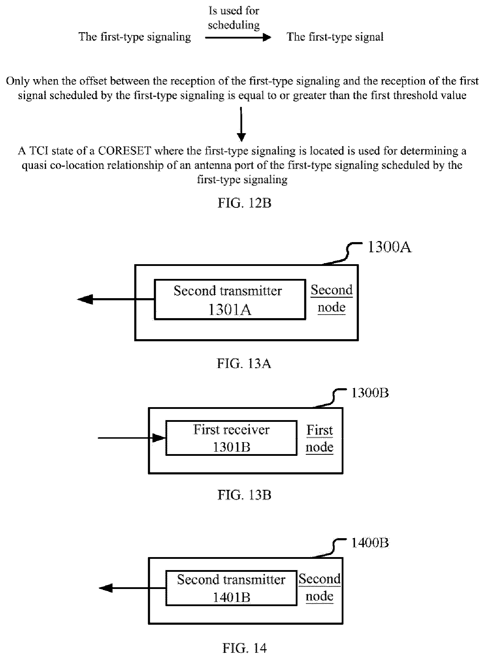

Embodiment 12B illustrates a schematic diagram of relationships among first-type signaling, a first-type signal, and a first threshold value according to another embodiment of the present application, as shown in FIG. 12B.

In Embodiment 12B, the first signaling is first-type signaling, the first signal is a first-type signal, the first-type signaling is used for scheduling the first-type signal, the first-type signaling is transmitted on a PDCCH, and the first-type signal is a PDSCH; and only when the offset between the reception of the first-type signaling and the reception of the first-type signal scheduled by the first-type signaling is equal to or greater than the first threshold value, a TCI state of a CORESET where the first-type signaling is located is used for determining a quasi co-location relationship of an antenna port of the first-type signal scheduled by the first-type signaling.

As one embodiment, "a TCI state of a CORESET where the first-type signaling is located" is a TCI state of a CORESET used for transmission of the first-type signaling.

As one embodiment, the meaning of "a CORESET where the first-type signaling is located" is: a frequency domain resource carrying the first-type signaling is on the CORESET.

As one embodiment, the meaning of "a CORESET where the first-type signaling is located" is: a frequency domain resource carrying the first-type signaling and the CORESET include identical PRBs (Physical Resource Blocks).

As one embodiment, the meaning of "a CORESET where the first-type signaling is located" is: the CORESET includes frequency domain resources carrying the first-type signaling.

As one embodiment, the meaning of "CORESET where the first-type signaling is located" is: the CORESET includes a PRB carrying the first-type signaling.

As one embodiment, a CORESET where the first-type signaling is located is in an active BWP of a serving cell where the first node is located.

As one embodiment, a Transmission Configuration Indication (TCI) field is not included in the first-type signaling.

As one embodiment, a Transmission Configuration Indication (TCI) field is not included in a PDCCH scheduling the first-type signal.

As one embodiment, a Transmission Configuration Indication (TCI) field is not included in a DCI scheduling the first-type signal.

As one embodiment, the first-type signaling is a DCI format 1_1 or 1_2.

As one embodiment, the first-type signaling is configured by RRC signaling.

As one embodiment, the first-type signaling is configured by IE ControlResourceSet.

As one embodiment, tci-PresentInDCI is not included in higher-layer parameters for configuring the first-type signaling.

As one embodiment, tci-PresentDCI-1-2 is not included in higher-layer parameters for configuring the first-type signaling.

As one embodiment, tci-PresentInDCI and tci-PresentDCI-1-2 are not included in higher-layer parameters for configuring the first-type signaling.

**Embodiment 13A**

Embodiment 13A illustrates a structural block diagram of a processing apparatus used in a second node device according to one embodiment of the present application, as shown in FIG. 13A. In FIG. 13A, a processing apparatus 1300A in the second node device comprises a second transmitter 1301A.

The second transmitter 1301A sends a first information block; sends first signaling; and sends a first signal,

in Embodiment 13A, the first signaling is used for scheduling the first signal, or the first signaling is used for triggering the first signal; the offset between the reception of the first signaling and the reception of the first signal is less than a first threshold value, and the first signal and a first RS resource are quasi co-located; and the first information block is used for determining at least one index, and the first RS resource depends on the at least one index.

As one embodiment, the first signaling is used for scheduling the first signal.

As one embodiment, the first signaling is used for triggering the first signal.

As one embodiment, the first RS resource is an RS resource related to a QCL parameter indicated by being quasi co-located with a PDCCH used for a first CORESET, and determination of the first CORESET depends on the at least one index.

As one embodiment, a first time unit is the latest time unit in which the first node monitors one or more CORESETs associated with the at least one index in an active BWP of a serving cell; and the first CORESET is one CORESET with the smallest index, that is in the first time unit, is associated with the at least one index, and is associated to one monitored search space.

As one embodiment, a CORESET to which the first signaling belongs belongs to one of a first CORESERT pool or a second CORESERT pool, and a target CORESET pool is one CORESET pool including the CORESET to which the first signaling belongs in the first CORESET pool and the second CORESET pool; and the first CORESET is one CORESET with the smallest index, that belongs to the target CORESET pool in a second time unit, is associated with the at least one index, and is associated to one monitored search space, and the second time unit is the latest time unit in which the first node monitors one or more CORESETs that belong to the target CORESET pool and are associated with the at least one index in an active BWP of a serving cell.

As one embodiment, each TCI codepoint of the multiple TCI codepoints is mapped to at least one TCI state, and at least one TCI codepoint of the multiple TCI codepoints is mapped to two TCI states; and the first RS resource is an RS resource related to a QCL parameter of a TCI state to which a first codepoint is mapped, and determination of the first codepoint depends on the at least one index.

As one embodiment, the first codepoint is the smallest codepoint of all TCI codepoints mapped to two TCI states, with the two TCI states being both associated with the at least one index; and the first RS resource is an RS resource related to a QCL parameter of one TCI state of two TCI states to which the first codepoint is mapped.

As one embodiment, the first codepoint is the smallest codepoint of all TCI codepoints in which there is one TCI state associated with the at least one index in at least one TCI state to which the first codepoint is mapped; and the first RS resource is an RS resource related to a QCL parameter of one TCI state to which the first codepoint is mapped and with which the at least one index is associated.

As one embodiment, the second node device is a base station device.

As one embodiment, the second node device is user equipment.

As one embodiment, the second node device is a relay node device.

As one embodiment, the second transmitter 1301A comprises at least one of {the antenna 420, the transmitting device 418, the transmitting processor 416, the multi-antenna transmitting processor 471, the controller/processor 475, and the memory 476} in Embodiment 4.

**Embodiment 13B**

Embodiment 13B illustrates a structural block diagram of a processing apparatus used in a first node device according to one embodiment of the present application, as shown in FIG. 13B. In FIG. 13B, the processing apparatus 1300B in the first node device includes a first receiver 1301B.

A first receiver 1301B receives a second information block; receives first signaling; receives first signaling; and receives the first signal,

in Embodiment 13B, the second information block indicates a first RS resource set, and the first RS resource set includes multiple RS resources; the first information block is used for determining at least one index; the first signaling is used for triggering the first signal, or the first signaling is used for triggering the first signal; the at least one index is used for determining at least one RS resource from only a first RS resource group in the first RS resource set, and the first RS resource group includes partial RS resources in the first RS resource set; and the offset between the reception of the first signaling and the reception of the first signal is less than a first threshold value, the first signal and a first RS resource are quasi co-located, and the first RS resource is one RS resource other than the first RS resource group in the first RS resource set.

As one embodiment, the first signaling is used for scheduling the first signal.

As one embodiment, the first signaling is used for triggering the first signal.

As one embodiment, an RS resource related to a QCL parameter of a DMRS port a PDCCH carrying the first signaling is associated with the at least one RS resource determined by the at least one index.

As one embodiment, the at least one index is used for determining at least one CORESET from a first CORESET pool, and a CORESET where a PDCCH carrying the first signaling is located is one of the at least one CORESET.

As one embodiment, the first receiver 1301B receives a third information block, wherein the third information block is carried by a MAC CE, the third information block is used for indicating a TCI state to which each TCI codepoint of multiple TCI codepoints is mapped, and each TCI codepoint of the multiple TCI codepoints is mapped to at least one TCI state.

As one embodiment, the first RS resource is an RS resource related to a QCL parameter of a TCI state to which a first codepoint is mapped, the first codepoint is one of the multiple TCI codepoints, and determination of the first codepoint is independent of the first information block.

As one embodiment, the first RS resource group includes an RS resource related to a QCL parameter of a TCI state of a second CORESET pool, the second CORESET pool includes partial CORESETs in M CORESETs, and M is a positive integer greater than 1; and the first RS resource is an RS resource related to a QCL parameter of a TCI state of a reference CORESET, the reference CORESET is one CORESET other than the second CORESET pool in the M CORESETs, and a CORESET other than the second CORESET pool in the M CORESETs includes one or more CORESETs.

As one embodiment, the first signaling is first-type signaling, the first signal is a first-type signal, the first-type signaling is used for scheduling the first-type signal, the first-type signaling is transmitted on a PDCCH, and the first-type signal is a PDSCH; the first-type signaling includes a first field, the first field indicates at least one TCI state, and only when the offset between the reception of the first-type signaling and the reception of the first-type signal scheduled by the first-type signaling is equal to or greater than the first threshold value, a TCI state indicated by the first field in the first-type signaling is used for determining a quasi co-location relationship of an antenna port of the first-type signal scheduled by the first-type signaling; and alternatively, only when the offset between the reception of the first-type signaling and the reception of the first-type signal scheduled by the first-type signaling is equal to or greater than the first threshold value, a TCI state of a CORESET where the first-type signaling is located is used for determining a quasi co-location relationship of an antenna port of the first-type signal scheduled by the first-type signaling.

As one embodiment, the first node device is user equipment.

As one embodiment, the first node device is a relay node device.

As one embodiment, the first receiver 1301B comprises at least one of {the antenna 452, the receiving device 454, the receiving processor 456, the multi-antenna receiving processor 458, the controller/processor 459, the memory 460, and the data source 467} in Embodiment 4.

**Embodiment 14**

Embodiment 14 illustrates a structural block diagram of a processing apparatus used in a second node device according to one embodiment of the present application, as shown in FIG. 14. In FIG. 14, a processing apparatus 1400B in the second node device comprises a second transmitter 1401B.

The second transmitter 1401B sends a second information block; sends first signaling; sends first signaling; and sends the first signal;

in Embodiment 14, the second information block indicates a first RS resource set, and the first RS resource set includes multiple RS resources; the first information block is used for determining at least one index; the first signaling is used for triggering the first signal, or the first signaling is used for triggering the first signal; the at least one index is used for determining at least one RS resource from only a first RS resource group in the first RS resource set, and the first RS resource group includes partial RS resources in the first RS resource set; and the offset between the reception of the first signaling and the reception of the first signal is less than a first threshold value, the first signal and a first RS resource are quasi co-located, and the first RS resource is one RS resource other than the first RS resource group in the first RS resource set.

As one embodiment, the first signaling is used for scheduling the first signal.

As one embodiment, the first signaling is used for triggering the first signal.

As one embodiment, an RS resource related to a QCL parameter of a DMRS port a PDCCH carrying the first signaling is associated with the at least one RS resource determined by the at least one index.

As one embodiment, the at least one index is used for determining at least one CORESET from a first CORESET pool, and a CORESET where a PDCCH carrying the first signaling is located is one of the at least one CORESET.

As one embodiment, the second transmitter 1401B sends a third information block, wherein the third information block is carried by a MAC CE, the third information block is used for indicating a TCI state to which each TCI codepoint of multiple TCI codepoints is mapped, and each TCI codepoint of the multiple TCI codepoints is mapped to at least one TCI state.

As one embodiment, the first RS resource is an RS resource related to a QCL parameter of a TCI state to which a first codepoint is mapped, the first codepoint is one of the multiple TCI codepoints, and determination of the first codepoint is independent of the first information block.

As one embodiment, the first RS resource group includes an RS resource related to a QCL parameter of a TCI state of a second CORESET pool, the second CORESET pool includes partial CORESETs in M CORESETs, and M is a positive integer greater than 1; and the first RS resource is an RS resource related to a QCL parameter of a TCI state of a reference CORESET, the reference CORESET is one CORESET other than the second CORESET pool in the M CORESETs, and a CORESET other than the second CORESET pool in the M CORESETs includes one or more CORESETs.

As one embodiment, the first signaling is first-type signaling, the first signal is a first-type signal, the first-type signaling is used for scheduling the first-type signaling, the first-type signaling is transmitted on a PDCCH, and the first-type signal is a PDSCH; the first-type signaling includes a first field, the first field indicates at least one TCI state, and only when the offset between the reception of the first-type signaling and the reception of the first-type signal scheduled by the first-type signaling is equal to or greater than the first threshold value, a TCI state indicated by the first field in the first-type signaling is used for determining a quasi co-location relationship of an antenna port of the first-type signal scheduled by the first-type signaling; and alternatively, only when the offset between the reception of the first-type signaling and the reception of the first-type signal scheduled by the first-type signaling is equal to or greater than the first threshold value, a TCI state of a CORESET where the first-type signaling is located is used for determining a quasi co-location relationship of an antenna port of the first-type signal scheduled by the first-type signaling.

As one embodiment, the second node device is a base station device.

As one embodiment, the second node device is user equipment.

As one embodiment, the second node device is a relay node device.

As one embodiment, the second transmitter 1401B comprises at least one of {the antenna 420, the transmitting device 418, the transmitting processor 416, the multi-antenna transmitting processor 471, the controller/processor 475, and the memory 476} in Embodiment 4.

Those skilled in the art can understand that all or part of the steps in the above methods can be completed by instructing the relevant hardware through a program, and the program can be stored in a computer-readable storage medium, such as a read-only memory, a hard disk, or an optical disk. Optionally, all or part of the steps in the above embodiments can also be implemented using one or more integrated circuits. Correspondingly, each module unit in the above embodiment can be implemented in the form of hardware or in the form of a software function module. The present application is not limited to any specific form of combination of software and hardware. The user equipment, the terminal, and the UE in the present application include but are not limited to a drone, a communication module on the drone, a remote-controlled airplane, an aircraft, a small airplane, a mobile phone, a tablet computer, a notebook computer, a vehicle-mounted communication device, a wireless sensor, an Internet card, an Internet of Things terminal, an RFID terminal, an NB-IOT terminal, an MTC (Machine Type Communication) terminal, an eMTC (enhanced MTC) terminal, a data card, an Internet card, a vehicle-mounted communication device, a low-cost mobile phone, a low-cost tablet computer and other wireless communication devices. The base station or system equipment in the present application includes but is not limited to macro cellular base stations, micro cellular base stations, home base stations, relay base stations, gNB (NR node B) NR node B, a TRP (Transmitter Receiver Point), and other wireless communication devices.

The above is only a preferred embodiment of the present application and is not intended to limit the scope of protection of the present application. Any changes and modifications made based on the embodiments described in the description, if similar partial or complete technical effects can be obtained, should be deemed obvious and belong to the scope of protection of the present invention.

## Claims

1. A first node device used for wireless communication, comprising:

   a first receiver receiving a first information block; receiving first signaling; and receiving a first signal,
   wherein the first signaling is used for scheduling the first signal, or the first signaling is used for triggering the first signal; the offset between the reception of the first signaling and the reception of the first signal is less than a first threshold value, and the first signal and a first RS resource are quasi co-located; and the first information block is used for determining at least one index, and the first RS resource depends on the at least one index.

2. The first node device according to claim 1, wherein the first RS resource is an RS resource related to a QCL parameter indicated by being quasi co-located with a PDCCH used for a first CORESET, and determination of the first CORESET depends on the at least one index.

3. The first node device according to claim 2, wherein a first time unit is the latest time unit in which the first node monitors one or more CORESETs associated with the at least one index in an active BWP of a serving cell; and the first CORESET is one CORESET with the smallest index that is in the first time unit, is associated with the at least one index, and is associated to one monitored search space.

4. The first node device according to claim 2, wherein a CORESET to which the first signaling belongs belongs to one of a first CORESERT pool or a second CORESERT pool, and a target CORESET pool is one CORESET pool comprising the CORESET to which the first signaling belongs in the first CORESET pool and the second CORESET pool; and the first CORESET is one CORESET with the smallest index that is in a second time unit, belongs to the target CORESET pool, is associated with the at least one index, and is associated to one monitored search space, and the second time unit is the latest time unit in which the first node monitors one or more CORESETs that belong to the target CORESET pool and are associated with the at least one index in an active BWP of a serving cell.

5. The first node device according to claim 1, wherein each TCI codepoint of a plurality of TCI codepoints is mapped to at least one TCI state, and at least one TCI codepoint of the plurality of TCI codepoints is mapped to two TCI states; and the first RS resource is an RS resource related to a QCL parameter of a TCI state to which a first codepoint is mapped, and determination of the first codepoint depends on the at least one index.

6. The first node device according to claim 5, wherein the first codepoint is the smallest codepoint of all TCI codepoints mapped to two TCI states, with the two TCI states being both associated with the at least one index; and the first RS resource is an RS resource related to a QCL parameter of one TCI state of two TCI states to which the first codepoint is mapped.

7. The first node device according to claim 5, wherein the first codepoint is the smallest codepoint of all TCI codepoints in which there is one TCI state associated with the at least one index in at least one TCI state to which the first codepoint is mapped; and the first RS resource is an RS resource related to a QCL parameter of one TCI state to which the first codepoint is mapped and with which the at least one index is associated.

8. A second node device used for wireless communication, comprising:

   a second transmitter sending a first information block; sending first signaling; and sending a first signal,
   wherein the first signaling is used for scheduling the first signal, or the first signaling is used for triggering the first signal; the offset between the reception of the first signaling and the reception of the first signal is less than a first threshold value, and the first signal and a first RS resource are quasi co-located; and the first information block is used for determining at least one index, and the first RS resource depends on the at least one index.

9. A method used in a first node for wireless communication, comprising:

   receiving a first information block; receiving first signaling; and receiving a first signal,
   wherein the first signaling is used for scheduling the first signal, or the first signaling is used for triggering the first signal; the offset between the reception of the first signaling and the reception of the first signal is less than a first threshold value, and the first signal and a first RS resource are quasi co-located; and the first information block is used for determining at least one index,

**EP 4 665 047 A1**

and the first RS resource depends on the at least one index.

10. A method used in a second node for wireless communication, comprising:

sending a first information block; sending first signaling; and sending a first signal,
wherein the first signaling is used for scheduling the first signal, or the first signaling is used for triggering the first signal; the offset between the reception of the first signaling and the reception of the first signal is less than a first threshold value, and the first signal and a first RS resource are quasi co-located; and the first information block is used for determining at least one index, and the first RS resource depends on the at least one index.

100A

First node

101A

Receive a first information block

102A

Receive first signaling

103A

Receive a first signal

FIG. 1A

100B

First node

101B

Receive a second information block

102B

Receive a first information block

103B

Receive first signaling

104B

Receive a first signal

FIG. 1B

5GS/EPS 200

220

HSS/UDM

NG-RAN
202

214

MME/AMF/
SMF
211

Other
MME/AMF/
SMF

201

UE

203

NR Node B

212

S-GW/UPF

213

P-GW/UPF

230

Internet service

241

UE

204

Other NR
Node B

5GC/EPC
210

FIG. 2

FIG. 3

FIG. 4

N2A. Second node

S5201A. Send a first information block

———— First information block ————

U1A. First node

S5101A. Receive a first information block

S5202A. Send first signaling

———— First signaling ————

S5102A. Receive first signaling

S5203A. Send a first signal

———— First signal ————

S5103A. Receive a first signal

End

End

FIG. 5A

N2B. Second node

S5201B. Send a second information block

———— Second information block ————

U1B. First node

S5101B. Receive a second information block

S5202B. Send a first information block

———— First information block ————

S5102B. Receive a first information block

S5203B. Send first signaling

———— First signaling ————

S5103B. Receive first signaling

S5204B. Send a first signal

———— First signal ————

S5104B. Receive the first signal

S5205B. Send a third information block

———— Third information block ————

S5105B. Receive the third information block

F51B. Optional

End

End

FIG. 5B

The first RS resource $\xrightarrow{\text{Is}}$ An RS resource related to a QCL parameter indicated by being quasi co-located with a PDCCH used for a first CORESET

Determination of the first CORESET $\xrightarrow{\text{Depends on}}$ The at least one index

FIG. 6A

An RS resource related to a QCL parameter of a DMRS port of a PDCCH carrying the first signaling $\xrightarrow{\text{Is associated with}}$ The at least one RS resource determined by the at least one index

FIG. 6B

A first time unit $\xrightarrow{\text{Is}}$ The latest time unit in which the first node monitors one or more CORESETs associated with the at least one index in an active BWP of a serving cell

The first CORESET $\xrightarrow{\text{Is}}$ One CORESET with the smallest index that is in the first time unit, is associated with the at least one index, and is associated to one monitored search space

FIG. 7A

The at least one index $\xrightarrow{\text{Is used for}}$ Determining at least one CORESET from a first CORESET pool

A CORESET where a PDCCH carrying the first signaling is located $\xrightarrow{\text{Is}}$ One of the at least one CORESET

FIG. 7B

A CORESET to which the first signaling belongs $\xrightarrow{\text{Belongs to}}$ One of a first CORESET pool or a second CORESERT pool

A target CORESET pool $\xrightarrow{\text{Is}}$ One CORESET pool including the CORESET to which the first signaling belongs in the first CORESET pool and the second CORESET pool

The first CORESET $\xrightarrow{\text{Is}}$ One CORESET with a smallest index that is in a second time unit, belongs to the target CORESET pool, is associated with the at least one index, and is associated to one monitored search space

The second time unit $\xrightarrow{\text{Is}}$ The latest time unit in which the first node monitors one or more CORESETs that belong to the target CORESET pool and are associated with the at least one index in an active BWP of a serving cell

FIG. 8A

800

First node

801

Receive a third information block

FIG. 8B

Each TCI codepoint of
multiple TCI codepoints

Is mapped to
———————————→

At least one TCI state

At least one TCI codepoint of
the multiple TCI codepoints

Is mapped to
———————————→

Two TCI states

The first RS resource

Is
———————————→

An RS resource related to a QCL parameter of
a TCI state to which a first codepoint is mapped

Determination of the first codepoint

Depends on
———————————→

The at least one index

FIG. 9A

The first RS resource

Is
———————————→

An RS resource related to a QCL parameter of
a TCI state to which a first codepoint is mapped

The first codepoint

Is
———————————→

One of the multiple TCI codepoints

Determination of the first codepoint

Is independent of
———————————→

The first information block

FIG. 9B

The first codepoint

Is
———————————→

The smallest codepoint of all TCI codepoints
mapped to two TCI states, with the two TCI states
being both associated with the at least one index

The first RS resource

Is
———————————→

An RS resource related to a QCL parameter of one
TCI state of two TCI states to which the first
codepoint is mapped

FIG. 10A

54

The first RS resource group  —Includes→  An RS resource related to a QCL parameter of a TCI state of a second CORESET pool

The second CORESET pool  —Includes→  Partial CORESETs of M CORESETs

The first RS resource  —Is→  An RS resource related to a QCL parameter of a TCI state of a reference CORESET

The reference CORESET  —Is→  One CORESET other than the second CORESET pool in the M CORESETs

The CORESET other than the second CORESET pool in the M CORESETs  —Includes→  One or more CORESET(s)

FIG. 10B

The first codepoint  —Is→  The smallest codepoint of all TCI codepoints in which there is one TCI state associated with the at least one index in at least one TCI state to which the smallest codepoint is mapped

The first RS resource  —Is→  An RS resource related to a QCL parameter of one TCI state to which the first codepoint is mapped and with which the at least one index is associated

FIG. 11A

The first-type signaling  —Is used for scheduling→  The first-type signal

Only when the offset between the reception of the first-type signaling and the reception of the first-type signal scheduled by the first-type signaling is equal to or greater than the first threshold value

↓

A TCI state indicated by the first field in the first-type signaling is used for determining a quasi co-location relationship of an antenna port of the first-type signal scheduled by the first-type signaling

FIG. 11B

```
                                              ┌ 1200A
┌─────────────────────────────────────┐
│  ┌─────────────────────┬──────────┐ │
──┼─▶│  First receiver     │  First   │ │
│  │       1201A         │  node    │ │
│  └─────────────────────┴──────────┘ │
└─────────────────────────────────────┘
```

FIG. 12A

Is used for
scheduling
The first-type signaling ⟶ The first-type signal

Only when the offset between the reception of the first-type signaling and the reception of the first signal scheduled by the first-type signaling is equal to or greater than the first threshold value

A TCI state of a CORESET where the first-type signaling is located is used for determining a quasi co-location relationship of an antenna port of the first-type signaling scheduled by the first-type signaling

FIG. 12B

1300A

| Second transmitter 1301A | Second node |

FIG. 13A

1300B

| First receiver 1301B | First node |

FIG. 13B

1400B

| Second transmitter 1401B | Second node |

FIG. 14

## INTERNATIONAL SEARCH REPORT

| International application No. |
|---|
| **PCT/CN2024/075951** |

**A.    CLASSIFICATION OF SUBJECT MATTER**

H04W 72/12(2023.01)i

According to International Patent Classification (IPC) or to both national classification and IPC

**B.    FIELDS SEARCHED**

Minimum documentation searched (classification system followed by classification symbols)

IPC:  H04W

Documentation searched other than minimum documentation to the extent that such documents are included in the fields searched

Electronic data base consulted during the international search (name of data base and, where practicable, search terms used)

CNTXT, ENTXT, DWPI: 基站, 用户设备, 节点, 第一, 第二, 信息块, 信令, 调度, 触发, 间隔, 阈值, 索引, 准共址, 参考信号, 资源, BS, UE, node, first, second, information block, signal, schedule, trigger, interval, threshold, index, QCL, reference signal, resource

**C.    DOCUMENTS CONSIDERED TO BE RELEVANT**

| Category* | Citation of document, with indication, where appropriate, of the relevant passages | Relevant to claim No. |
|---|---|---|
| Y | CN 115665872 A (SHANGHAI LANGBO COMMUNICATION TECHNOLOGY CO., LTD.) 31 January 2023 (2023-01-31) description, paragraphs 0006-0570, and figures 1-18 | 1-10 |
| Y | CN 114554605 A (SHANGHAI LANGBO COMMUNICATION TECHNOLOGY CO., LTD.) 27 May 2022 (2022-05-27) description, paragraphs 0006-0658, and figures 1-23 | 1-10 |
| A | CN 114598437 A (ZTE CORP.) 07 June 2022 (2022-06-07) entire document | 1-10 |
| A | CN 115085891 A (SHANGHAI LANGBO COMMUNICATION TECHNOLOGY CO., LTD.) 20 September 2022 (2022-09-20) entire document | 1-10 |
| A | WO 2021229820 A1 (NTT DOCOMO, INC.) 18 November 2021 (2021-11-18) entire document | 1-10 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 April 2024** | **07 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/075951**

| Patent document cited in search report | | | Publication date (day/month/year) | Patent family member(s) | | | Publication date (day/month/year) |
|---|---|---|---|---|---|---|---|
| CN | 115665872 | A | 31 January 2023 | CN | 113068257 | A | 02 July 2021 |
| | | | | US | 2021211250 | A1 | 08 July 2021 |
| | | | | WO | 2021136081 | A1 | 08 July 2021 |
| | | | | EP | 3928438 | A1 | 29 December 2021 |
| | | | | US | 2022311570 | A1 | 29 September 2022 |
| | | | | IN | 202217040373 | A | 02 December 2022 |
| | | | | CN | 115802502 | A | 14 March 2023 |
| | | | | US | 2023336294 | A1 | 19 October 2023 |
| CN | 114554605 | A | 27 May 2022 | CN | 110138429 | A | 16 August 2019 |
| CN | 114598437 | A | 07 June 2022 | CN | 108199819 | A | 22 June 2018 |
| | | | | CA | 3092288 | A1 | 29 August 2019 |
| | | | | WO | 2019161807 | A1 | 29 August 2019 |
| | | | | KR | 20200125678 | A | 04 November 2020 |
| | | | | EP | 3761549 | A1 | 06 January 2021 |
| | | | | US | 2021084623 | A1 | 18 March 2021 |
| | | | | JP | 2021515473 | A | 17 June 2021 |
| | | | | US | 2023199790 | A1 | 22 June 2023 |
| | | | | EP | 4277176 | A2 | 15 November 2023 |
| | | | | JP | 2024010104 | A | 23 January 2024 |
| CN | 115085891 | A | 20 September 2022 | CN | 113055140 | A | 29 June 2021 |
| | | | | WO | 2021129251 | A1 | 01 July 2021 |
| | | | | CN | 115065453 | A | 16 September 2022 |
| | | | | US | 2022330043 | A1 | 13 October 2022 |
| | | | | EP | 4084384 | A1 | 02 November 2022 |
| | | | | IN | 202217040125 | A | 02 December 2022 |
| WO | 2021229820 | A1 | 18 November 2021 | CN | 115804128 | A | 14 March 2023 |
| | | | | US | 2023209561 | A1 | 29 June 2023 |
| | | | | JP | WO2021229820 | A1 | 31 December 2022 |

Form PCT/ISA/210 (patent family annex) (July 2022)